(19) Europäisches Patentamt
European Patent Office
Office européen des brevets

(11) EP 2 943 743 B1

(12) EUROPÄISCHE PATENTSCHRIFT

(45) Veröffentlichungstag und Bekanntmachung des Hinweises auf die Patenterteilung:
01.04.2020 Patentblatt 2020/14

(21) Anmeldenummer: 13701717.4

(22) Anmeldetag: 09.01.2013

(51) Int Cl.:
G01B 21/04 (2006.01)   G01B 5/24 (2006.01)

(86) Internationale Anmeldenummer:
PCT/EP2013/050329

(87) Internationale Veröffentlichungsnummer:
WO 2014/108188 (17.07.2014 Gazette 2014/29)

(54) **ANORDNUNG ZUR ERMITTLUNG VON DREHFEHLERN EINER DREHVORRICHTUNG**

ARRANGEMENT FOR DETERMINING ROTATION ERRORS OF A ROTATING APPARATUS

ENSEMBLE POUR DÉTERMINER DES ERREURS DE ROTATION D'UN DISPOSITIF ROTATIF

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(43) Veröffentlichungstag der Anmeldung:
18.11.2015 Patentblatt 2015/47

(73) Patentinhaber: Carl Zeiss Industrielle Messtechnik GmbH
73447 Oberkochen (DE)

(72) Erfinder:
• SEITZ, Dominik
73525 Schwäbisch Gmünd (DE)
• HELD, Tobias
86720 Nördlingen (DE)
• SAGEMÜLLER, Rainer
73434 Fachsenfeld (DE)
• WALNY, Claus-Peter
73457 Essingen (DE)

(74) Vertreter: Patentanwälte Bressel und Partner mbB
Potsdamer Platz 10
10785 Berlin (DE)

(56) Entgegenhaltungen:
WO-A1-02/25220        DE-A1- 4 424 871
JP-A- H05 162 051     US-B1- 7 277 811

• PROBST R ET AL: "The new PTB angle comparator", MEASUREMENT SCIENCE AND TECHNOLOGY, IOP, BRISTOL, GB, Bd. 9, Nr. 7, 1. Juli 1998 (1998-07-01), Seiten 1059-1066, XP020064526, ISSN: 0957-0233, DOI: 10.1088/0957-0233/9/7/009
• ABDUL WAHID KHAN ET AL: "A methodology for error characterization and quantification in rotary joints of multi-axis machine tools", THE INTERNATIONAL JOURNAL OF ADVANCED MANUFACTURING TECHNOLOGY, SPRINGER, BERLIN, DE, Bd. 51, Nr. 9 - 12, 2. Mai 2010 (2010-05-02), Seiten 1009-1022, XP019861672, ISSN: 1433-3015, DOI: 10.1007/S00170-010-2677-4
• RALF D GECKELER ET AL: "Calibration of angle encoders using transfer functions", MEASUREMENT SCIENCE AND TECHNOLOGY, IOP, BRISTOL, GB, Bd. 17, Nr. 10, 1. Oktober 2006 (2006-10-01), Seiten 2811-2818, XP020103247, ISSN: 0957-0233, DOI: 10.1088/0957-0233/17/10/036

**Beschreibung**

Die vorliegende Erfindung betrifft einen Prüfkörper zur Ermittlung von Drehfehlern einer Drehvorrichtung, insbesondere für ein Koordinatenmessgerät, eine Anordnung und ein Verfahren zur Ermittlung solcher Drehfehler.

Drehvorrichtungen, wie z.B. Drehschwenk-Gelenke oder Drehtische für Koordinatenmessgeräte verfügen üblicherweise über einen Winkelencoder, über den die aktuelle Winkelposition der Drehachse der Drehvorrichtungen erfasst werden kann. Bei gängigen Inkremental-Messsystemen geschieht dies meist in Bezug auf eine Referenzmarke. Allerdings weisen die üblichen Winkelmesssysteme Fehler auf, die in der Koordinatenmesstechnik zu Messfehlern führen.

Neben den durch das Winkelmesssystem selbst verursachten Fehler treten zusätzlich Fehler durch die Mechanik der Drehvorrichtung auf, insbesondere durch die Lagerung / Führung der um die Drehachse drehbaren Teile der Drehvorrichtung, sowie Fehler die durch in oder auf die Drehachse wirkende Kräfte oder Momente entstehen. Kräfte und Momente können dabei statisch oder dynamisch wirken. In der Regel treten bei der Bewegung von Teilen um eine Drehachse Abweichungen von der idealen Drehbewegung in allen sechs Freiheitsgraden (translatorisch und rotatorisch) auf, zusammenfassend bezeichnet als Drehfehler. Mit dem Begriff "Drehfehler", auch bezeichnet als "Bewegungsfehler", sind somit alle Fehler bzw. Abweichungen, wie translatorische und rotatorische Abweichungen gemeint, die bei einer Drehung von Teilen der Drehvorrichtung um eine Drehachse auftreten. Bei mehrstufigen Drehvorrichtungen mit Drehbeweglichkeit um mehrere Drehachsen, sind die Drehfehler bezüglich einer Drehachse gegebenenfalls zusätzlich abhängig von der aktuellen Drehposition der anderen Drehachse(n).

Auch diese zusätzlichen Fehler wirken sich auf die Messgenauigkeit des Koordinatenmessgerätes aus. Manche dieser Fehler, nämlich zum Beispiel Taumelfehler und Rundlauffehler, führen sogar unmittelbar zu einem zusätzlichen Messfehler des Winkelmesssystems einer Drehvorrichtung.

Daher ist es wünschenswert, Drehvorrichtungen und deren Winkelmesssysteme zu kalibrieren. Insbesondere können Drehfehler erfasst und anschließend rechnerisch korrigiert oder kompensiert werden. Ein spezieller Drehfehler ist der sogenannte Drehpositionsfehler, der die Abweichung der tatsächlichen Drehposition von der nominellen Drehposition beschreibt, die von dem Drehpositionsmesssystem ausgegeben wird. Der Drehpositionsfehler macht sich insbesondere darin bemerkbar, dass von einem Drehwinkelmesssystem einer Drehvorrichtung ein von dem tatsächlichen Drehwinkel abweichender Wert angezeigt wird.

Die Erfassung der oben genannten Drehfehler kann auch als "Qualifizierung" bezeichnet werden. Wichtig für die Qualifizierung von Drehvorrichtungen bezüglich ihrer Drehachsen, ist, dass die Qualifizierung die im späteren Einsatz auftretenden Bedingungen berücksichtigt. So kann z.B. die spätere Orientierung (Einbaulage) der Drehachse entscheidend sein, da bereits durch das Eigengewicht der Drehvorrichtung Verformungen in der Drehachsstruktur auftreten. Weitere Aspekte sind beispielsweise der benutzte Schwenkbereich, die Gewichtskraft eines zu tragenden Messkopfs, die Gewichtskraft eines Werkstücks, oder von Messkopf oder Werkstück verursachte Momente. Weiterhin kommen dynamische Effekte vor, beispielsweise eigendynamische Effekte der Drehachse in Form von Abweichungen, die durch verschiedene Drehgeschwindigkeiten von Teilen der Drehvorrichtung bedingt sein können, oder Effekte aufgrund einer zusätzlichen Bewegung der Drehvorrichtung, z. B. wenn die Drehvorrichtung entlang einer Linearachse bewegt wird. Die genannten Einflüsse erfordern eine Qualifizierung unter Berücksichtigung der Einflüsse oder eine Wiederholung der Qualifizierung, wenn sich Einflüsse geändert haben.

Je nach eingesetztem Verfahren, kann die Qualifizierung von Drehvorrichtungen bezüglich ihrer Drehachsen sehr aufwendig sein. Für viele Verfahren werden teure und wartungsintensive Messgeräte benötigt. Ein weiterer Aspekt ist die reine Messdauer, bzw. die Rüstzeit. Zum einen erfolgt bei jeder Drehvorrichtung eine Ermittlung von Drehfehlern, die für eine spätere Computer Aided Accuracy (CAA)-Fehlerkorrektur in einem Datenfile abgelegt werden, zum anderen erfolgt eine Kontrolle und Abnahme jeder Drehvorrichtung anhand von maximalen Fehler-Vorgaben. Je nach zu messender und zu kontrollierender Anzahl Drehvorrichtungen kann hier ein erheblicher Aufwand entstehen.

DE 44 24 871 A1 offenbart ein Verfahren zur Ermittlung der maschinenbedingten Meßfehler einer Koordinatenmeßmaschine in einem Ringbereich, wobei in der Koordinatenmeßmaschine eine Drehvorrichtung angeordnet wird, welche einen Prüfkörper trägt, der um Winkelintervalle um die Achse A-A der Drehvorrichtung verdrehbar ist, wobei der Prüfkörper wenigstens zwei Bezugspunkte in festem Abstand voneinander aufweist, und zwar einen ersten in derDrehachse anzuordnenden Bezugspunkt und wenigstens einen zweiten im Ringbereich liegenden Bezugspunkt, und wobei mit Hilfe der Bezugspunkte durch winkelmäßige Intervallverdrehung des zweiten Bezugspunktes mit Bezug auf den ersten Bezugspunkt die Radialfehler des zweiten Bezugspunktes mit Bezug auf die Drehachse A-A der Drehvorrichtung ermittelt werden und durch Verdrehen des Prüfkörpers mit Hilfe der Drehvorrichtung um vorgegebene Winkelintervalle die zu den Meßpunkten gehörenden Winkelfehler ermittelt werden.

WO 02/25220 A1 offenbart eine Vorrichtung zur Erfassung der Rotationsbewegung eines um eine Achse drehbaren Elementes, insbesondere eines Rundtisches, mit einer koaxial zu dem Element angeordneten Massverkörperung und zwei an der Massverkörperung vorgesehenen Messteilungen, die die Drehachse der Massverkörperung ringförmig umgeben und die entlang zweier voneinander linear unabhängiger Richtungen abtastbar sind, wobei mindestens eine Messteilung zur Abtastung entlang einer Richtung vorgesehen ist, die eine Komponente entlang der Drehachse aufweist, und jeder Messteilung mindestens drei entlang einer die Drehachse umgebenden Umfangsrichtung voneinander beabstandete Messköpfe zur Abtastung der jeweiligen Messteilung zugeordnet sind.

R. Probst et al., Measurement Science and Technology, IOP, Bristol, GB, Bd. 9, Nr. 7, 1998, 1059 - 1066 offenbaren einen neuen hochpräzisen Winkelmesstisch, der als Komparator zur Kalibrierung von Winkelnormalen verwendet werden soll. Erste Ergebnisse der Bestimmung der Messfehler des Komparators, die durch zwei Kalibrierungsmethoden erhalten wurden, werden angegeben. In Anbetracht der erzielten Ergebnisse ist zu erwarten, dass die gewünschte Messunsicherheit von <0,01 " erreicht werden kann.

A. W. Kahn et al, The international Journal of advanced manufacturing technology, Springer, Berlin, Bd. 51, Nr. 9-12, 2.5.2010, 1009-1022 offenbaren eine neuartige Methodik zur Fehlercharakterisierung, -bewertung und - quantifizierung in einem Drehgelenk mehrachsiger Werkzeugmaschinen unter Verwendung eines kalibrierten Doppelkugelstangensystems (DBB) als Arbeitsstandard. Diese Methodik vereinfachte den Messaufbau erheblich und beschleunigte die Fehlerquantifizierung. Die entwickelte Methodik ist in der Lage, die Fehler mit fünf Freiheitsgraden (DOF) zu bewerten, einschließlich zweier Radialfehler, eines Axialfehlers und zweier Neigungsfehler aus sechs DOF-Fehlerkomponenten von Drehgelenken. Ein DBB-System mit Punktzubehör wurde zur direkten Messung durch Längenänderung an mehreren Punkten und verschiedenen Stellen verwendet, während eine mathematische Modellierungstechnik implementiert wurde und Gleichungslöser für die Fehlerbewertung und ihre Quantifizierung verwendet wurden. Die Methodik erwies sich als geeignet für die Fehlercharakterisierung und ihre Quantifizierung in Drehgelenken von mehrachsigen Werkzeugmaschinen.

US 7,277,811 B1 offenbart unterschiedliche Ausführungsformen von Kalibrierungsvorrichtungen und Verwendungsverfahren. In einer Ausführungsform kann die Kalibrierungsvorrichtung verwendet werden, um ein Werkzeug, ein Positionierungssystem, einen Roboter, eine Maschine oder eine Vorrichtung zu kalibrieren. Die Kalibrierungsvorrichtung kann ein erstes Element enthalten, das an einem Werkzeug, einem Positionierungssystem, einem Roboter, einer Maschine oder einer Vorrichtung angebracht werden kann, und zwei oder mehr Reflektoren, die an dem ersten Element angebracht sind. Die Reflektoren können angepasst sein, um einen oder mehrere Laserstrahlen zu reflektieren, die von einem Lasertrackersystem emittiert werden. Auf diese Weise kann ein Lasertrackersystem verwendet werden, um die räumlichen X-, Y- und Z-Koordinaten der Reflektoren und / oder die Winkelorientierung des ersten Elements zu bestimmen. Unter Verwendung der räumlichen X-, Y- und Z-Koordinaten- und Winkelorientierungsdaten können ein Werkzeug, ein Positionierungssystem, ein Roboter, eine Maschine oder eine Vorrichtung kalibriert werden.

JPH05162051 offenbart zum Kalibrieren von Winkeldaten eines Tisches, die in einem Speicher einer Vorrichtung zum automatischen Zuführen von Werkstücken durch einen Drehtisch gespeichert sind: Ein optischer Verschiebungssensor ist an einem Handarm eines Robotermechanismus vorgesehen, der in einem automatischen Transfermechanismus vorgesehen ist, und eine Referenzreflexionsplatte zum Anzeigen der Referenz des Drehwinkels ist in der Richtung des Radius oder eines Tisches vorgesehen.

Eine Aufgabe der Erfindung ist die Bereitstellung eines Prüfkörpers, womit Drehfehler einer Drehvorrichtung mit hoher Präzision und mit möglichst geringem Zeitaufwand ermittelbar sind. Weitere Aufgaben sind die Bereitstellung einer Anordnung und ein Verfahren zur Ermittlung von Drehfehlern mit Hilfe des Prüfkörpers.

Unter den nachfolgenden Überschriften I., II. und III. werden verschiedene Gegenstände offenbart, die in beliebiger Kombination untereinander kombiniert werden können. Die beanspruchten Gegenstände und Verfahren sind unter I. offenbart.

I. Prüfkörper, Anordnung mit dem Prüfkörper und Verfahren unter Verwendung des Prüfkörpers

Die oben genannte Aufgabe wird erfindungsgemäß durch eine Anordnung und ein Verfahren nach den unabhängigen Ansprüchen gelöst. Spezielle vorteilhafte Ausgestaltungen sind Gegenstand von Unteransprüchen.

Angegeben wird eine Anordnung zur Ermittlung eines oder mehrerer Drehfehler einer Drehvorrichtung, insbesondere einer Drehvorrichtung für ein Koordinatenmessgerät, bezüglich eines oder mehrerer Bewegungs-Freiheitsgrade, in dem/denen sich eine reale Drehbewegung der Drehvorrichtung von einer idealen Drehbewegung unterscheidet, mit einem Prüfkörper, wobei der Prüfkörper aufweist:

- einen Halter, der zusammen mit einem Teil der Drehvorrichtung um eine Drehachse drehbar ist und der ausgestaltet ist, den Prüfkörper bezüglich der Drehachse anzuordnen oder zu befestigen, um die der Prüfkörper zur Ermittlung des Drehfehlers oder der Drehfehler zu drehen ist,
- eine Mehrzahl von starr mit dem Halter verbundenen oder an dem Halter ausgeformten Prüfelementen, wobei jedes der Prüfelemente der Ermittlung des Drehfehlers bezüglich eines oder mehrerer der Bewegungs-Freiheitsgrade dient,

wobei ein erstes der Prüfelemente ein quer zu der Drehachse ausgerichteter Reflektor ist, der auf ihn auftreffende Strahlung in einer vom Drehwinkel des Prüfkörpers abhängigen Richtung reflektiert,

wobei ein zweites der Prüfelemente ein rotationssymmetrischer Messkörper ist, dessen Symmetrieachse koaxial zu der Drehachse anordenbar ist,

wobei

die Anordnung eine Mehrzahl von Sensoren aufweist, die jeweils einem oder mehreren der Prüfelemente des Prüfkörpers zugeordnet sind und ausgestaltet sind, Abweichungen bezüglich zumindest eines der Bewegungs-Freiheitsgrade zu messen,

wobei dem Reflektor ein Winkelsensor und/oder ein Abstandssensor zugeordnet ist, wobei mit dem Winkelsensor eine Drehung des Prüfkörpers um eine Drehachse der Drehvorrichtung und/oder eine Drehung des Prüfkörpers um eine oder mehrere quer zur Drehachse stehende Achsen und/oder eine gleichbleibende Position des Prüfkörpers erfassbar sind, und mit dem Abstandssensor ein Translationsfehler durch Messung des Abstands zwischen dem Reflektor und dem Abstandssensor ermittelbar ist,

wobei dem rotationssymmetrischen Messkörper Abstandssensoren zugeordnet sind, mit denen translatorische Abweichungen in Richtungen quer zur Drehachse bestimmbar sind.

Der Begriff "Drehfehler" umfasst alle translatorischen und rotatorischen Abweichungen, die bei dem Betrieb der Drehvorrichtung auftreten, insbesondere drei translatorische Fehler bezüglich der kartesischen Koordinatenachsen X, Y und Z, bezeichnet als Tx, Ty und Tz, und rotatorische Fehler bezüglich der kartesischen Koordinatenachsen X, Y, bezeichnet als Rx, Ry, sofern die Drehachse der Drehvorrichtung in Z-Richtung ausgerichtet ist (weiter dazu unten). Wenn die Bewegung um die Drehachse eine ideale Drehbewegung wäre, ergeben sich keine Drehfehler. Dies gilt im Rahmen der Messgenauigkeit der Sensoren, die in Kombination mit den Prüfelementen verwendet werden, und im Rahmen der Präzision, mit der der Prüfkörper gefertigt ist (zum Beispiel Präzision der Rotationssymmetrie eines Messkörpers und Präzision eines Spiegels als Prüfelement). Der Prüfkörper kann in Kombination mit zugeordneten Sensoren insbesondere vorab kalibriert werden, um Messfehler der Sensoren und Abweichungen von der idealen Gestaltung des Prüfkörpers zu korrigieren oder zu eliminieren.

Ein spezieller Drehfehler ist der oben bereits erwähnte und definierte Drehpositionsfehler. Sofern die Drehachse in Z-Richtung eines kartesischen Koordinatensystems ausgerichtet ist, wird der Drehpositionsfehler in dieser Erfindung auch als Rz bezeichnet. Selbstverständlich sind andere Ausrichtungen der Drehachse in eine andere Richtung des kartesischen Koordinatensystems möglich, beispielsweise eine horizontale Ausrichtung. Bei einer Ausrichtung der Drehachse in Y-Richtung eines vorgegebenen Koordinatensystems würde der Drehpositionsfehler mit Ry, bei einer Ausrichtung in X-Richtung mit Rx bezeichnet. Im gewählten Beispiel ist Rz insofern von Ry und Rx zu unterscheiden, dass die Drehung des drehbaren Teils der Drehvorrichtung um die in diesem Fall in Z-Richtung ausgerichtete Drehachse bei der Drehvorrichtung gewünscht ist, während eine Drehung des drehbaren Teils um eine andere Raumachse, X oder Y, unerwünscht ist und eine Abweichung von der idealen Drehbewegung darstellt.

Beispiele für Drehvorrichtungen sind Drehgelenke, Drehschwenk-Gelenke, die mehrere Drehachsen aufweisen, und Drehtische. Die Erfindung bezieht sich insbesondere auf Drehvorrichtungen, die in Koordinatenmessgeräten (nachfolgend abgekürzt als KMG), Werkzeugmaschinen, Robotern und anderen Anwendungen, bei denen es auf hohe Genauigkeit ankommt, einsetzbar sind. Die Drehvorrichtung wird auch als Prüfling bezeichnet.

Eine Drehung des Prüfkörpers erfolgt dadurch, dass er an oder auf der Drehvorrichtung angeordnet wird und mitgedreht wird, wenn die Drehvorrichtung gedreht wird. Die Drehvorrichtung weist vorzugsweise ein erstes und ein zweites Teil auf, die relativ zueinander drehbar sind. Der Prüfkörper ist vorzugsweise auf oder an einem der drehbaren Teile der Vorrichtung so befestigt, dass er nicht relativ zu diesem Teil verdrehbar ist. Ist also beispielsweise der Prüfkörper an einem zweiten Teil der Drehvorrichtung angeordnet und wird das zweite Teil relativ zu dem ersten Teil gedreht, so wird auch der Prüfkörper um den gleichen Drehwinkel wie das zweite Teil relativ zu dem ersten Teil gedreht. Beispielsweise kann der Prüfkörper auf dem Teller eines zu qualifizierenden Drehtisches positioniert werden, oder an einem drehbaren Teil eines Dreh-Schwenk-Gelenks.

Dass der Halter und damit der Prüfkörper um eine Drehachse drehbar sind, bedeutet nicht eine Drehbeweglichkeit des Halters oder Prüfkörpers für sich allein betrachtet. Vielmehr ist der Prüfkörper für eine Drehung um eine Drehachse ausgelegt, wenn er in vorgegebener Weise, vorzugsweise in reproduzierbarer Weise, an einer Drehvorrichtung oder an einer noch unten beschriebenen Referenzdrehvorrichtung angeordnet ist. Der Begriff "Drehachse" bezeichnet dann die Drehachse der Drehvorrichtung oder die Drehachse der Referenzdrehvorrichtung. Die Drehachse kann, bei Gebrauch des Prüfkörpers, den Prüfkörper, oder den Halter oder ein Prüfelement, streifen oder durchstoßen, oder die Drehachse kann, bei Gebrauch des Prüfkörpers, außerhalb des Prüfkörpers liegen.

Der Reflektor als erstes Prüfelement ist in beschriebener Weise zur Drehachse ausgerichtet wenn der Prüfkörper an einer Drehvorrichtung oder Referenzdrehvorrichtung angeordnet ist. Oder ein Reflektor als Prüfelement ist in beschriebener Weise zur Drehachse ausrichtbar wenn der Prüfkörper an einer Drehvorrichtung oder Referenzdrehvorrichtung angeordnet werden soll.

Auf die Verwendung einer Drehvorrichtung und einer Referenzdrehvorrichtung in einem speziellen Verfahren wird später noch eingegangen. Der Prüfkörper ist so ausgestaltet, dass er an einem Teil einer Drehvorrichtung oder einer Referenzdrehvorrichtung angebracht werden kann, und zwar drehfest zu diesem Teil. Das Teil der Drehvorrichtung/Referenzdrehvorrichtung kann relativ zu einem weiteren Teil der Drehvorrichtung/Referenzdrehvorrichtung (zusammen mit dem Prüfkörper) um die Drehachse drehbar sein. Beispielsweise ist das Teil, woran der Prüfkörper angebracht werden kann, ein Drehteller eines Drehtisches oder ein drehbarer Teil eines Dreh- oder Dreh-Schwenk-Gelenks.

Der Halter des Prüfkörpers, kann eine Rotationssymmetrieachse aufweisen, die axial fluchtend oder im Wesentlichen axial fluchtend zur Drehachse der Drehvorrichtung oder der Referenzdrehvorrichtung angeordnet sein kann.

Mit Hilfe des ersten Prüfelements erfolgt vorzugsweise die Erfassung des Drehwinkels des Prüfkörpers bzw. der Drehvorrichtung. Mit dieser Drehwinkelinformation kann der Drehpositionsfehler der Drehvorrichtung bestimmt werden. Das erste Prüfelement kann seitlich der Drehachse angebracht und direkt mit dem Halter verbunden sein. In einer anderen Variante ist das erste Prüfelement über einen Träger oder ein anderweitiges weiteres Befestigungselement indirekt mit dem Halter verbunden. Mit dem ersten Prüfelement können stattdessen oder zusätzlich auch andere Drehfehler bestimmt werden, wie beispielsweise translatorische Fehler oder weitere rotatorische Fehler, wie im Beispielteil erläutert.

Das zweite Prüfelement dient vorzugsweise zur Erfassung weiterer translatorischer oder rotatorischer Abweichungen, die zusätzlich zu dem Drehpositionsfehler auftreten können. Es kann aber mit dem zweiten Prüfelement auch ein Drehpositionsfehler bestimmt werden, wie in den Ausführungsbeispielen angegeben.

Ein Reflektor als Prüfelement kann vorteilhaft in einem nachfolgend und in den Beispielen noch beschriebenen Verfahren zur Erfassung von Drehpositionsfehlern eingesetzt werden, wobei bei dem Verfahren eine Drehvorrichtung mit einer Referenzdrehvorrichtung gekoppelt ist und der Prüfkörper an der Drehvorrichtung oder der Referenzdrehvorrichtung angebracht ist, und wobei bei dem Verfahren eine Drehung von Teilen der Drehvorrichtung und von Teilen der Referenzdrehvorrichtung dergestalt vorgenommen wird, dass nach den Drehungen die Position des Prüfkörpers unverändert, wenig verändert oder im Wesentlichen unverändert ist, insbesondere unverändert, wenig verändert oder im Wesentlichen unverändert zu einem externen Referenzpunkt oder Beobachtungspunkt. Bei einem solchen Verfahren kann die eine unveränderte oder minimal veränderte Position des Reflektors beispielsweise mit einem Sensor, insbesondere einem Winkelsensor, im Speziellen einem Autokollimator erfasst werden.

Ein Reflektor ist nach der Begrifflichkeit dieser Erfindung von einem Messkörper zu unterscheiden. Zweck des Reflektors ist die Bestimmung einer Drehung durch eine Richtungsänderung reflektierter Strahlung, insbesondere Licht, nach Drehpositionsänderung des Reflektors, und/oder die Bestimmung einer Translation mittels reflektierter Strahlung, zum Beispiel mit einem strahlungsbasierten Abstandssensor.

Ein Messkörper ist so ausgestaltet, dass seine Drehung und/oder Translation durch strahlungslose Messung bestimmt werden kann, insbesondere eine Koordinatenmessung und/oder eine strahlungslose Abstandsmessung.
Es ist trotz Unterscheidung der Begriffe Reflektor und Messkörper aber denkbar, dass ein Reflektor im obigen Sinne eines Messkörpers verwendet werden kann, ohne seine Reflektionseigenschaften für Strahlung zu nutzen. Beispielsweise kann die Oberfläche eines Planspiegels vor und nach einer Drehung an mindestens drei Punkten mit dem Taster eines Koordinatenmessgeräts angetastet werden, wodurch man die Position der Oberflächenebene vor und nach der Drehung erhält, und daraus kann die Drehung bzw. der Drehwinkel ermittelt werden.

Der Begriff Reflektor umfasst auch beliebig dünne Reflektionsschichten, die zur Stabilisierung auf einen Trägerkörper bzw. eine Oberfläche eines Trägerkörpers aufgebracht sein können. Ein Reflektor kann zum Beispiel ein Spiegel, insbesondere ein Planspiegel oder im Wesentlichen planer Spiegel, ein ebener oder im Wesentlichen ebener Spiegel oder ein nicht gekrümmter oder im Wesentlichen nicht gekrümmter Spiegel sein.

In einer weiteren Variante kann der Reflektor eine Kombination sein aus

a) einem ersten, teildurchlässigen Spiegel, vorzugsweise einem Planspiegel oder im Wesentlichen planen Spiegel und

b) einem zweiten, voll reflektierenden Spiegel, vorzugsweise einem Planspiegel oder im Wesentlichen planen Spiegel

wobei der teildurchlässige Spiegel a) und der voll reflektierende Spiegel b) so zueinander angeordnet sind, dass einfallende Strahlung zuerst auf den ersten, teildurchlässigen Spiegel trifft, diesen ersten Spiegel teilweise durchdringt und teilweise von ihm reflektiert wird, und der den ersten Spiegel durchdringende Strahlungsteil anschließend auf den voll reflektierenden Spiegel b) trifft und
wobei der Spiegel a) und der Spiegel b) in einem Winkel zueinander angeordnet sind, vorzugsweise in einem Winkel kleiner 90°.

In einer anderen Variante kann der Reflektor ein Retroreflektor sein. In einer speziellen Variante kann der Reflektor ein Prisma sein. Eine Lichteintrittsfläche des Prismas kann teilverspiegelt sein, so dass ein Teil des auftreffenden Lichts an dieser Fläche wie an einem Planspiegel reflektiert wird und der übrige Teil des Lichts nach Reflexion an den Schrägflächen des Prismas winkelerhaltend zurückgeworfen wird. Bevorzugte Varianten sind beschrieben in DE102011012611 (A1). Darin sind zum Beispiel ein Tripelprisma und ein 90-Grad-Prisma beschrieben, womit es in Verbindung mit einem Autokollimator möglich ist, nicht nur den Neigungswinkel senkrecht zur optischen Achse, sondern gleichzeitig auch den Rollwinkel um die optische Achse zu messen.

Der Reflektor kann auch eine Kombination aus einem Spiegel, insbesondere einem Planspiegel, einem Retroreflektor und/oder einem Prisma sein.

Bei einem Reflektor kann bei einer Drehung des Prüfkörpers, bei welcher der Reflektor mit gedreht wird, der Drehwinkel insbesondere mit einem Autokollimator oder mit einem Abstandssensor bestimmt werden, wie in den Ausführungsbeispielen beschrieben. Bevorzugte Messverfahren zur Bestimmung des Drehpositionsfehlers sind berührungslose Messverfahren, insbesondere Autokollimation. Dadurch entstehen keine Fehler durch Antastkräfte und die Prüfkörper werden mechanisch geschont.

Die nachfolgende Beschreibung bezieht sich auf einen Spiegel, kann aber analog für einen Retroreflektor gelten. Ein Spiegel muss nicht exakt plan sein und kann auf einer planen Fläche nicht planare Elemente, die gewünscht sind, aufweisen, beispielsweise ein Prisma wie oben erwähnt. Ansonsten können eventuell vorhandene Formfehler des Spiegels in einem separaten Schritt kalibriert werden und bei der Verwendung des Prüfkörpers der Fehler berücksichtigt werden.

Der Begriff "quer zur Drehachse ausgerichtet" bedeutet, dass der Reflektor nicht in Richtung der Drehachse oder parallel zur Drehachse sondern in eine sonstige, von der Drehachse abgewandte Richtung weist, im speziellen Fall in eine Richtung orthogonal oder im Wesentlichen orthogonal zur Drehachse. Der Strahl eines Autokollimators kann auf eine Reflektionsfläche des Reflektors gerichtet werden und eine Winkeländerung erfassen wenn der Spiegel bei Drehung des Prüfkörpers mit gedreht wird. Zusätzlich ist es auch möglich, die Drehung des Spiegels um eine weitere, z. B. zur Drehachse des Prüfkörpers orthogonal stehende Drehachse zu erfassen und die rotatorische Abweichung bezüglich dieser weiteren Drehachse zu erfassen. Vorzugsweise ist dazu der Reflektor orthogonal oder im Wesentlichen orthogonal ausgerichtet.

In einer speziellen Variante eines Prüfkörpers ist das erste Prüfelement der erwähnte quer zu der Drehachse ausgerichtete Reflektor, der auf ihn auftreffende Strahlung in einer vom Drehwinkel des Prüfkörpers abhängigen Richtung reflektiert, und als weiteres Prüfelement ist ein quer zu der Drehachse ausgerichteter Reflektor vorgesehen, der auf ihn auftreffende Strahlung in einer vom Drehwinkel des Prüfkörpers abhängigen Richtung reflektiert, und die Reflektoren sind unter einem Winkel zueinander angeordnet, z. B. orthogonal angeordnet.

Wenn das erste und ein weiteres Prüfelement Reflektoren sind, dann können beide Reflektoren zusammen an einem gemeinsamen Trägerkörper angebracht sein, beispielsweise in Form von reflektierenden Beschichtungen. Ein Beispiel für einen Trägerkörper ist ein regelmäßiger oder unregelmäßiger Polyeder, beispielsweise ein Prisma, ein Tetraeder, ein Hexaeder, ein Oktaeder, ein Dodekaeder, ein Ikosaeder.

Speziell bevorzugte Beispiele für Trägerkörper sind Trägerkörper, die einen Querschnitt in Form eines Vielecks oder Polygons aufweisen, vorzugsweise eines regelmäßigen Vielecks oder Polygons. Bevorzugt ist ein Querschnitt in Form eines N-Ecks, wobei N eine ganze Zahl größer oder gleich 3 ist, vorzugsweise eines regelmäßigen N-Ecks. Beispiele sind drei-, vier-, fünf-, sechs-, sieben- oder achteckige Querschnitte.

Noch speziellere Beispiele eines Trägerkörpers sind Prismen, wobei unter einem Prisma ein geometrischer Körper verstanden wird, der ein Vieleck oder Polygon als Grundfläche hat, vorzugsweise ein regelmäßiges Vieleck oder Polygon, und dessen Seitenkanten parallel und gleich lang sind, wobei die Seitenkanten quer, insbesondere orthogonal, zur Grundfläche verlaufen. Bevorzugt ist ein Prisma mit N-eckiger Grundfläche, wobei N eine ganze Zahl größer oder gleich 3 ist, vorzugsweise mit regelmäßiger N-eckiger Grundfläche. Beispiele sind eine drei-, vier-, fünf-, sechs-, sieben- oder achteckige Grundfläche, wobei eine regelmäßige drei-, vier-, fünf-, sechs-, sieben- oder achteckige Grundfläche am meisten bevorzugt ist.

Reflektoren oder Reflektorschichten können auf eine oder mehrere Außenflächen eines Trägerkörpers aufgebracht sein. Der Trägerkörper kann ein Hohlkörper mit Außenflächen sein. Zwei oder mehr der Außenflächen können mit einem Reflektor oder mit einer Reflektionsschicht versehen sein, wobei z.B. eine erste Reflektionsschicht auf einer ersten Fläche das erste Prüfelement ist und eine zweite Reflektionsschicht auf einer zweiten Fläche ein weiteres Prüfelement ist. Bei einem Polyeder, insbesondere einem Prisma, kann als eine der Außenflächen eine in Richtung der Drehachse weisende Stirnfläche mit einem Reflektor oder mit einer Reflektionsschicht versehen sein.

In einer Ausführungsform weist der Trägerkörper eine Reflektoranordnung auf, die mehrere Reflektoren oder Reflektorschichten aufweist, wobei die Reflektoren oder Reflektorschichten quer zueinander stehen und in verschiedene Raumrichtungen weisen.

Wenn der Reflektor oder die Reflektorschicht ein Planspiegel oder im Wesentlichen planer Spiegel ist, oder eine plane oder im Wesentlichen plane Schicht, dann ist der Begriff "Raumrichtung" und "in eine Raumrichtung weisen" ist auf den Normalenvektor auf der Spiegeloberfläche bezogen, d.h. die Normalenvektoren weisen in verschiedene, beispielsweise umgekehrte Raumrichtungen, anders ausgedrückt: entgegengesetzte Raumrichtungen.

Beispielsweise können bei einem Trägerkörper mit einer Reflektoranordnung zwei Reflektoren oder Reflektorschichten vorhanden sein, die in einem Winkel von >180° bis 360° zueinander stehen. Der Winkel zwischen zwei Reflektoren oder Reflektorschichten wird von der reflektierenden Oberfläche eines Reflektors oder einer Reflektorschicht zu der reflektierenden Oberfläche eines anderen Reflektors oder einer anderen Reflektorschicht gemessen. Bei einem Winkel von 360° weisen Reflektoren/Reflektorschichten in umgekehrte Raumrichtungen.

Beispielsweise können bei einem Trägerkörper mit einer Reflektoranordnung mehr als zwei Reflektoren oder Reflektorschichten vorhanden sein, die quer zueinander stehen und in verschiedene Raumrichtungen weisen, wobei benachbarte Reflektoren oder Reflektorschichten vorzugsweise in einem Winkel von >180° bis <360° zueinander stehen, wobei der Winkel wie oben definiert ist. In einer speziellen bevorzugten Variante können benachbarte Reflektoren oder Reflektorschichten in einem Winkel von

$$\alpha = 360° - [(N-2)/N]*180°$$

zueinander stehen, wobei N eine ganze Zahl größer oder gleich 3 ist.

Durch einen solchen Trägerkörper und eine solche Reflektoranordnung werden auf einfache Weise sogenannte Umschlagsmessungen erlaubt, ohne dass der Prüfkörper von einem drehbaren Teil einer Drehvorrichtung, an das er drehfest gekoppelt ist, gelöst werden muss, um den Prüfkörper gegen dieses Teil zu verdrehen. Messungen nach diesem Prinzip sind an anderem Ort in dieser Beschreibung und in den Beispielen beschreiben. Beispielsweise kann der Trägerkörper Außenflächen aufweisen, die in dem oben genannten Winkel α zueinander stehen, wobei auf den Außenflächen Reflektoren, insbesondere Planspiegel, oder Reflektorschichten aufgebracht sind. Spezielle Beispiele eines solchen Trägerkörpers sind Prismen, wie oben definiert und angegeben.

Der Begriff "quer zur Drehachse ausgerichtet" bei einem Reflektor bedeutet in einer weiteren möglichen Alternative, dass der Reflektor in Drehrichtung oder entgegengesetzt zur Drehrichtung ausgerichtet ist. Im Fall eines Spiegels kann dessen Reflektionsfläche derart ausgerichtet sein. Der Begriff "in Drehrichtung oder entgegengesetzt zur Drehrichtung ausgerichtet" bedeutet, dass der Reflektor in Drehrichtung oder entgegengesetzt zur Drehrichtung weist. Im Fall eines Spiegels weist die Reflektionsfläche in Drehrichtung oder entgegengesetzt zur Drehrichtung. Speziell kann im Fall eines Spiegels eine Reflektionsfläche so ausgerichtet sein, dass ein auf einem Punkt auf der Reflektionsfläche stehender Normalenvektor tangential zu einem durch die Drehbewegung des Punktes um die Drehachse beschriebenen Kreis ist. Bei dieser Ausführungsform wird zur Erfassung des Drehwinkels z.B. ein Abstandssensor, insbesondere ein Laser, verwendet, der bei einer Drehung des Spiegels eine Abstandsänderung misst, woraus aus trigonometrischen Beziehungen der Drehwinkel berechnet werden kann, wie in einem Ausführungsbeispiel angegeben. Alternativ kann jedoch beispielsweise ein Autokollimator verwendet werden, um den Drehwinkel oder eine Drehpositionsänderung zu messen.

Es ist auch möglich, einen Reflektor, als erstes Prüfelement, anzutasten, um eine Positionsänderung festzustellen. Im Fall eines Planspiegels kann beispielsweise die Oberfläche an drei Punkten angetastet werden und nach einer Änderung der Drehstellung kann erneut an drei Punkten angstastet werden, um so den Drehwinkel der Spiegelebene zu bestimmen.

Das zweite Prüfelement, ist ein rotationssymmetrischer Messkörper, dessen Symmetrieachse koaxial zur Drehachse angeordnet werden kann, d.h. dessen RotationsSymmetrieachse koaxial zur Drehachse ausgerichtet werden kann. Beispiele solcher rotationssymmetrischer Elemente sind eine Kugel, eine Scheibe, ein Ring, wie z.B. ein Torus, ein Zylinder, ein Kegel oder eine Kombination davon. Mehrere entlang der Achse hintereinander angeordnete Kugeln können als rotationssymmetrisches Prüfelement vorgesehen sein, beispielsweise eine Doppelkugel. Im Fall einer Kugel oder Doppelkugel ist nicht die gesamte Kugeloberfläche für die Messung zugänglich, da das Prüfelement zumindest an einer Stelle mit dem Halter verbunden ist.

In einer bevorzugten Variante ist das rotationssymmetrische Prüfelement ein Zylinder. Weiterhin bevorzugt sind mehrere Kugeln, insbesondere eine Doppelkugel. Eine Doppelkugel, oder eine Anordnung aus noch mehr Kugeln, wird in diesem Zusammenhang als ein rotationssymmetrisches Prüfelement betrachtet, das wie ein Zylinder an verschiedenen Stellen entlang der Symmetrieachse mit einem Sensor vermessen werden kann. Mit einem Zylinder oder einer Doppelkugel können rotatorische Abweichungen um Achsen bestimmt werden, die orthogonal zur Drehachse der Drehvorrichtung und des daran angebrachten Prüfkörpers sind. Ferner können translatorische Abweichungen in Richtungen quer zur Drehachse bestimmt werden. Weiterhin kann eine translatorische Abweichung in Richtung der Drehachse bestimmt werden, wenn eine Abstandsmessung auf den oberen Pol einer Kugel, oder auf den oberen Pol der oberen Kugel einer Doppelkugel, oder auf die Stirnfläche eines Zylinders erfolgt. Es ist auch möglich, eine rotatorische Abweichung durch Messung auf mehrere Punkte auf der Stirnfläche des Zylinders zu bestimmen, wobei zur Anordnung von entsprechenden Sensoren der Zylinder einen ausreichenden Durchmesser aufweisen sollte, aber durchaus eine geringe Höhe aufweisen kann, also scheibenförmig sein kann.

In einer Ausführungsform weist der Prüfkörper einen mit dem Halter verbundenen oder an den Halter angeformten Sockel auf. Der Sockel ist ausgestaltet, den Prüfkörper an einer Drehvorrichtung anzubringen, insbesondere an einem drehbaren Teil einer Drehvorrichtung. Insbesondere weist der Sockel einen größeren Querschnitt, quer zur Drehachse, auf als der Halter. Der Sockel weist vorzugsweise ein Metall, eine Metalllegierung, eine Keramik oder einen Kunststoff als Hauptwerkstoffkomponente auf. Der Sockel dient dem Einbau in ein KMG oder dem Anbringen des Prüfköpers an einer Drehvorrichtung, wie z.B. einem Dreh-Schwenk-Gelenk oder einem Drehtisch, oder einer Referenzdrehvorrichtung, die anhand eines Verfahrens, in dem der Prüfkörper eingesetzt werden kann noch beschrieben ist. Der Sockel ist so ausgestaltet, dass er an einem Teil einer Drehvorrichtung oder einer Referenzdrehvorrichtung angebracht werden kann, vorzugsweise drehfest, also nicht relativ drehbar, zu diesem Teil. Das Teil der Drehvorrichtung/Referenzdrehvorrichtung kann relativ zu einem weiteren Teil der Drehvorrichtung/Referenzdrehvorrichtung drehbar sein. Beispielsweise ist das Teil, woran der Sockel angebracht werden kann, ein Drehteller eines Drehtisches oder ein drehbarer Teil eines Dreh- oder Dreh-Schwenk-Gelenks.

In einer Ausführungsform weist der Prüfkörper Mittel zur Befestigung oder Lagerung in einem Koordinatenmessgerät oder zur Befestigung oder Lagerung an einer Drehvorrichtung für ein Koordinatenmessgerät, wie einem Dreh-Schwenk-Gelenk oder einem Drehtisch, auf. Die Befestigung oder Lagerung an einer Drehvorrichtung bedeutet insbesondere, dass in Einbaulage der Drehvorrichtung und des Prüfkörpers der Prüfkörper auf oder unterhalb der Drehvorrichtung befestigt oder gelagert ist.

Die Mittel zur Lagerung oder Befestigung sind vorzugsweise an dem Halter oder an einem Sockel, die oben beschrieben wurden, angeordnet. Mittel zur Befestigung oder Lagerung sind vorzugsweise ein oder mehrere formschlüssige Verbindungsmittel oder ein oder mehrere kraftschlüssige Verbindungsmittel.

Der Prüfkörper kann mit einer oder mehreren Dreipunktlagerungen ausgestattet sein, die eine reproduzierbare Montage in einer oder mehreren Orientierungen ermöglichen. Damit kann der Prüfkörper beispielsweise zur Qualifizierung der verschiedenen Drehachsen eines Drehschwenkgelenks verwendet werden.

Bei einer Dreipunktlagerung wird vorzugsweise eine zusätzliche Zugkraft zwischen dem Prüfkörper und einem Teil, auf oder an dem der Prüfkörper gelagert ist, erzeugt, was auch als "Vorspannen" bezeichnet wird. Durch eine solche Zugkraft wird ein Herausspringen des Prüfkörpers aus der Lagerung verhindert. Ein Herausspringen aus der Lagerung kann beispielsweise je nach Ausrichtung des Prüfkörpers durch sein Gewicht erfolgen, oder durch eine Bewegung des Prüfkörpers.

Durch das Vorspannen wird die Reproduzierbarkeit der Orientierung des Prüfkörpers erhöht. Eine Vorspannung kann z.B. magnetisch erfolgen, vorzugsweise an einem zentralen Punkt inmitten mehrerer Lagerstellen, oder durch das Eigengewicht des Prüfkörpers. Es kann eine Zusatzmasse am Prüfkörper angebracht werden, um die Masse des Prüfkörpers zu erhöhen. Für eine magnetische Vorspannung kann der Prüfkörper einen Magneten aufweisen, der beispielsweise in den Prüfkörper eingebaut oder eingelassen sein kann. Ein solcher Magnet kann eine Anziehungskraft auf einen ferromagentischen Untergrund, beispielsweise auf einen ferromagnetischen Prüfling ausüben. Die Vorspannung kann auch sinnvoll sein, wenn während der Qualifizierung der Drehachse große Beschleunigungen auftreten, z.B. als Folge von Ausrückbewegungen, bei rastenden Drehschwenkgelenken. Weitere Mittel zur Vorspannung sind Schrauben, Haken, ein Bajonett oder eine Feder.

Weitere beispielhafte Mittel zur Befestigung oder Lagerung sind Anschläge, Stifte, Schraubverbindungsmittel, Steckverbindungsmittel, Rastverbindungsmittel, oder rutschhemmende Materialien.

Eine Dreipunktlagerung hat den Vorteil einer hohen Präzision. Ist eine solche Präzision nicht unbedingt erforderlich, dann kann die Befestigung des Prüfkörpers an der Drehvorrichtung mit ein Anschlägen, (Pass)Stiften, Verschraubungen, oder anderen bekannten Fixiermitteln erfolgen.

In einer Ausführungsform weist der Prüfkörper einen Reflektor auf, der in Richtung der Drehachse ausgerichtet ist. In Richtung der Drehachse bedeutet insbesondere, dass ein parallel zur oder entlang der Drehachse einfallender Messstrahl orthogonal oder im Wesentlichen orthogonal auf den Reflektor auftrifft. Ein Abstandssensor kann in Richtung der Drehachse oder parallel dazu (axial) auf den Reflektor ausgerichtet sein und eine translatorische Abweichung in Richtung der Drehachse (beispielsweise in Z-Richtung) erfassen. Verschiedene Abstandssensoren sind verwendbar, wie z.B. optische Abstandssensoren oder kapazitive Abstandssensoren, wobei aufgrund der spiegelnden Eigenschaften eines Reflektors ein optischer Sensor bevorzugt ist.

Weiter oben wurden bereits als erstes und weiteres Prüfelement Reflektoren beschrieben, die quer zur Drehachse ausgerichtet sind. Diese Reflektoren können mit einem Reflektor, der in Richtung der Drehachse orientiert ist, kombiniert werden. Es können auch noch weitere quer zur Drehachse ausgerichtete Reflektoren vorhanden sein. Mehrere Reflektoren können zusammen eine Anordnung von Reflektoren bilden, auch bezeichnet als Reflektor-Array, z.B. in Form eines Polyeders, dessen Seiten aus den Spiegeln gebildet werden.

In einer bevorzugten Variante weist der Prüfkörper eine Reflektoranordnung auf, welche mehrere Reflektoren oder Reflektorschichten aufweist, wobei die Reflektoren oder Reflektorschichten quer zueinander stehen und in verschiedene Raumrichtungen weisen. Bei einer solchen Reflektoranordnung muß kein Trägerkörper vorhanden sein, wie zuvor beschrieben.

Wenn der Reflektor oder die Reflektorschicht ein Planspiegel oder im Wesentlichen planer Spiegel ist, oder eine plane oder im Wesentlichen plane Schicht, dann ist der Begriff "Raumrichtung" und "in eine Raumrichtung weisen" ist auf den Normalenvektor auf der Spiegeloberfläche bezogen, d.h. die Normalenvektoren weisen in verschiedene, beispielsweise umgekehrte Raumrichtungen.

Beispielsweise können bei der Reflektoranordnung zwei Reflektoren oder Reflektorschichten vorhanden sein, die in einem Winkel von >180° bis 360° zueinander stehen. Der Winkel wird von der reflektierenden Oberfläche eines Reflektors oder einer Reflektorschicht zu der reflektierenden Oberfläche eines anderen Reflektors oder einer anderen Reflektorschicht gemessen. Bei einem Winkel von 360° weisen Reflektoren/Reflektorschichten in umgekehrte Raumrichtungen.

Beispielsweise können bei der Reflektoranordnung mehr als zwei Reflektoren oder Reflektorschichten vorhanden sein, die quer zueinander stehen und in verschiedene Raumrichtungen weisen, wobei benachbarte Reflektoren oder Reflektorschichten vorzugsweise in einem Winkel von >180° bis <360° zueinander stehen. In einer speziellen bevorzugten Variante können benachbarte Reflektoren oder Reflektorschichten in einem Winkel von

$$\alpha = 360° - [(N-2)/N]*180°$$

zueinander stehen, wobei N eine ganze Zahl größer oder gleich 3 ist.

Durch eine solche Reflektoranordnung werden auf einfache Weise sogenannte Umschlagsmessungen erlaubt, ohne dass der Prüfkörper von einem drehbaren Teil einer Drehvorrichtung, an das er drehfest gekoppelt ist, gelöst werden muss, um den Prüfkörper gegen dieses Teil zu verdrehen. Messungen nach diesem Prinzip sind an anderem Ort in dieser Beschreibung und in den Beispielen beschreiben.

In einer bevorzugten Variante weist der Prüfkörper mehrere Messkörper auf, die in einem Abstand zu Drehachse und/oder nicht koaxial mit der Drehachse angeordnet sind, wobei eine gedachte Line von einem Messkörper zu der Drehachse und eine gedachte Linie eines benachbarten Messkörpers zu der Drehachse im Winkel 360°/M zueinander stehen, wobei M eine ganze Zahl größer oder gleich 2 ist, insbesondere 2-8. Insbesondere weist jeder der Messkörper einen Referenzpunkt auf und eine gedachte Line von dem Referenzpunkt eines Messkörpers zu der Drehachse und eine gedachte Linie von dem Referenzpunkt eines benachbarten Messkörpers zu der Drehachse stehen im Winkel von 360°/M zueinander. Anders ausgedrückt bilden die Referenzpunkte vorzugsweise die Ecken eines regelmäßigen N-Ecks. Die Referenzpunkte können z.B. Kugelmittelpunkte sein, wenn die Messkörper Kugeln sind. Auch durch eine solche Anordnung werden auf einfache Weise sogenannte Umschlagsmessungen erlaubt, die an anderem Ort beschrieben sind. Von den mehreren Messkörpern, die in einem Abstand zu Drehachse und/oder nicht koaxial mit der Drehachse angeordnet sind, kann einer der oben bereits genannte erste Messkörper sein.

Wenn das erste und ein weiteres Prüfelement Reflektoren sind, die quer zur Drehachse ausgerichtet sind, und wenn weiterhin noch ein Reflektor vorhanden ist, der in Richtung der Drehachse ausgerichtet ist, oder wenn eine oben genannte Reflektoranordnung gebildet ist, die auch noch weitere Reflektoren enthalten kann, dann können alle Reflektoren an einem gemeinsamen Trägerkörper angebracht sein, beispielsweise in Form von reflektierenden Beschichtungen. Spezielle Beispiele für Trägerkörper sind Prismen, wobei unter einem Prisma ein geometrischer Körper verstanden wird, der ein Vieleck als Grundfläche hat und dessen Seitenkanten parallel und gleich lang sind, oder Polyeder. Der Trägerkörper kann ein Hohlkörper mit Außenflächen sein. Spezielle Beispiele für Trägerkörper sind ein Prisma mit drei-, vier-, fünf-, sechs-, sieben- oder achteckiger Grundfläche, ein Tetraeder, ein Hexaeder, ein Oktaeder, ein Dodekaeder, ein Ikosaeder. Drei oder mehr der (Außen)Flächen des Trägerkörpers können mit einer Reflektionsschicht versehen sein.

Prinzipiell kann ein Prüfkörper neben den erwähnten ersten und zweiten Prüfelementen ein oder mehrere weitere, z.B. ein drittes, ein viertes etc. Prüfelement aufweisen. Weitere Prüfelemente können aus solchen Elementen ausgewählt sein, die bereits als erstes oder zweites Prüfelement beschrieben wurden, wie Reflektoren und Prüfkörper.

Wenn ein weiteres der Prüfelemente ein quer zu der Drehachse ausgerichteter oder ausrichtbarer, zweiter Reflektor ist, der bei Vorhandensein eines anderen, ersten Reflektors, der ein Prüfelement des Prüfkörpers ist, in einer anderen Richtung als der andere Reflektor ausgerichtet ist, dann bedeutet die andere Richtung insbesondere dass beide Reflektoren in entgegengesetzte Richtung oder im Wesentlichen entgegengesetzte weisen oder orthogonal oder im Wesentlichen orthogonal zueinander stehen. Orthogonal zueinander bedeutet, dass die Reflektoren in Richtungen weisen, die in einem Winkel von 90° zueinander stehen. Der Winkel von der Reflektionsfläche des ersten Reflektors zu der Reflektionsfläche des anderen Reflektors beträgt dann 360°-90° = 270°, der Winkel zwischen den Normalen der Reflektionsflächen beträgt 90°.

In einer Variante des Prüfkörpers ist ein erstes der Prüfelemente ein orthogonal zu der Drehachse ausgerichteter Reflektor und ein weiteres der Prüfelemente ist ebenfalls ein orthogonal zu der Drehachse ausgerichteter Reflektor, der in einer anderen Richtung als der erste Reflektor ausgerichtet ist, vorzugsweise orthogonal zum ersten Reflektor oder in entgegengesetzter Richtung zum ersten Reflektor, und das zweite Prüfelement ist das rotationssymmetrische Prüfelement, dessen Symmetrieachse koaxial mit der Drehachse angeordnet ist, wobei das zweite Prüfelement vorzugsweise an anderer axialer Position bezüglich der Drehachse als die Reflektoren angeordnet ist. Die Reflektoren sind vorzugsweise beide an derselben axialen Position angeordnet. Dies gilt auch für weitere Ausführungsformen mit zwei Reflektoren.

In einer weiteren Variante des Prüfkörpers ist das erste Prüfelement ein orthogonal zur Drehachse ausgerichteter Reflektor und ein weiteres der Prüfelemente ist ebenfalls ein orthogonal zu der Drehachse ausgerichteter Reflektor, der in einer anderen Richtung als der erste Reflektor ausgerichtet ist, vorzugsweise orthogonal zum ersten Reflektor oder in entgegengesetzter Richtung zum ersten Reflektor, und ein noch ein weiteres Prüfelement ist ein in Richtung der Drehachse ausgerichteter Reflektor.

In einer Ausführungsform weist der Prüfkörper als erstes und weiteres Prüfelement einen Reflektor auf. Beide Reflektoren sind vorzugsweise orthogonal zueinander ausgerichtet, d.h. die Reflektionsflächen der Reflektoren stehen zueinander in einem rechten Winkel. Beispielsweise weist der erste Reflektor in X-Richtung eines kartesischen Koordinatensystems und der zweite Reflektor in Y-Richtung eines kartesischen Koordinatensystems. Bei dieser Ausführungsform kann jeweils ein Strahl eines Autokollimators auf jeden der beiden Reflektoren gerichtet werden. Zum einen kann der Drehwinkel um die Drehachse an beiden Reflektoren separat erfasst werden. Weiterhin kann bei jedem der Reflektor eine rotatorische Abweichung um jeweils eine weitere Achse erfasst werden, die zur Drehachse orthogonal steht, wie in den Ausführungsbeispielen erläutert. Es ist möglich, zwei Autokollimatoren einzusetzen und jeweils den Strahl eines Autokollimators auf einen der Reflektoren zu richten. Andererseits ist es auch möglich, nur einen Autokollimator zu verwenden und den Strahl durch eine Umlenkvorrichtung, vorzugsweise einer Anordnung aus Umlenkspiegeln, auf beide Reflektoren zu lenken. Zusätzlich zu einem oder mehreren Autokollimatoren können Abstandssensoren auf die Reflektoren gerichtet werden, beispielsweise Laserabstandsmesser, um translatorische Abweichungen zu erfassen.

Wenn der Prüfkörper als erstes, als weiteres und als noch ein weiteres Prüfelement einen Reflektor aufweist, dann sind alle drei Reflektoren vorzugsweise orthogonal zueinander ausgerichtet, d.h. die Reflektionsflächen aller Reflektoren stehen zueinander in einem rechten Winkel. Beispielsweise weist der erste Reflektor in X-Richtung eines kartesischen Koordinatensystems, der weitere Reflektor in Y-Richtung eines kartesischen Koordinatensystems und der dritte Reflektor in Z-Richtung eines kartesischen Koordinatensystems.

Am Prüfkörper können Hebel und Zusatzmassen angebracht sein. Damit lassen sich im späteren Messbetrieb auftretende Kräfte und Momente simulieren. Die Drehachse kann dann genau so qualifiziert werden, wie sie in der Praxis, im Messbetrieb auch verwendet wird. Für eine spätere Korrektur kann dabei auch durch unbelastetes und belastetes Vermessen die Nachgiebigkeit ermittelt werden. Die Nachgiebigkeit kann dabei wie EP0684447 (B1) und DE19518268 (A1) beschriebene eine Verkippung durch Moment, Verkippung durch Kraft, Verschiebung durch Moment und/oder Verschiebung durch Kraft beinhalten.

Vorzugsweise ist der Prüfkörper in seine Einsatzposition an dem Prüfling bewegbar und/oder aus der Einsatzposition entfernbar. Hierzu kann die Anordnung eine entsprechende Bewegungseinrichtung und/oder eine entsprechende Bewegungsführung aufweisen. In einer Ausführungsform weist der Prüfkörper eine Komponente einer Linearführung auf, beispielsweise eine Stahlwalze. In dieser Ausführungsform ist zwischen dem Prüfkörper und Prüfling eine Linearführung angeordnet, beispielsweise eine in einem V-Profil gelagerte Stahlwalze. Damit ist es möglich, den Prüfkörper aus dem bzw. in den Messbereich von Sensoren zu bewegen. In alternativen Ausführungsformen weist der Prüfkörper ein Gelenk oder versetzte Dreipunktlagerungen auf, womit der Prüfkörper aus dem bzw. in den Messbereich geschwenkt oder versetzt werden kann. Ist der Prüfkörper verschoben, verschwenkt oder versetzt lassen sich z.B. Arbeiten an Sensoren durchführen, wie Justierungen. Unter versetzten Dreipunktlagerungen wird verstanden, dass der Prüfkörper in zumindest zwei verschiedene Positionen und/oder Ausrichtungen gebracht werden kann, in denen jeweils eine zugeordnete Dreipunktlagerung hergestellt wird.

In einer Ausführungsform weist der Prüfkörper eine oder mehrere Stellvorrichtungen zur Einstellung der relativen Lage zwischen Prüfkörper und Prüfling auf, um beispielsweise die Koaxialität zwischen Prüfling und einem Drehtisch einzustellen. Beispiele für Stellvorrichtungen sind Schraubtriebe.

Richtelemente zur Ausrichtung des Prüfkörpers können zwischen dem Prüfkörper und dem Prüfling angeordnet werden. Beispiele für Richtelemente sind ein Tisch, wie z.B. ein X-Y-Tisch und oder ein Kipptisch, oder ein Gelenk, beispielsweise ein monolithisches Gelenk, oder ein Festkörpergelenk, beispielsweise ein Biegegelenk.

In einer weiteren Ausführungsform ist der Prüfkörper zweiteilig gestaltet. Mehrere der oben beschriebenen Prüfelemente, wie Spiegel, (Doppel)Kugeln, Zylinder können an verschiedenen Teilen angebracht sein oder als einzelne Teile vorliegen, die modular zu dem Prüfkörper zusammengesetzt werden können. So sind aus verschiedenen Modulen Prüfkörper mit verschiedenen Komponenten und Funktionalitäten herstellbar. Insbesondere ist der Halter des Prüfkörpers mehrteilig. Beispielsweise ist an einem unteren Teil des Halters das erste Prüfelement befestigt und an einem oberen Teil das zweite Prüfelement. Zwischen den beiden Teilen kann sich eine Dreipunktlagerung befinden.

In noch einer Variante der Erfindung weist der Prüfkörper eine Fläche auf, die von der Montageposition an einer Drehvorrichtung aus gegen einen Taster, Sensor oder Messkopf eines KMG beweglich ist. Bei der Bewegung wird die Drehvorrichtung zusammen mit dem Prüfkörper bewegt, und dabei die Fläche gegen den Taster, Sensor oder Messkopf bewegt. Dieses Verfahren wird, bezogen auf die Bewegung gegen einen Taster, als "Antasten mit dem Prüfkörper" bezeichnet. Durch vielfaches Wiederholen dieser Antastbewegung, kann die Reproduzierbarkeit der Bewegung der Drehvorrichtung, beispielsweise entlang einer Linearführung, getestet werden. Alternativ kann auch der Prüfkörper einen Taster enthalten.

Mit den Abweichungen der realen Drehbewegung von der idealen oder gewünschten Drehbewegung bezüglich Bewegungs-Freiheitsgraden, also translatorischen und rotatorischen Freiheitsgraden, können Drehfehler ermittelt werden.

Der Sensor ist ausgestaltet, beim Betrieb der Anordnung ein Messsignal entsprechend einer Position des Prüfelements zu erzeugen.

Bei dem Sensor kann es sich z.B. um einen magnetoresistiven Sensor, einen Hallsensor, der gemäß dem elektro-magnetischen Halleffekt funktioniert, einen optischen Sensor, einen Sensor, der gemäß dem piezo-resistiven Effekt funktioniert, einen kapazitiven Sensor, einen zur Abstands- und/oder Relativpositionsmessung ausgestalteten Wirbelstromsensor oder um einen Sensor handeln, der gemäß zumindest einer der genannten Funktionsweisen und/oder zumindest einer nicht genannten Funktionsweise arbeitet. Insbesondere magnetoresistive Sensoren und Hallsensoren können auch zu mehreren auf einem gemeinsamen Träger angeordnet sein, z. B. einem Mikroträger, ähnlich einem Mikrochip. Jeder der Sensoren auf dem gemeinsamen Träger erfasst dann insbesondere einen anderen Freiheitsgrad der Bewegung. Zum Beispiel mit zwei solchen Trägern, die jeweils drei Sensoren zur Erfassung von drei linear voneinander unabhängigen Freiheitsgraden tragen und die an verschiedenen axialen Positionen angeordnet sind, können sämtliche Freiheitsgrade der Bewegung erfasst werden. Durch die mehreren Sensoren an einem Träger kann auch die Richtung eines am Ort des Trägers herrschenden Magnetfeldes gemessen werden. Optische Sensoren erfassen z.B. eine von mehreren Markierungen, die an dem Prüfelement ausgebildet ist, wenn sich die Markierung aus Sicht des Sensors vorbeibewegt. Bei einer anderen Art optischer Sensoren wird z.B. eine Laser-Triangulation durchgeführt und/oder wie bei einem Interferometer ein Vergleich mit einem Vergleichslichtstrahl durchgeführt, der nicht von dem Prüfelement beeinflusst wird. Bei einer weiteren Art optischer Sensoren werden auf das Prüfelement projizierte Muster erfasst.

Das Prüfelement wird insbesondere entsprechend dem Messprinzip des Sensors ausgestaltet. Z.B. kann das Prüfelement ein permanentmagnetisches Material aufweisen, um gemäß dem Halleffekt oder dem magnetoresistiven Messprinzip messen zu können. Alternativ oder zusätzlich kann das Prüfelement (z.B. ein Zylinder oder ein kugelförmiges Prüfelement) eine elektrische leitende Oberfläche für einen kapazitiven oder induktiven Sensor und/oder eine spiegelnde Oberfläche zur Reflektion von Messstrahlung für einen optischen Sensor aufweisen. Eine spiegelnde oder teilweise reflektierende Oberfläche kann z. B. an einem zylinderförmigen, kegelförmigen oder torusförmigen Prüfelement ausgebildet sein. In jedem Fall erzeugt der Sensor ein Messsignal, das eine Information über die Position des Prüfelements enthält. Wenn das Prüfelement einen Reflektor aufweist, der einfallende Messstrahlung abhängig von der Ausrichtung es Reflektors reflektiert, kann die Drehposition bestimmt werden.

Es kann eine Kalibrierung der durch das Prüfelement und den Sensor gebildeten Sensoranordnung erforderlich sein, um beim Betrieb der Anordnung die Position des Prüfelements ermitteln zu können. Bevorzugt wird daher, die Anordnung zur Messung von Koordinaten eines Werkstücks bezüglich der Bestimmung der Position des Prüfelements zu kalibrieren, d.h. Messsignale des Sensors entsprechenden Werten der Position oder relativen Position zuzuordnen. Dabei werden z.B. Vergleichsmessungen durchgeführt und/oder hinsichtlich ihrer Abmessungen und Form sowie Position relativ zu der Anordnung exakt bekannte Kalibriernormale verwendet.

Mehrere Sensoren können zumindest ein Prüfelement gemeinsam zur Signalerzeugung nutzen. Es ist jedoch auch möglich, dass jedem von mehreren Sensoren ein separates Prüfelement zugeordnet ist. Ferner ist es möglich, dass ein Sensorbauteil mehr als einen Sensor aufweist.

Eine Drehvorrichtung weist eine Drehbeweglichkeit von einem ersten Teil und einem zweiten Teil um zumindest eine Drehachse auf, wobei der erste Teil und der zweite Teil aufgrund der Drehbeweglichkeit der Drehvorrichtung relativ zueinander drehbeweglich sind und wobei der erste oder der zweite Teil ausgestaltet ist, entweder das Werkstück oder eine Koordinatenmesseinrichtung, z. B. den Taster oder Tastkopf, zu halten, um eine Drehung des Werkstücks oder der Koordinatenmesseinrichtung zu ermöglichen. Die Erfindung betrifft daher auch Drehvorrichtungen, die Drehbeweglichkeiten um zwei Drehachsen (z. B. so genanntes Dreh-/Schwenkgelenk mit zwei zueinander quer verlaufenden Drehachsen) oder um mehr als zwei Drehachsen aufweisen.

Bei einer Ausführungsform ist der erste oder der zweite Teil der Drehvorrichtung ausgestaltet, ein Werkstück zu halten. Bei der vorliegenden Anordnung wird statt eines Werkstückes zur Qualifizierung der Achse ein erfindungsgemäßer Prüfkörper an dem erste oder der zweiten Teil angeordnet und/oder befestigt. Der andere Teil ist insbesondere ausgestaltet, an einer Basis eines Koordinatenmessgeräts (KMG) befestigt zu werden und/oder auf einer Basis positioniert zu werden, so dass dieser Teil relativ zu der Basis unbeweglich ist und der Prüfkörper mit dem anderen Teil relativ zu der Basis gedreht werden kann. Z.B. kann es sich bei dem ersten und zweiten Teil um Teile eines Drehtischs handeln, auf oder an dem der Prüfkörper angeordnet oder befestigt wird, um in verschiedene Drehstellungen gebracht werden zu können und in den verschiedenen Drehstellungen eine Ermittlung von Drehfehlern durchzuführen.

Gemäß einer weiteren Ausführungsform der Anordnung ist der erste oder der zweite Teil der Drehvorrichtung ausgestaltet, eine Koordinatenmesseinrichtung zu halten. In diesem Fall ermöglichen der erste und zweite Teil durch eine Relativbewegung eine Drehung der Koordinatenmesseinrichtung. Bekannt sind z.B. so genannte Dreh-/Schwenkgelenke, die eine Drehbeweglichkeit bezüglich zweier quer und insbesondere orthogonal zueinander verlaufender Drehachsen ermöglichen. Es sind jedoch auch Drehvorrichtungen bekannt, die lediglich eine Drehbeweglichkeit bezüglich einer einzigen Drehachse ermöglichen oder Drehungen um mehr als zwei Drehachsen ermöglichen.

In einer Variante wird eine Anordnung zur Verfügung gestellt, wobei

- der das erste und ein weiteres Prüfelement des Prüfkörpers Reflektoren sind,
- den Reflektoren ein oder mehrere, vorzugsweise optische, Winkelsensoren zugeordnet sind,

wobei der/die optischen Winkelsensoren ausgestaltet ist/sind, eine Drehung des Prüfkörpers um eine Drehachse der Drehvorrichtung und/oder eine Drehung des Prüfkörpers um eine oder mehrere quer zur Drehachse stehende Achsen und/oder eine gleichbleibende Position des Prüfkörpers zu erfassen. Der Winkelsensor erfasst eine

Drehung des Reflektors, der sich mit dem Prüfkörper mit dreht, weil er mit dem Prüfkörper starr verbunden ist. Daher kann durch Messung der Drehung des Reflektors auch die Drehung des Prüfkörpers ermittelt werden.

Beispiele für Sensoren, oder von Vorrichtungen, die zum Zwecke dieser Erfindung als Winkelsensoren verwendet werden können, sind optische Winkelsensoren, wie Autokollimatoren, Laserabstandsmesser, Laserinterferometer, kapazitive Sensoren, einschließlich kapazitive Abstandssensoren zum Zweck einer Winkelmessung, magnetoresistive Sensoren, wie magnetoresistive Winkelsensoren oder magnetoresistive Abstandssensoren, die zum Zweck der Winkelmessung eingesetzt werden.

In einer weiteren Variante sind einem oder mehreren Reflektoren eines Prüfkörpers ein oder mehrere Abstandssensoren zugeordnet. Abstandssensoren können beispielsweise kapazitive Sensoren, Wirbelstromsensoren, Magnetfeldsensoren, optische Abstandssensoren, wie Laser, Interferometer, oder mechanische Induktivtaster sein, wobei bei einem Reflektor optische Abstandssensoren bevorzugt sind.

Beispielsweise können einem Reflektor ein Autokollimator und/oder ein optischer Sensor, insbesondere ein Laserinterferometer, Laserabstandsmesser zugeordnet sein.

Einem rotationssymmetrischen Prüfelement sind in der erfindungsgemäßen Anordnung Abstandssensoren zugeordnet. Mehrere Sensoren, oder ein Teil der mehreren Sensoren sind vorzugsweise so eingerichtet oder angeordnet, dass damit Abstände in verschiedenen Raumrichtungen und/oder Winkel um verschiedene Drehachsen gemessen werden können, sodass Abweichungen bezüglich mehrerer translatorischer und rotatorischer Bewegungs-Freiheitsgrade gemessen werden können. Welche Abweichungen mit welchem Prüfkörper, insbesondere bei Verwendung von Reflektoren, und mit welcher Anordnung von Sensoren ermittelt werden können, ist insbesondere in Ausführungsbeispielen der Figurenbeschreibung erläutert. Ein auf einen Reflektor gerichteter optischer Winkelsensor, insbesondere ein Autokollimator, kann beispielsweise eine Drehung des Reflektors um Achsen erfassen, die quer zur räumlichen Verbindungsachse zwischen Sensor und Reflektor stehen. Fällt beispielsweise ein Messstrahl eines AKF in X Richtung auf den Spiegel, dann kann eine Drehung des Spielgels um die Y- und die Z-Achse erfasst werden und der Drehwinkel bestimmt werden. Fällt beispielsweise ein Messstrahl eines AKF in Y Richtung auf den Spiegel, dann kann eine Drehung des Spielgels um die X- und die Z-Achse erfasst werden und der Drehwinkel bestimmt werden.

Das Messsystem eines Koordinatenmessgeräts, beispielsweise ein optisches Messsystem oder taktil tastendes Messsystem, kann Teil der Anordnung sein, wenn die Drehvorrichtung und der Prüfkörper in einem Koordinatenmessgerät aufgebaut werden, also die Anordnung in einem Koordinatenmessgerät hergestellt wird. In diesem Sinn wird das Messsystem des Koordinatenmessgeräts, insbesondere ein optischer Sensor oder ein taktiles Messkopfsystem, als zugeordneter Sensor im Sinne dieser Anordnung betrachtet. Ein optischer Sensor oder ein taktiles Messkopfsystem ist natürlich dem Messkörper nur zum Zweck der Ermittlung von Drehfehlern zugeordnet und solange die Anordnung in dem Koordinatenmessgerät hergestellt ist.

In einer bevorzugten Anordnung ist der Prüfkörper über den Halter an der Drehvorrichtung angeordnet oder befestigt, beispielsweise über eine zuvor beschriebene Lagerung, insbesondere eine Dreipunktlagerung. Zur Anordnung oder Befestigung kann ein Halteelement eingesetzt werden, der zwischen dem Prüfkörper und der Drehvorrichtung angeordnet ist und das nachfolgend und in den Ausführungsbeispielen noch beschrieben wird.

In noch einem Aspekt betrifft die Erfindung ein Verfahren zur Ermittlung von Drehfehlern einer Drehvorrichtung für ein Koordinatenmessgerät bezüglich einer Mehrzahl von Bewegungs-Freiheitsgraden, in denen sich eine reale Drehbewegung der Drehvorrichtung von einer idealen Drehbewegung unterscheidet, aufweisend die folgenden Schritte:

- Drehen eines Prüfkörpers aus einer vorangehend beschriebenen Anordnung, der einen oder mehrere Reflektoren aufweist und der an der Drehvorrichtung angeordnet oder befestigt ist, um eine Drehachse,
- Ermitteln von Drehfehlern mit einer Mehrzahl von Sensoren, die jeweils einem der Prüfelemente des Prüfkörpers zugeordnet sind und ausgestaltet sind, Abweichungen bezüglich zumindest eines der Bewegungs-Freiheitsgrade zu messen,

wobei dem oder den Reflektoren des Prüfkörpers ein oder mehrere Winkelsensoren und/oder ein oder mehrere Abstandssensoren zugeordnet sind, und das Verfahren einen oder mehreren der Schritte aufweist:

- Erfassen einer Drehung des Prüfkörpers um eine Drehachse der Drehvorrichtung mit dem/den Winkelsensoren
- Erfassen einer Drehung des Prüfkörpers um eine oder mehrere quer zur Drehachse stehende Achsen mit dem/den Winkelsensoren,
- Ermitteln eines oder mehrerer Translationsfehler durch Messung des Abstands zwischen dem Reflektor/ den Reflektoren und dem/den zugeordneten Abstandssensor/sensoren,

wobei dem rotationssymmetrischen Messkörper des Prüfkörpers Abstandssensoren zugeordnet sind, und das Verfahren einen oder mehrere der Schritte aufweist:

- Bestimmen translatorischer Abweichungen in Richtungen quer zur Drehachse,
- Bestimmen rotatorischer Abweichungen um Achsen, die orthogonal zur Drehachse sind.

Das Verfahren kann mit einer zuvor beschriebenen Anordnung durchgeführt werden. Wie zuvor beschrieben weist der Prüfkörper einen Halter auf, der um eine Drehachse drehbar ist und der ausgestaltet ist, den Prüfkörper bezüglich einer Drehachse zu befestigen, um die der Prüfkörper zur Ermittlung der Drehfehler zu drehen ist. In dem Verfahren ist die Drehachse die Drehachse der Drehvorrichtung bzw. die Drehachse, um welche Teile der Drehvorrichtung gegeneinander drehbar sind.

Die mit dem Verfahren gewonnenen Informationen können bei der Verwendung der Drehvorrichtung, insbesondere im späteren Messbetrieb, berücksichtigt werden. Eine Möglichkeit der Berücksichtigung ist die rechnerische Korrektur der Bewegung, insbesondere mittels eines mathematischen Modells.

In dem Verfahren wird in einer bevorzugten Ausführungsform ein Prüfkörper eingesetzt, der eine axiale Ausdehnung in Richtung der Drehachse der Drehvorrichtung aufweist. Insbesondere wird ein Prüfkörper eingesetzt, aufweisend als ein Prüfelement eine Doppelkugel, oder einen Zylinder. Jedem Prüfelement sind wie bei der erfindungsgemäßen Anordnung beschrieben ein oder mehrere Sensoren zugeordnet, vorzugsweise mindestens zwei Sensoren, die die Relativposition des Sensors und des Prüfelemente in verschiedene, vorzugsweise zueinander orthogonal stehende Raumrichtungen messen, wobei die Richtungen z. B. orthogonal zur Drehachse ausgerichtet sein können.

Die Messung an verschiedenen axialen Positionen erlaubt es zum Beispiel, Taumelfehler aufgrund einer Abweichung der Ausrichtung von drehbaren und/oder rotationssymmetrischen Teilen der Drehvorrichtung zu messen. Ein Taumelfehler ist ein rotatorischer Bewegungsfehler und kann beschrieben werden als eine Rotation um eine oder mehrere Raumachsen, die orthogonal zur Drehachse einer Drehvorrichtung stehen. Wenn die Drehachse eines Rotors einer Drehvorrichtung beispielsweise in Z Richtung steht, kann ein Taumelfehler durch eine zusätzliche, ungewollte Rotation des Rotors um die X- und/oder Y-Achse beschrieben werden, wobei diese Rotation um die X- und/oder Y-Achse während der Drehung des Rotors um die Z-Achse auftritt und der Rotor während der Umdrehung mehrfach und in verschiedene Drehrichtungen um die X-Achse und/oder Y-Achse rotieren kann. Bei zusätzlichen Abweichungen von der idealen Drehbewegung können der Taumelbewegung weitere Bewegungen überlagert sein. Selbstverständlich können außer einem Taumelfehler weitere Fehler auftreten, so dass die Symmetrieachse in der Praxis auch andere Bewegungen ausführen kann. Z.B. kann zu dem Taumelfehler ein Rundlauffehler hinzukommen, so dass der Taumelbewegung eine elliptische oder nicht zur Drehachse konzentrische kreisförmige Bewegung überlagert ist. Ein Rundlauffehler kann auch das Ergebnis einer Taumelbewegung sein.

Vorzugsweise ist zusätzlich zumindest ein Sensor-/ Prüfelement-Paar (dabei kann z. B. derselbe Messkörper mit einem anderen Sensor zusammenwirken) vorgesehen, das ausgestaltet ist, Veränderungen der axialen Position zwischen Prüfelement und Sensor zu messen. Wenn zwei solche zusätzlichen Sensor-/ Prüfelement an verschiedenen axialen Positionen angeordnet sind, können folglich die entsprechenden zwei Freiheitsgrade der Bewegung erfasst werden und z. B. aus den insgesamt vorliegenden Informationen der Taumelfehler oder andere Fehler bestimmt werden. Dabei muss nicht für jedes der Paare ein separater Messkörper vorhanden sein. Vielmehr kann derselbe Messkörper z. B. von zwei Sensoren, mehreren Sensoren oder allen Sensoren genutzt werden.

In einer Ausführungsform des Verfahrens weist der Prüfkörper als erstes und als ein weiteres Prüfelement einen Reflektor auf und dem oder den Reflektoren sind ein oder mehrere Winkelsensoren, am meisten bevorzugt optische Winkelsensoren, zugeordnet, aufweisend einen oder mehreren der Schritte:

- Erfassung einer Drehung des Prüfkörpers um eine Drehachse der Drehvorrichtung mit dem/den Sensoren und/oder
- Erfassung einer Drehung des Prüfkörpers um eine oder mehrere quer zur Drehachse stehende Achsen mit dem/den Sensoren.

Zu dieser Verfahrens-Ausführungsform wird auf die Anordnung verwiesen, bei der der das erste und das weitere Prüfelement des Prüfkörpers ein Reflektor ist und dem oder den Reflektoren ein oder mehrere optische Winkelsensoren zugeordnet sind, und auf die dortigen Erläuterungen. Wie bereits angegeben, kann ein auf einen Reflektor gerichteter optischer Winkelsensor, insbesondere ein Autokollimator, beispielsweise eine Drehung des Reflektors um Achsen erfassen, die quer zur räumlichen Verbindungsachse zwischen Sensor und Reflektor stehen. Fällt beispielsweise ein Messstrahl eines AKF in X Richtung auf den Spiegel, dann kann eine Drehung des Spiegels um die Y- und die Z-Achse erfasst werden und der Drehwinkel bestimmt werden. Es ist möglich, mit einem Autokollimator und einem Retroreflektor in Form eines Prismas eine Drehung des um die Y- und die Z-Achse zu messen und zusätzlich eine Drehung um die X-Achse (Rollwinkel), also die Drehung um die optische Achse zu messen. Hierzu kann ein Messsystem verwendet werden wie in DE102011012611 (A1) beschrieben.

Fällt beispielsweise ein Messstrahl eines AKF in Y-Richtung auf den Spiegel, dann kann eine Drehung des Spiegels um die X- und die Z-Achse erfasst werden und der Drehwinkel bestimmt werden. In analoger Weise ist es mit einem speziellen Messsystem aus einem AKF und einem Retroreflektor in Form eines Prismas, wie in DE102011012611 (A1) beschrieben, möglich, auch die Drehung um die Y-Achse (Rollwinkel) zu messen.

In einer Variante der vorangehend beschriebenen Ausführungsform sind dem oder den Reflektoren ein oder mehrere, vorzugsweise optische, Abstandssensoren zugeordnet, und das Verfahren weist auf: Die Ermittlung eines oder mehrerer Translationsfehler durch Messung des Abstands zwischen dem Reflektor/ den Reflektoren und dem zugeordneten Sensor/Sensoren.

Weist ein Reflektor beispielsweise in X-Richtung, kann beispielsweise mit einem optischen Abstandssensor, dessen Messstrahl in X-Richtung auf den Reflektor gerichtet ist, eine Translation des Prüfkörpers in X Richtung gemessen werden. Das entsprechende Prinzip gilt für andere Raumrichtungen in einem kartesischen Koordinatensystem.

In einem weiteren Aspekt offenbart, nicht beansprucht, die Erfindung ein spezielles Verfahren zur Ermittlung des Drehpositionsfehlers einer Drehvorrichtung. In diesem Verfahren kann der vorangehend beschriebene Prüfkörper eingesetzt werden. Mit dem Verfahren kann ein Drehpositionsmesssystem der Drehvorrichtung kalibriert werden.

Außerdem kann der ermittelte Drehpositionsfehler durch ein Rechenmodell der Drehvorrichtung in ein Korrekturmodell umgerechnet werden.

Bei dem Verfahren zur Ermittlung des Drehpositionsfehlers ist eine Drehvorrichtung, die zwei relativ zueinander drehbare Teile aufweist, mit einer Referenzdrehvorrichtung, die ebenfalls zwei relativ zueinander drehbaren Teile aufweist, gekoppelt, wobei eines der Teile der Drehvorrichtung an eines der Teile der Referenzdrehvorrichtung drehfest gekoppelt ist, und das andere Teil der Drehvorrichtung relativ zu dem anderen Teil der Referenzdrehvorrichtung drehbar ist, und ein vorangehend beschriebener Prüfkörper an der Drehvorrichtung oder an der Referenzdrehvorrichtung angebracht ist, und das Verfahren folgenden Schritte aufweist:

- Ermitteln einer ersten Drehposition des Prüfkörpers mit dem/den Sensoren, insbesondere Winkelsensoren,
- Drehen der beiden Teile der Referenzdrehvorrichtung relativ zueinander und drehen der beiden Teile der Drehvorrichtung relativ zueinander derart, dass der Prüfkörper in eine zweite Drehposition gedreht wird, die der ersten Drehposition entspricht, oder im Wesentlichen entspricht,
- Ermitteln einer zweiten Drehposition des Prüfkörpers mit dem/den Sensoren, insbesondere Winkelsensoren.

Das Drehen der der beiden Teile der Referenzdrehvorrichtung relativ zueinander und drehen der beiden Teile der Drehvorrichtung relativ zueinander erfolgt vorzugsweise gegenläufig, sodass eine Drehung der beiden Teile der Referenzdrehvorrichtung durch eine Gegendrehung der beiden Teile der Drehvorrichtung kompensiert wird. Unter der Überschrift II., in dieser Beschreibung, ist dieses Verfahren genauer beschrieben.

Die mit dem Prüfkörper und den vorangehend beschriebenen Verfahren bestimmten Korrekturwerte können auch zur Vorkorrektur eines Online-korrigierten Drehtisches verwendet werden. Ein Beispiel eines Online-korrigierten Drehtisches ist in der Patentanmeldung PCT/EP2011/061681 beschrieben. Bei Online-korrigierten Drehtischen können durch systematische Fehler eines in PCT/EP2011/061681 beschrieben Maßverkörperungselements (z.B. in Drehtisch integrierte Doppelkugel) sowie zugeordneter Sensoren (z.B. Abstandssensoren, die Abstände zu Kugeln messen) reproduzierbare Fehler entstehen. Durch Vermessung mit einem Prüfkörper und einem Verfahren gemäß vorliegender Erfindung können diese systematischen Fehler ermittelt und optional später korrigiert werden. Wenn das Verfahren der vorliegenden Erfindung durchgeführt wird, kann die Online-Korrektur aus PCT/EP2011/061681 aktiviert oder deaktiviert sein.

Wird die Online-Korrektur aus PCT/EP2011/061681 beim Vermessen gemäß dem vorliegenden Verfahren aktiv belassen so erhält man direkt den Fehler des Online-Korrektursystems. Wird die Online-Korrektur beim Vermessen gemäß dem vorliegenden Verfahren deaktiviert, so erhält man Korrekturwerte aus der Online-Korrektur und Korrekturwerte aus dem vorliegenden Verfahren, welche mit einander verglichen werden können. Der Vergleich ergibt den Fehler des Online-Korrektursystems, d.h. eine Abweichung zwischen einem Korrekturwert des Online-Korrektursystems und einem entsprechenden Korrekturwert, der nach dem vorliegenden Verfahren ermittelt wurde, entspricht dem Fehler des Online-Korrektursystems.

II. Verfahren zur Ermittlung eines oder mehrerer Fehler eines Drehpositionsermittlungssystems,

In einem weiteren Aspekt offenbart die Erfindung ein Verfahren zur Ermittlung eines oder mehrerer Fehler eines Drehpositionsermittlungssystems, bei dem der oben beschriebene Prüfkörper eingesetzt werden kann. Der Prüfkörper weist wie oben beschrieben ein Prüfelement auf, das auch in Ausgestaltungen des nachfolgenden Verfahrens erwähnt ist, beispielsweise in Form eines Reflektors oder eines Messkörpers. Das Verfahren stellt ein verbessertes Verfahren zur Ermittlung von Drehpositionsfehlern dar.

Angegeben wird ein Verfahren zur Ermittlung eines oder mehrerer Fehler eines Drehpositionsermittlungssystems, das Drehpositionen von Teilen einer Drehvorrichtung, insbesondere für ein Koordinatenmessgerät, misst, und/oder zur Ermittlung eines Hystereseeffektes bei einem solchen Drehpositionsermittlungssystem, wobei ein erstes Teil und ein zweites Teil der Drehvorrichtung relativ zueinander um eine Drehachse der Drehvorrichtung drehbar sind, und das Verfahren die folgenden Schritte aufweist:

a) Ermitteln einer ersten Drehposition der Drehvorrichtung mit zwei relativ zueinander drehbaren Teilen, wobei eine erste Drehposition des ersten Teils relativ zu dem zweiten Teil der Drehvorrichtung ermittelt wird,

b) Ermitteln einer ersten Drehposition einer Referenzdrehvorrichtung mit zwei relativ zueinander drehbaren Teilen, wobei eines der zwei Teile ein drittes Teil ist, das bezüglich der Drehachse drehfest mit dem zweiten Teil der Drehvorrichtung gekoppelt ist, und das andere Teil der zwei Teile ein viertes Teil ist, das relativ zu dem dritten Teil um eine Drehachse der Referenzdrehvorrichtung drehbar ist, wobei eine erste Drehposition des dritten Teils relativ zu dem vierten Teil ermittelt wird,

c) als optionaler Schritt: Ermitteln einer ersten resultierenden Drehposition des ersten Teils und des vierten Teils relativ zueinander bezüglich der Drehachse und/oder der Drehachse der Referenzdrehvorrichtung, wobei die erste resultierende Drehposition aus der ersten Drehposition der Drehvorrichtung und der ersten Drehposition der Referenzdrehvorrichtung resultiert,

d) Variieren der Drehposition der Drehvorrichtung zu einer zweiten Drehposition der Drehvorrichtung,
Ermitteln der zweiten Drehposition der Drehvorrichtung mit dem Drehpositionsermittlungssystem,
Variieren der Drehposition der Referenzdrehvorrichtung zu einer zweiten Drehposition der Referenzdrehvorrichtung,
Ermitteln der zweiten Drehposition der Referenzdrehvorrichtung,
Ermitteln von einer durch das Variieren der Drehpositionen veränderten resultierenden Drehposition des ersten Teils und des vierten Teils relativ zueinander,
Ermitteln des Drehpositionsfehlers des Drehpositionsermittlungssystems aus der veränderten resultierenden Drehposition des ersten Teils und des vierten Teils relativ zueinander, und optional aus

i) den Drehpositionen der Drehvorrichtung oder der Änderung der Drehposition der Drehvorrichtung, und
ii) aus den Drehpositionen der Referenzdrehvorrichtung, oder der Änderung der Drehposition der Referenzdrehvorrichtung,

und/oder alternativ oder zusätzlich zu Schritt d),

e) Variieren der Drehposition der Drehvorrichtung zu einer zweiten Drehposition der Drehvorrichtung und
Variieren der Drehposition der Referenzdrehvorrichtung zu einer zweiten Drehposition der Referenzdrehvorrichtung, sodass die resultierende Drehposition des ersten Teils und des vierten Teils nicht verändert ist,
Ermitteln der zweiten Drehposition der Drehvorrichtung mit dem Drehpositionsermittlungssystem, Ermitteln der zweiten Drehposition der Referenzdrehvorrichtung, und
Ermitteln des Drehpositionsfehlers des Drehpositionsermittlungssystems aus den Drehpositionen der Drehvorrichtung oder der Änderung der Drehposition der Drehvorrichtung, und aus den Drehpositionen der Referenzdrehvorrichtung oder der Änderung der Drehposition der Referenzdrehvorrichtung.

Nach einer grundlegenden Idee wird ein Fehler des Drehpositionsermittlungssystems einer Drehvorrichtung mittels einer Referenzdrehvorrichtung ermittelt.

Nach einer weiteren grundlegenden Idee des Verfahrens kann einer Drehung von Teilen der Drehvorrichtung durch eine Drehung von Teilen der Referenzdrehvorrichtung entgegen gewirkt werden, sodass auch von einer externen Beobachterposition aus die Drehposition des ersten Teils und des vierten Teils nur sehr wenig oder nicht verändert wird. Dieses Prinzip ermöglicht einen vereinfachten Aufbau zur Messung des Fehlers eines Drehpositionsermittlungssystems. Die externe Beobachterposition kann beispielsweise von einer nachfolgend noch beschriebenen Drehpositionsermittlungseinrichtung eingenommen werden, die mit einem Prüfelement zusammen wirken kann, das an dem ersten oder dem vierten Teil angebracht sein kann, oder von einem Prüfelement. Dadurch, dass von einer Beobachterposition aus die Drehposition des ersten Teils und des vierten Teils nur sehr wenig oder nicht verändert wird, kann die Drehpositionsermittlungseinrichtung oder das Prüfelement stationär bleiben und es sind beispielsweise Drehpositionsermittlungseinrichtungen einsetzbar, die hoch genau in einem kleinen Winkelbereich messen.

Mit den Bezeichnungen "erstes Teil", "zweites Teil", "drittes Teil" und "viertes Teil" ist nach der Idee dieser Erfindung keine räumliche Abfolge dieser Teile oder relative Anordnung dieser Teile festgelegt. Die Nummerierungen dienen der begrifflichen Unterscheidung der Teile. Ferner ist die Funktion der Teile in einer Drehvorrichtung oder Referenzdrehvorrichtung durch die Nummerierung nicht festgelegt. Beispielsweise kann das erste Teil ein Rotor, insbesondere Drehteller, einer Drehvorrichtung sein und das zweite Teil ein Stator, insbesondere ein Unterteil eines Drehtisches, oder umgekehrt. Ebenso kann das dritte Teil, als Teil des Referenzdrehtisches ein Rotor, insbesondere en Drehteller, sein und das vierte Teil ein Stator, oder umgekehrt.

Die Bezeichnungen von Verfahrensschritten mit Buchstaben legt keine zeitliche Reihenfolge fest, sondern sie dienen der einfacheren Benennung und Zitierung von Verfahrensschritten. Wenn möglich, können Verfahrensschritte zeitgleich oder in beliebiger Reihenfolge durchgeführt werden.

Bei Variieren einer Drehposition kann ein Wert einer nächsten, beispielsweise zweiten, Drehposition vorgegeben werden. Das Variieren kann manuell mit einer elektrisch oder anderweitig betriebenen Stelleinrichtung erfolgen. Eine Stelleinrichtung kann ein elektronisches Steuerungssystem aufweisen, beispielsweise ein Rechner-gestütztes Steuerungssystem, in welches ein Sollwert einer nächsten Drehposition eingegeben werden kann.

Der Begriff "Ermitteln" beschreibt allgemein einen Erkenntnisvorgang, im Speziellen die Gewinnung der Erkenntnis, in welcher Drehposition ein Teil einer Drehvorrichtung oder einer Referenzdrehvorrichtung relativ zu einem anderen Teil der Drehvorrichtung/Referenzdrehvorrichtung steht, oder wie groß ein Fehler ist. Die Ermittlung kann beispielsweise ein visuelles Ablesen sein, beispielsweise einer Drehposition, und/oder ein maschinelles Ablesen. Ein Ablesen kann beispielsweise anhand einer Skala und einem Zeiger erfolgen, beispielsweise einer Skala mit Winkelwerten. Ein Ablesen kann auch an einem Display erfolgen. Desweiteren kann der Ermittlungsvorgang automatisiert sein, ohne dass es der Überprüfung oder der gesonderten Kenntnisnahme durch einen Menschen bedarf. Der Ermittlungsvorgang kann ein Messvorgang sein oder er kann einen oder mehrere Messvorgänge umfassen, beispielsweise mit einem Ermittlungssystem oder einem Messsystem. Der Ermittlungsvorgang kann eine oder mehrere Berechnungen umfassen, beispielsweise wenn ein Fehler mit Hilfe zuvor ermittelter Größen ermittelt werden soll. Berechnungen können mit einer Rechenvorrichtung erfolgen.

Die erste Drehposition der Drehvorrichtung kann ohne ein Drehpositionsermittlungssystem ermittelt werden, beispielsweise in Form einer Nulleinstellung, wobei ein mechanisches Hilfsmittel für eine Nullstellung vorgesehen sein kann, z.B. ein Anschlag. Die erste Drehposition der Drehvorrichtung wird vorzugsweise mit einem Drehpositionsermittlungssystem der Drehvorrichtung ermittelt. Bei einem Ermitteln der ersten Drehposition bei der Drehvorrichtung kann die erste Drehposition als Nullposition des Drehpositionsermittlungssystems gesetzt werden und im weiteren Verfahren als Nullposition oder Bezugsposition verwendet werden. Ebenso kann, wenn auch die Referenzdrehvorrichtung ein Drehpositionsermittlungssystem aufweist, bei einem Ermitteln der ersten Drehposition der Referenzdrehvorrichtung diese erste Drehposition als Nullposition dieses Referenz-Drehpositionsermittlungssystems gesetzt werden und im weiteren Verfahren als Nullposition oder Bezugsposition verwendet werden.

Die erste Drehposition der Drehvorrichtung kann eigestellt werden oder die Drehvorrichtung kann sich bereits in einer Drehposition befinden, die in dem Verfahren als erste Drehposition der Drehvorrichtung verwendet wird. Ebenso kann die erste Drehposition der Referenzdrehvorrichtung eingestellt werden oder die Referenzdrehvorrichtung kann sich bereits in einer Drehposition befinden, die in dem Verfahren als erste Drehposition der Referenzdrehvorrichtung verwendet wird.

Eine Drehposition der Referenzdrehvorrichtung kann gemessen werden, beispielsweise mit einem Drehpositionsermittlungssystem der Referenzdrehvorrichtung, oder bereits mit großer Genauigkeit bekannt sein. Es sind mechanische Systeme zur genauen relativen Einstellung von zueinander drehbaren Teilen einer Drehvorrichtung bekannt, beispielsweise eine Hirth-Verzahnung.

Sofern bei einer Referenzdrehvorrichtung ein Drehpositionsmesssystem verwendet wird, so kann dieses bereits kalibriert sein.

Eine Drehposition oder die Drehpositionsänderung kann im speziellen Fall ein Winkel(wert) sein. Sie kann aber anderweitig angegeben werden, wie zum Beispiel in Zählern, Markierungen oder anderen selbst gewählten dimensionsbehafteten oder dimensionslosen Größen. Ein Beispiel sind strichförmige oder anderweitige Markierungen, die über einen Kreisumfang verteilt sind, wobei in diesem Fall die Drehposition/Drehpositionsänderung in einer Anzahl Markierungen, wie z.B. Striche angegeben werden kann. Es kann wahlweise von der Anzahl Markierungen auf einen Winkelwert umgerechnet werden, wenn die Positionen der Markierungen zueinander bekannt sind, insbesondere ein Abstände zwischen den Markierungen bekannt sind.

Das Verfahren kann unterschiedlichen Zwecken dienen. Zum einen können damit Fehler eines Drehpositionsermittlungssystems ermittelt werden. Zum anderen können Hystereseeffekte bei einem Drehpositionsermittlungssystem ermittelt werden. Damit ist gemeint, dass Fehler des Drehpositionsermittlungssystems abhängig von der Drehrichtung sein können. Durch Anwendung verschiedener Drehrichtungen der bei der relativen Drehung von Teilen der zu prüfenden Drehvorrichtung können solche Hystereseeffekte festgestellt werden. Mit dem Verfahren ist es auch möglich, Fehlerermittlungen, auch unter Berücksichtigung von Hystereseeffekten, mehrfach durchzuführen und eine Reproduzierbarkeit der Fehlerermittlung zu prüfen. Des Weiteren kann bei mehrfacher Ermittlung des Fehlers eine statistische Auswertung der Fehlerdaten vorgenommen werden, beispielsweise um eine Fehlerstreuung zur ermitteln. Es ist auch möglich, auch in Kombination mit den vorangehend beschriebenen Verfahrenszwecken, Drehpositionsfehler an verschiedenen Drehpositionen (bzw. an später noch beschriebenen Stützstellen) einfach oder mehrfach, wahlweise drehrichtungsabhängig festzustellen.

Bei dem Verfahren werden zwei Teile der Referenzdrehvorrichtung aus einer ersten Drehposition heraus relativ zueinander gedreht. Dies wird als "Variieren der Drehposition der Referenzdrehvorrichtung" oder "Einstellen der Drehposition der Referenzdrehvorrichtung" bezeichnet. Die veränderte Drehposition oder die Änderung der Drehposition dieser beiden Teile kann genau gemessen werden, beispielsweise mit einem in die Referenzdrehvorrichtung integrierten, hochgenauen, wahlweise kalibrierten Drehpositionsmesssystem. Beispielsweise ist auf diese Weise ein Winkel, um den die beiden Teile der Referenzdrehvorrichtung relativ zueinander gedreht werden, genau bekannt. Die Referenzdrehvorrichtung ist vorzugsweise eine kalibrierte oder ein selbstkalibrierende Drehvorrichtung, insbesondere ein selbstkalibrierender Drehtisch. Eine selbstkalibrierende Drehvorrichtung ist im Dokument von Geckeler, R.; Fricke, A.; Elster, C.: "Calibrationof angle encodersusingtransferfunctions" Aus: Measurement Science and Technology Vol. 17 (2006) offenbart. Die veränderte Drehposition oder die Änderung der Drehposition bei der Referenzdrehvorrichung kann auch anderweitig, ohne Einsatz eines Drehpositionsmesssystems genau bekannt oder einstellbar sein, beispielsweise aufgrund einer hoch genauen mechanischen Stellvorrichtung, wie z.B. einer Hirth-Verzahnung.

Der Begriff "genau" bedeutet beispielsweise, dass das Drehpositionsmesssystem der Referenzdrehvorrichtung einen geringeren Fehler aufweist als das Drehpositionsmesssystem der Drehvorrichtung, dessen Fehler ermittelt werden soll, oder dass eine Stellvorrichtung einen geringeren Fehler aufweist als das Drehpositionsmesssystem der Drehvorrichtung. Vorzugsweise ist der Fehler des Drehpositionsmesssystems oder Stellsystems bei einer Referenzdrehvorrichtung kleiner oder gleich ½ des Fehlers des Drehpositionsmesssystems der Drehvorrichtung, mehr bevorzugt kleiner oder gleich 1/5, am meisten bevorzugt kleiner oder gleich 1/10.

Eine Drehvorrichtung weist eine Drehbeweglichkeit von einem ersten Teil und einem zweiten Teil um zumindest eine Drehachse auf, wobei der erste Teil und der zweite Teil aufgrund der Drehbeweglichkeit der Drehvorrichtung relativ zueinander drehbeweglich sind und wobei der erste oder der zweite Teil ausgestaltet ist, z.B. entweder ein Werkstück oder einen taktilen Messkopf, z. B. mit einem Taster, oder allgemeineinen Sensor zu halten, um eine Drehung des Werkstücks oder des Messkopfes oder Sensors zu ermöglichen. Es sind auch Drehvorrichtungen verwendbar, die Drehbeweglichkeiten um zwei Drehachsen (z. B. so genanntes Dreh-/Schwenkgelenk mit zwei zueinander senkrecht verlaufenden Drehachsen) oder um mehr als zwei Drehachsen aufweisen.

Bei einer Ausführungsform ist der erste oder der zweite Teil der Drehvorrichtung ausgestaltet, ein Werkstück zu halten. Der andere Teil ist insbesondere ausgestaltet, an einer Basis eines KMG befestigt zu werden und/oder auf einer Basis positioniert zu werden, so dass dieser Teil relativ zu der Basis unbeweglich ist der andere Teil relativ zu der Basis gedreht werden kann.

Gemäß einer weiteren Ausführungsform der Anordnung ist der erste oder der zweite Teil der Drehvorrichtung ausgestaltet, einen taktilen Messkopf, z. B. mit einem Taster oder allgemein, einen Sensor zu halten. In diesem Fall ermöglichen der erste und zweite Teil durch eine Relativbewegung eine Drehung des Messkopfs oder des Sensors. Bekannt sind z.B. so genannte Dreh-/Schwenkgelenke, die eine Drehbeweglichkeit bezüglich zweier quer und insbesondere senkrecht zueinander verlaufender Drehachsen ermöglichen. Es sind jedoch auch Drehvorrichtungen bekannt, die lediglich eine Drehbeweglichkeit bezüglich einer einzigen Drehachse ermöglichen oder Drehungen um mehr als zwei Drehachsen ermöglichen.

Beispiele für Drehvorrichtungen, bei deren Drehpositionsermittlungssystem ein Fehler ermittelt werden soll, sind Drehgelenke, Drehvorrichtungen mit mehreren Drehachsen, Drehschwenk-Gelenke, die mehrere Drehachsen aufweisen, Drehtische, und Dreh-Schwenk-Tische. Die Erfindung bezieht sich insbesondere auf Drehvorrichtungen, die in Koordinatenmessgeräten (nachfolgend abgekürzt als KMG), Werkzeugmaschinen, Robotern und anderen Anwendungen, bei denen es auf hohe Genauigkeit ankommt, einsetzbar sind. Die Drehvorrichtung wird auch als Prüfling bezeichnet.

Drehvorrichtung und die Referenzdrehvorrichtung können eigenangetriebene Drehachsen aufweisen, manuell oder halbautomatisch umsetzbare Drehgelenke sein, beispielsweise in reproduzierbaren Dreipunktlagerungen umsetzbare Drehgelenke sein. Die (Referenz)drehvorrichtung) kann auch ein Teilapparat sein, also eine Komponente einer übergeordneten Vorrichtung, wie einer Werkzeugmaschine.

Bei dem Verfahren werden zwei Teile der Drehvorrichtung, bei deren Drehpositionsermittlungssystem der Drehpositionsfehler bestimmt werden soll, aus der ersten Drehposition heraus relativ zueinander gedreht. Dies wird als "Variieren der Drehposition der Drehvorrichtung" bezeichnet. Die veränderte Drehposition oder die Änderung der Drehposition dieser beiden Teile relativ zueinander ist nicht genau bekannt, wegen des noch nicht bekannten und durch das Verfahren zu bestimmenden Drehpositionsfehlers des Drehpositionsermittlungssystems.

Eines der Teile der Drehvorrichtung ist mit einem der Teile der Referenzdrehvorrichtung drehfest gekoppelt (z.B. zweites und drittes Teil wie oben angegeben).

Die übrigen Teile (erstes und viertes Teil, wie oben angegeben) der Drehvorrichtung und der Referenzdrehvorrichtung können entweder ebenfalls drehfest zueinander sein oder relativ zueinander drehbar sein.

Der Schritt c) des oben angegebenen Verfahrens ist ein optionaler Schritt, der nicht erforderlich ist, wenn das erste und vierte Teil relativ zueinander nicht drehbar sind. In diesem Fall erübrigt sich die Ermittlung einer ersten resultierenden Drehposition des ersten Teils und des vierten Teils relativ zueinander, da diese Teile ohnehin nicht zueinander drehbar sind und folglich die Position beider Teile zueinander von Anfang an bekannt ist. Es ist aber unschädlich, die Drehposition erneut festzustellen. Das erste und vierte Teil können drehfest aneinander gekoppelt sein, beispielsweise durch mechanische Kopplungsmittel, wie Träger, Verbinder etc. Bei einer Drehfestigkeit des ersten und vierten Teils zueinander werden das erste und vierte Teil gemeinsam und um einen gleichen Betrag um die ebenfalls drehfest aneinander gekoppelten Teile zwei und drei gedreht. Eine Variation der Drehposition der Drehvorrichtung und eine Variation der Drehposition der Referenzdrehvorrichtung haben dann in dieser Variante zur Folge, dass das erstes und viertes Teil eine unveränderte Drehposition relativ zueinander beibehalten, wie in der Alternative in Schritt e) angegeben.

Wenn das erste Teil und das vierte Teil relativ zueinander drehbar sind, dann haben eine Variation der Drehposition der Drehvorrichtung und eine Variation der Drehposition der Referenzdrehvorrichtung zur Folge, dass entweder daserste und vierte Teilim Vergleich zu vorher eine veränderte resultierende Drehpositionen relativ zueinander einnehmen, wie in der Alternative in Schritt d) angegeben, oder dass sie eine unveränderte Drehposition relativ zueinander einnehmen, wie in der Alternative in Schritt e) angegeben. Beide Alternativen werden nachfolgend näher beschrieben.

Verfahren gemäß Schritt d)

Es wird die relativ zueinander veränderte resultierende Drehposition des ersten Teils und des vierten Teils ermittelt. Bei der Ermittlung kann die Ausgangsposition (vor Variieren der Drehpositionen) und die geänderte Drehposition (nach Variieren der Drehpositionen) ermittelt oder gemessen werden, woraus die Änderung ermittelt werden kann, oder es kann eine direkte Ermittlung der Änderung erfolgen. Eine Ermittlung der Änderung bedeutet, dass ein Änderungswert (z.B. Winkeländerung), als ein Unterscheid zwischen zwei Werten (z.B. diskreten Winkelwerten) direkt ermittelt wird.

Eine veränderte resultierende Drehposition des ersten Teils und des vierten Teils relativ zueinander wird hoch genau ermittelt, beispielsweise mit einem weiteren Messsystem, vorzugsweise mit einer Drehpositions-Ermittlungseinrichtung, insbesondere Winkelermittlungseinrichtung, wie nachfolgend noch beschrieben.

Als weitere Größe ist die veränderte Drehposition oder die Änderung der Drehposition der beiden Teile der Referenzdrehvorrichtung (drittes und viertes Teil) relativ zueinander genau bekannt oder wird genau gemessen, beispielsweise mit einem in der Referenzdrehvorrichtung vorhandenen genauen Drehpositionsmesssystem, insbesondere einem Drehwinkelmesssystem.

Man kennt folgende Einstellungen bzw. Größen:

i. Die veränderte Drehposition der Drehvorrichtung, d.h. veränderte Drehposition des ersten und zweiten Teils relativ zueinander, angezeigt durch das Drehpositionsermittlungssystem, dessen Fehler bestimmt werden soll, beispielsweise ein Winkel(änderungs)wert

ii. Die veränderte Drehposition der Referenzdrehvorrichtung, d.h. veränderte Drehposition des dritten und vierten Teils relativ zueinander, die genau bekannt ist oder genau ermittelt wird, beispielsweise ein Winkel(änderungs)wert,

iii. Die veränderte Drehposition des ersten und vierten Teils relativ zueinander, die genau bekannt ist, beispielsweise ein Winkel(änderungs)wert

Mit iii) und optional auch mit i) und ii) kann der Fehler des Drehpositionsermittlungssystems ermittelt werden, wie anhand eines Ausführungsbeispiels erläutert. Die Einstellungen/Größen i) und ii) sind nicht in jedem Fall erforderlich. Wenn beispielsweise die veränderte Drehposition der Drehvorrichtung einem angezeigten, fehlerbehafteten(Winkel)Wert entspricht und die veränderte Drehposition der Referenzdrehvorrichtung einem dazu negierten (Winkel)wert - anders ausgedrückt: wenn beide (Winkel)werte dem Betrag nach gleich sind aber ein entgegengesetztes Vorzeichen haben, wobei der (Winkel)wert der Drehvorrichtung fehlerbehaftet ist - dann kann der Fehler lediglich aus iii) bestimmt werden, wie in den Ausführungsbeispielen angegeben. Wenn die genannten (Winkel)werte, also der Wert zu i und der Wert zu ii) dem Betrag nach ungleich sind und/oder kein entgegengesetztes Vorzeichen haben, dann werden auch i) und ii) zur Fehlerermittlung herangezogen.

Werte, die

I. Vom fehlerbehafteten Drehpositionsermittlungssystem der Drehvorrichtung angezeigt werden, oder
II. von dem Drehpositionsermittlungssystem der Referenzdrehvorrichtung angezeigt werden, oder bei der Referenzdrehvorrichtung eingestellt werden,

werden in dieser Erfindung auch als "nominelle Werte" bezeichnet.

Bei I. (Drehvorrichtung) weicht der nominelle Wert von dem realen Wert um den Betrag des zu ermittelnden Fehlers ab. Auch bei II. (Referenzrehvorrichtung) ist dies prinzipiell der Fall. Allerdings ist die Referenzdrehvorrichtung genauer, wobei auf die oben angegebene Definition von Genauigkeit verwiesen wird. In dieser Erfindung wird der nominelle Wert der Referenzdrehvorrichtung vorzugsweise als realer Wert angenommen und Ermittlungen zugrunde gelegt.

Verfahren gemäß Schritt e):

In der Alternative des Schrittes e) wird festgestellt, dass die resultierende Drehposition des ersten Teils und des vierten Teils nicht verändert ist. Eine nicht veränderte resultierende Drehposition des ersten Teils und des vierten Teils relativ zueinander wird genau ermittelt, beispielsweise mit einem weiteren Messsystem, vorzugsweise mit einer Drehpositions-, vorzugsweise einer Drehwinkel-Ermittlungseinrichtung, wie nachfolgend noch beschrieben.

Man kennt folgende Einstellungen bzw. Größen:

i. Die veränderte Drehposition der Referenzdrehvorrichtung, d.h. veränderte Drehposition des dritten und vierten Teils relativ zueinander, die genau bekannt ist, beispielsweise ein Winkel(änderungs)wert,

ii. Die veränderte Drehposition der Drehvorrichtung, d.h. veränderte Drehposition des ersten und zweiten Teils relativ zueinander, angezeigt durch das Drehpositionsermittlungssystem, dessen Fehler bestimmt werden soll.

und weiß ferner, dass die unveränderte Drehposition des ersten und vierten Teils relativ zueinander unverändert ist.

Mit i) und ii) kann der Fehler des Drehpositionsermittlungssystems ermittelt werden, wie anhand eines Ausführungsbeispiels erläutert.

Im Verfahren können die Schritte d) mehrfach durchgeführt werden, oder es können die Schritte e) mehrfach durchgeführt werden. Vorzugsweise werden mehrere Variationen der Drehposition der Drehvorrichtung und/oder der Drehposition der Referenzdrehvorrichtung vorgenommen, also mehrere veränderte Drehpositionen der Drehvorrichtung und/oder Referenzdrehvorrichtung eingestellt. Beispielsweise kann die Drehposition der Drehvorrichtung/Referenzdrehvorrichtung von der zweiten Drehposition zu einer dritten Drehposition variiert werden, von der dritten Drehposition zu einer vierten usw. Bei den mehreren Variationen können die Drehrichtungen bei der Drehvorrichtung und/oder der Referenzdrehvorrichtung variieren.

Ebenfalls ist es möglich, die Schritte d) und e), jeweils einfach oder mehrfach durchzuführen, Vorzugsweise werden mehrere Variationen der Drehposition der Drehvorrichtung und/oder der Drehposition der Referenzdrehvorrichtung vorgenommen, also mehrere veränderte Drehpositionen der Drehvorrichtung und/oder Referenzdrehvorrichtung eingestellt.

Zur mehrfachen Durchführung der Schritte d) und/oder e) können mehrere Drehpositionen festgelegt werden, bei der Referenzdrehvorrichtung und/oder der Drehvorrichtung, auch bezeichnet als "Stützstellen" für die Erfassung von Drehpositionsfehlern.

Solche Stützstellen können unregelmäßig oder regelmäßig auf eine oder mehrere relative Umdrehungen der Teile der Referenzdrehvorrichtung und/oder Drehvorrichtung verteilt werden. Als Abstand zwischen den Stützstellen (Schrittweite) wird vorzugsweise ein ganzzahliger Teiler von 360° gewählt. Die Anzahl Stützstellen kann beliebig erhöht werden, bzw. die Schrittweite beliebig verringert werden, wodurch insbesondere kurzperiodische Fehler erfasst werden können und Aliasing-Effekte, entstehend durch zu große Schrittweite, verringert oder vermieden werden können.

Sowohl die Positionierung der Drehachsen, als auch eine Datenauswertung ist mit dem Verfahren sehr schnell und genau möglich. Daher hat das Verfahren insbesondere die folgenden Vorteile:

- Eine sehr schnelle Drehpositionsfehlererfassung, auch bei hoher Stützstellenanzahl, ist möglich. Dadurch wird folgendes ermöglicht:

- Eine praktikable Erfassung von kurzperiodischen Fehlern des Drehpositionsermittlungssystems. Beispielsweise kann man bei Verwendung einer selbstkalibrierenden Referenzdrehvorrichtung eine ständige Kontrolle über die Genauigkeit der Referenzdrehvorrichtung erhalten, und somit über die Genauigkeit der Fehlerermittlung,

- Bei Verwendung einer selbstkalibrierenden Referenzdrehvorrichtung werden Kalibrierkosten gespart,

- Eine Erfassung von Drehpositionsfehlern bei einer Vielzahl Drehvorrichtungen ist möglich, z.B. auch bei rastenden Dreh-Schwenk-Gelenken, oder Drehvorrichtungen, die Bauart bedingt nur begrenzten Platz für Sensorik bieten,

- Die Erfassung der Drehpositionsfehler kann im fertigen Gesamtsystem erfolgen. D.h., es werden eventuelle Verspannungen des Maßstabes durch dessen Montage mit berücksichtigt, Wirken Kräfte auf den Maßstab (z.B. Spannungen, die durch eine Klebung entstehen), verformt sich dieser. Der Maßstab ist z.B. eine Strichscheibe, bei welcher Verformungen eine Änderung der Teilungsabstände bewirken.

- Bei Bedarf ist eine genaue Erfassung der Drehpositionsfehler in Teilbereichen des Drehpositionsermittlungssystems möglich

Eine Kopplung von Drehvorrichtung und Referenzdrehvorrichtung kann auf verschiedene Art und Weise erfolgen:
Beide Vorrichtungen können direkt aneinander grenzend positioniert werden. Die Kopplung kann insbesondere kraftschlüssig oder formschlüssig erfolgen. Beispielsweise kann eine Kopplung durch Reibungskräfte erfolgen, beispielsweise wenn die Referenzdrehvorrichtung und die Drehvorrichtung aufeinander positioniert werden und die Gewichtskraft einer der Vorrichtungen auf der anderen Vorrichtung lastet.

Zwischen Referenzdrehvorrichtung und Drehvorrichtung kann eine Lagerung vorgesehen sein, beispielsweise eine Dreipunktlagerung.

Zwischen der Drehvorrichtung und Referenzdrehvorrichtung können ein oder mehrere Halteelemente oder Adapter angeordnet sein. Ein spezielles Halteelement wird in dieser Beschreibung und den Ausführungsbeispielen noch beschrieben.

Die Kopplung von Drehvorrichtung und Referenzdrehvorrichtung ist vorzugsweise derart, dass die Drehachse der Drehvorrichtung (Achse, um die sich die Teile der Drehvorrichtung relativ zueinander drehen) und die Drehachse der Referenzdrehvorrichtung (Achse, um die sich die Teile der Referenzdrehvorrichtung relativ zueinander drehen) koaxial oder axial fluchtend oder im Wesentlichen koaxial oder axial fluchtend zueinander sind.

In einer Ausführungsform des Verfahrens wird die Drehposition des ersten Teils und des vierten Teils relativ zueinander, also die gleichbleibende Drehposition beider Teile relativ zueinander oder die Veränderung der Drehposition beider Teile relativ zueinander, mit Hilfe einer Drehpositions-Ermittlungseinrichtung bestimmt. Mit der Drehpositions-Ermittlungseinrichtung kann gemäß Schritt d) des obigen Verfahrens eine veränderte resultierende Drehpositionen des ersten Teils und des vierten Teils relativ zueinander festgestellt werden. Alternativ oder zusätzlich kann gemäß Schritt e) des obigen Verfahrens mit der Drehpositions-Ermittlungseinrichtung festgestellt werden, dass die Drehpositionen des ersten Teils und des vierten Teils relativ zueinander unverändert ist. In diesen Ausführungsformen (d) & e)) dient die Drehpositions-Ermittlungseinrichtung als hoch genaues zusätzliches Messsystem. Beispielsweise erfolgt die Ermittlung des Fehlers des zu kalibrierenden Drehwinkelmesssystems dabei durch Vergleich eines Drehwinkelmesssystems der Referenzdrehvorrichtung mit dem (fehlerbehafteten) Drehwinkelmesssystem der Drehvorrichtung, wobei als weiteres Messsystem die Drehpositions-Ermittlungseinrichtung dient. Ein Berechnungsprinzip ist in den Beispielen angegeben.

Ein Beispiel für eine Drehpositions-Ermittlungseinrichtung ist eine Winkelmesseinrichtung. Ein spezielles Beispiel einer Drehpositions-Ermittlungseinrichtung ist ein Autokollimator, oder eine Anordnung mehrere Autokollimatoren. Als Drehpositions-Ermittlungseinrichtung können in einer anderen Variante ein- oder mehrere Abstandssensoren verwendet werden, wie z.B. Laserabstandmesser, Laserinterferometer, kapazitive Abstandssensoren, magnetoresistive Abstandssensoren, magnetoresistive Winkelsensoren. Diese Drehpositions-Ermittlungseinrichtungen können miteinander kombiniert werden und/oder es können mehrere Einrichtungen gleichen Typs verwendet werden. Statt zur Messung von Winkeln oder zusätzlich zur Winkelmessung können Abstandsmesser oder -sensoren auch zur Ermittlung von translatorischen Bewegungsfehlern verwendet werden. Spezielle Anordnungen von Drehpostions-Ermittlungseinrichtungen sind in den Ausführungsbeispielen beschrieben.

Es ist auch möglich, ein Koordinatenmessgerät als Drehpositions-Ermittlungseinrichtung zu verwenden.

Bei Verwendung einer Drehpositions-Ermittlungseinrichtung wird vorzugsweise die Drehposition des ersten Teils und des vierten Teils relativ zueinander mit Hilfe eines Prüfelements ermittelt, wobei mit der Drehpositions-Ermittlungseinrichtung die Drehposition oder Drehpositionsänderung des Prüfelements relativ zu der Drehpositions-Ermittlungseinrichtung oder zu einem anderen Bezugspunkt ermittelt wird.

Insbesondere kann die Positionierung von Drehpositions-Ermittlungseinrichtung und Prüfelement folgendermaßen sein:

- die Drehpositions-Ermittlungseinrichtung ist so zu dem ersten Teil oder zu dem vierten Teil positioniert, beispielsweise an das erste Teil oder an das vierte Teil gekoppelt, dass sie zu dem ersten oder dem vierten Teil drehfest ist,
- das Prüfelement ist so zu dem ersten Teil oder zu dem vierten Teil positioniert, beispielsweise an das erste Teil oder an das vierte Teil gekoppelt, dass es zu dem ersten oder dem vierten Teil drehfest ist,

wobei die Drehpositions-Ermittlungseinrichtung drehfest zu dem ersten Teil ist wenn das Prüfelement drehfest zu dem vierten Teil ist und die Drehpositions-Ermittlungseinrichtung drehfest zu dem vierten Teil ist wenn das Prüfelement drehfest zu dem ersten Teil ist.

Der Begriff "drehfest" bedeutet in obigem Zusammenhang insbesondere eine Drehfestigkeit hinsichtlich einer Drehung um die Drehachse der Drehvorrichtung oder der Drehachse der Referenzdrehvorrichtung. Eine Drehfestigkeit zu dem ersten/vierten Teil bedeutet, dass die Drehpositions-Ermittlungseinrichtung oder das Prüfelement mit dem ersten/vierten Teil um den gleichen Drehwinkel, oder eine sonstige Maßeinheit, mit dreht, wenn das erste/vierte Teil gedreht wird.

Eine drehfeste Anordnung relativ zu dem ersten oder vierten Teil kann auf verschiedenste Art und Weise ausgestaltet sein. Beispielsweise kann eine Kopplung der Drehpositions-Ermittlungseinrichtung oder des Prüfelements an das erste oder vierte Teil erfolgen. Eine Kopplung kann beliebig viele Zwischenelemente beinhalten.

In einer Variante ist/sind die Drehpositions-Ermittlungseinrichtung und/oder das Prüfelement an der Drehvorrichtung oder an der Referenzdrehvorrichtung angebracht. Wenn das erste oder vierte Teil beispielsweise ein Rotor eines (Referenz)Drehtisches ist, dann kann die Drehpositions-Ermittlungseinrichtung oder das Prüfelement direkt oder indirekt an dem Rotor, beispielsweise einem Drehteller, angebracht sein und mit dem Rotor mit drehen. Das jeweils andere Teil, also das vierte Teil wenn das erste Teil der erwähnte Rotor ist, kann dann nicht drehbar auf einem Untergrund oder an einem stationären Träger positioniert sein, und entweder die Drehpositions-Ermittlungseinrichtung oder das Prüfelement kann ebenfalls auf dem Untergrund oder an dem Träger positioniert sein, sodass es gegen das erste Teil drehfest ist. Der Untergrund kann in diesem Fall als Kopplungselement betrachtet werden. Beide Teile (erstes und viertes)können in einer anderen Variante drehbar zu einem Untergrund sein. Verschiedene Varianten werden in den Ausführungsbeispielen vorgestellt.

Mit Hilfe der relativen Drehposition der Drehpositions-Ermittlungseinrichtung und des Prüfelements, die nach Variieren der Drehpositionen von Drehvorrichtung und Referenzdrehvorrichtung verändert oder unverändert sein kann, kann die Drehposition des ersten Teils und des vierten Teils relativ zueinander bestimmt werden. Es kann entweder die Veränderung der Drehposition des ersten Teils und des vierten Teils relativ zueinander bestimmt werden, oder es kann die unveränderte Drehposition beider Teile relativ zueinander festgestellt werden.

Eine unveränderte Position des ersten Teils und des vierten Teils relativ zueinander kann so hergestellt werden, dass die Drehposition des Prüfelements oder der Drehpositions-Ermittlungseinrichtung gemäß der oben beschriebenen Variante e) so eingestellt wird, dass mit der Drehpositions-Ermittlungseinrichtung eine unveränderte relative Position des Prüfelements festgestellt wird. Dies wird auch als Einregeln auf eine unveränderte Position bezeichnet, oder als Einregeln auf die Abweichung Null. Die Begriffe "unveränderte Position" und "Abweichung Null" sind im Zusammenhang mit der Messgenauigkeit/Fehlergrenze der Drehpositions-Ermittlungseinrichtung, sowie im Zusammenhang mit der manuellen oder maschinellen Einstellungsgenauigkeit der drehbaren Teile der Drehvorrichtung und Referenzdrehvorrichtung zu sehen, d.h. eine unveränderte Position bzw. eine Abweichung Null können nur im Rahmen der Messgenauigkeit und Einstellgenauigkeit erreicht werden. Für das Verfahren sind als Drehpositions-Ermittlungseinrichtung ein Autokollimator und als Prüfelement ein Spiegel besonders geeignet.

In einer Variante ist das Prüfelement ein Reflektor, wobei die Richtung von Strahlung, die vom Reflektor reflektiert wird, abhängig von der relativen Drehposition des ersten Teils zu dem vierten Teil ist. Der Reflektor wird bei einer Änderung der Drehposition des ersten Teils zu dem vierten Teil ebenfalls gedreht. Ein Reflektor kann insbesondere verwendet werden, wenn die Drehpositions-Ermittlungseinrichtung ein Autokollimator oder ein Laserabstandssensor ist. Ein beispielhafter Reflektor ist ein Spiegel, insbesondere ein Planspiegel, oder ein Retroreflektor. Auf den Reflektor wird ein Messstrahl gesendet, der von dem Reflektor reflektiert wird.

In einer weiteren Variante ist das Prüfelement ein Messkörper, der in einem Abstand zur Drehachse und/oder nicht koaxial mit der Drehachse angeordnet ist, sodass durch die Messvorrichtung anhand einer veränderten Drehposition des Messkörpers der Drehwinkel des Messkörpers um die Achse feststellbar ist. Der Begriff "mit Abstand zur Drehachse" bedeutet, dass die Drehachse den Messkörper nicht schneidet. Der Begriff "(nicht) koaxial" ist in dieser Beschreibung gleichbedeutend mit "(nicht) konzentrisch". Nicht koaxial bedeutet, dass eine Rotationssymmetrieachse oder eine andere Symmetrieachse des Messkörpers, beispielsweise einer Kugel, nicht koaxial (oder anders ausgedrückt: nicht fluchtend) mit der Drehachse ist.

Ein Messkörper als erstes Prüfelement, der in einem Abstand zu Drehachse und/oder nicht koaxial mit der Drehachse angeordnet ist, kann jeder Körper sein, an welchem ein eindeutig definiertes Koordinatensystem bestimmt werden kann. Beispiele sind eine Kugel, ein Kugeltripel, ein Zylinder, eine Kugeltripel, ein Kegel, ein Prisma oder ein sonstiger geometrischer Körper. Insbesondere weist der Messkörper einen oder mehrere, mit einem Messsystem des KMG bestimmbare Referenzpunkte, auch bezeichnet als "Raumpunkte" auf, sodass durch Positionsbestimmung des oder der Referenzpunkte in verschiedenen Drehstellungen des Messkörpers die Drehposition bestimmbar ist. Prinzipiell kann jeder Messkörper verwendet werden, an oder in dem mit dem Messsystem eines KMG ein Bezugspunkt oder Raumpunkt eindeutig bestimmbar ist.

Beispielsweise kann der Referenzpunkt durch Antasten mit dem Tastsystem eines KMG bestimmt werden. Ist das Prüfelement eine Kugel, dann kann als Referenzpunkt beispielsweise der Kugelmittelpunkt verwendet werden, dessen Position durch mehrfaches Antasten der Kugeloberfläche bestimmt werden kann. Beispielsweise ist die Drehvorrichtung ein Drehtisch, und als Prüfelement wird eine Kugel verwendet, die seitlich der Drehtischachse positioniert ist. Es kann in einer ersten Winkelstellung die Position der Kugel und des Kugelmittelpunkts mit dem Messsystem des KMG erfasst werden, beispielsweise tastend. Nach Drehung des Drehtischtellers in eine zweite Position können die veränderte Kugelposition und der Kugelmittelpunkt erneut erfasst werden und aus den Messwerten kann der Drehwinkel des Drehtischtellers ermittelt werden. Vorzugsweise wird in den unterschiedlichen Kugelpositionen der Kugelmittelpunkt durch mehrfaches Antasten bestimmt.

Eventuell vorhandene Formfehler des Messkörpers können in einem separaten Schritt kalibriert werden und bei der Verwendung des Messkörpers der Fehler berücksichtigt werden. Darauf kann verzichtet werden, wenn an dem Messkörper immer die gleichen oder im Wesentlichen die gleichen Oberflächenpunkte vermessen werden, beispielsweise mit dem Taster eines KMG.

Beim Variieren der Drehposition der Drehvorrichtung und der Drehposition der Referenzdrehvorrichtung kann bei der Drehvorrichtung das erste Teil gegen das zweite Teil in eine erste Richtung gedreht werden und bei der Referenzdrehvorrichtung kann das dritte Teil gegen das vierte Teil in die gleiche Richtung gedreht werden. Bei gleicher Betrachtungsposition oder Blickrichtung kann beispielsweise bei der Drehvorrichtung das erste Teil gegen das zweite Teil im Uhrzeigersinn (positive Drehrichtung) gedreht werden und bei der Referenzdrehvorrichtung kann das dritte Teil gegen das vierte Teil ebenfalls im Uhrzeigersinn gedreht werden. Analog kann die Drehung jeweils im Gegen-Uhrzeigersinn (negative Drehrichtung) erfolgen. Es wird bei einer Drehung bei den Begriffen "gleichläufig" oder "gleiche Richtung" und "gegenläufig" oder "entgegengesetzte Richtung" im Allgemeinen eine gleiche Betrachtungsposition oder Blickrichtung vorausgesetzt, d.h. eine gleiche Betrachtungsposition eines außen stehenden unbeweglichen Beobachters, wobei die Betrachtungsposition des außen stehenden unbeweglichen Beobachters auch als "Inertsystem" bezeichnet wird.

Diese Variante kann beispielsweise angewandt werden, wenn als Prüfelemente zwei oder mehr Reflektoren, insbesondere plane oder im Wesentlichen plane Spiegel, verwendet werden. Zwei oder mehr Reflektoren werden auch als Reflektoranordnung bezeichnet.

Beispielsweise können bei Reflektoranordnung zwei Reflektoren oder Reflektorschichten vorhanden sein, die in einem Winkel von >180° bis 360° zueinander stehen. Der Winkel zwischen zwei Reflektoren oder Reflektorschichten wird von der reflektierenden Oberfläche eines Reflektors oder einer Reflektorschicht zu der reflektierenden Oberfläche eines anderen Reflektors oder einer anderen Reflektorschicht gemessen. Bei einem Winkel von 360° weisen Reflektoren/Reflektorschichten in umgekehrte Raumrichtungen.

Beispielsweise bei einer Reflektoranordnung mehr als zwei Reflektoren oder Reflektorschichten vorhanden sein, die quer zueinander stehen und in verschiedene Raumrichtungen weisen, wobei benachbarte Reflektoren oder Reflektorschichten vorzugsweise in einem Winkel von >180° bis <360° zueinander stehen, wobei der Winkel wie oben definiert ist. In einer speziellen bevorzugten Variante können benachbarte Reflektoren oder Reflektorschichten in einem Winkel von

$$\alpha = 360° - [(N-2)/N]*180°$$

zueinander stehen, wobei N eine ganze Zahl größer oder gleich 3 ist. Beispielsweise können die Reflektoren auf die Seitenflächen eines Prismas aufgebracht sein, dessen Grundfläche ein regelmäßiges N-Eck bildet. Eine Drehung erfolgt dann vorzugsweise so, dass das erste Teil gegen das zweite Teil um ½ * 360°/N in eine erste Richtung gedreht wird und bei der Referenzdrehvorrichtung das dritte Teil gegen das vierte Teil um ½ * 360°/N in die gleiche Richtung gedreht wird.

In einer anderen Ausführungsform wird beim Variieren der Drehposition der Drehvorrichtung und der Drehposition der Referenzdrehvorrichtung bei der Drehvorrichtung das erste Teil gegen das zweite Teil in eine erste Richtung gedreht und bei der Referenzdrehvorrichtung wird das dritte Teil gegen das vierte Teil in die dazu entgegengesetzte Richtung gedreht. Hierbei wird eine gleiche Betrachtungsposition vorausgesetzt, d.h. eine gleiche Betrachtungspostion eines außen stehenden unbeweglichen Beobachters, wobei die Betrachtungsposition des außen stehenden unbeweglichen Beobachters auch als "Inertsystem" bezeichnet wird. Bei gleicher Betrachtungsposition kann beispielsweise bei der Drehvorrichtung das erste Teil gegen das zweite Teil im Uhrzeigersinn gedreht werden und bei der Referenzdrehvorrichtung das dritte Teil gegen das vierte Teil im Gegen-Uhrzeigersinn gedreht werden. In einer Variante dieser Ausführungsform werden Teile der Drehvorrichtung relativ zueinander um den gleichen Betrag, beispielsweise Winkelbetrag oder Zählerbetrag, gedreht wie Teile der Referenzdrehvorrichtung relativ zueinander. Der Betrag der Drehung an der Drehvorrichtung wird anhand des Drehpositionsermittlungssystems der Drehvorrichtung eingestellt oder von diesem angezeigt und ist ein nomineller Betrag. In einer weiteren Variante dieser Ausführungsform werden Teile der Drehvorrichtung relativ zueinander und Teile der Referenzdrehvorrichtung relativ zueinander so gedreht, dass die Drehposition des ersten Teils und des vierten Teils relativ zueinander im Vergleich zum Zustand vor den Drehungen unverändert ist. Wie oben bereits erwähnt, bedeutet der Begriff "unverändert" eine Nicht-Änderung im Rahmen der Messgenauigkeit und Einstellgenauigkeit, beispielsweise im Rahmen der Messgenauigkeit eines Autokollimators als Drehpositions-Ermittlungseinrichtung. Eine "unveränderte Position" im Rahmen der Messgenauigkeit und Einstellgenauigkeit kann auch als "im Wesentlichen unveränderte Position" bezeichnet werden.

In einer bevorzugten Verfahrensvariante wird mindestens eine Variation der Drehposition der Drehvorrichtung in positiver Drehrichtung vorgenommen und mindestens eine Variation der Drehposition der Drehvorrichtung in negativer Drehrichtung. Diese Verfahrensvariante ist vorteilhaft für die Erkennung von Hysterese-Effekten. Den größten Einflussfaktor auf eine Hysterese hat häufig die Art der Lagerung von zueinander drehbaren Teilen, beispielsweise luftgelagert oder wälzgelagert. Weiterhin können das Drehpositionsermittlungssystem der Drehvorrichtung und das Drehpositionsermittlungssystem der Referenzdrehvorrichtung eine Hysterese verursachen.

Wenn die Drehungen der Teile so vorgenommen werden, dass nach Variieren der Drehpositionen die Lage von erstem Teil zu viertem Teil relativ zueinander unverändert ist, dann wird die Variation der Drehposition der Drehvorrichtung von der Variation der der Drehposition der Referenzdrehvorrichtung kompensiert. D.h. eine Variation der Drehposition des ersten Teils zum vierten Teil, die durch Variation der Drehposition der Drehvorrichtung bedingt ist, wird durch eine Variation der Drehposition der Referenzdrehvorrichtung kompensiert, anders ausgedrückt: wieder aufgehoben. Oder eine Variation der Drehposition des ersten Teils zum vierten Teil, die durch Variation der Drehposition der Referenzdrehvorrichtung bedingt ist, wird durch eine Variation der Drehposition der Drehvorrichtung kompensiert, anders ausgedrückt: wieder aufgehoben. Hierbei, und bei dem Verfahren überhaupt, spielt es keine Rolle, ob erst die Drehposition der Drehvorrichtung variiert wird und dann die Drehposition der Referenzdrehvorrichtung, oder umgekehrt, oder ob beide Variationen gleichzeitig erfolgen.

In einer Ausführungsform weist das Verfahren folgende Schritte auf: die Durchführung des Verfahrens mit den Schritten a)-d) und/oder e), wie oben beschrieben, und weiterhin

f) Wiederherstellung der ersten Drehposition der Drehvorrichtung, entsprechend der ersten Drehposition in Schritt a), oder im Wesentlichen einer solchen Drehposition, oder Wiederherstellung der ersten Drehposition der Referenzdrehvorrichtung, entsprechend der ersten Drehposition in Schritt b), oder im Wesentlichen einer solchen Drehposition,

g) Herstellung einer modifizierten ersten Drehposition der Referenzdrehvorrichtung, wenn die Drehvorrichtung in die erste Drehposition aus Schritt a) gebracht wurde, oder Herstellung einer modifizierten ersten Drehposition der Drehvorrichtung, wenn die Referenzdrehvorrichtung in die erste Drehposition aus Schritt b) gebracht wurde, sodass bei der modifizierten ersten Drehposition der Drehvorrichtung/Referenzdrehvorrichtung eine modifizierte Drehposition des ersten Teils und des vierten Teils relativ zueinander resultiert, wobei das vierte Teil relativ zu dem ersten Teil um einen Winkelbetrag, vorzugsweise von 360°/M, verdreht ist, im Vergleich zur ersten resultierenden Drehposition des ersten Teils und des vierten Teils relativ zueinander in Schritt c), wobei M eine ganze Zahl, vorzugsweise größer oder gleich 2, noch mehr bevorzugt 2 bis 8 ist,

h) Durchführung der Verfahrensschritte d) und/oder e), optional auch Schritt c), wie oben beschrieben, ausgehend von der ersten oder im Wesentlichen ersten Drehposition der Drehvorrichtung und der modifizierten ersten Drehposition der Referenzdrehvorrichtung, oder ausgehend von der ersten oder im Wesentlichen ersten Drehposition der Referenzdrehvorrichtung und der modifizierten ersten Drehposition der Drehvorrichtung.

Das obige Verfahren wird in dieser Erfindung auch als "Umschlagsmessung" bezeichnet, nicht nur für den Spezialfall M=2. Bei einer solchen Wiederholung der Verfahrensschritte d) und/oder e) im Rahmen der obigen Ausführungsform mit den Schritten f)-h) können Restfehler der Drehpositionsermittlung kompensiert werden, die beispielsweise in der Art des Verfahrensaufbaus, der Anordnung von verwendeten Komponenten oder von systematischen Restfehlern einer Drehpositionsermittlungseinrichtung der Referenzdrehvorrichtung begründet sein können.

Die Schritte d) und/oder e) können in Schritt h) der obigen Verfahrensvariante mehrfach durchgeführt werden, und verschiedene Drehpositionen hergestellt werden. Der Schritt c) kann optional durchgeführt werden, um die gewünschte resultierende Drehposition des ersten Teils und des vierten Teils relativ zueinander zu verifizieren, also zu verifizieren, ob bei der modifizierten Drehposition das vierte Teil relativ zu dem ersten Teil um einen Winkelbetrag von 360°/M) verdreht ist, wie in Schritt g) angegeben. Der Schritt c) dient vorzugsweise auch zur Ermittlung einer Startposition des Verfahrens. Wenn als Prüfelement ein Spiegel und als Drehpositions-Ermittlungseinrichtung ein Autokollimator verwendet wird, dann ist es vorteilhaft, den Schritt c) durchzuführen, um einen nachfolgend noch beschriebenen Offset eines Prüfelements zu bestimmen.

Nach Durchführung der vorangehend beschriebenen Schritte können noch ein oder mehr weitere, modifizierte erste Drehpositionen der Drehvorrichtung und/oder der Referenzdrehvorrichtung eingestellt werden und die Verfahrensschritte d) und/oder e), optional auch Schritt c), von dort ausgehend erneut durchgeführt werden.

Vorzugsweise wird das Verfahren mit dem Schritten f)-h) (M-1) mal durchgeführt, wobei bei jeder Durchführung in Schritt g) um einen Winkelbetrag von 360°/M verdreht wird.

Wenn beispielsweise M = 3 ist, dann kann zuerst das eingangs beschriebene Verfahren mit den Schritten a)-e) durchgeführt werden und dann (M-1) mal, also zweimal, die Schrittfolge f)-h) durchgeführt werden. Wenn die Schrittfolge f)-h) zum ersten mal durchgeführt wird, wird dabei eine erste modifizierte resultierende Drehposition des vierten Teils relativ zu dem ersten Teil hergestellt, bei der das vierte Teil relativ zu dem ersten Teil um einen Winkelbetrag von 360°/3 (M=3) verdreht ist, im Vergleich zur ersten resultierenden Drehposition des ersten Teils und des vierten Teils relativ zueinander in Schritt c). Wenn die Schrittfolge f)-h) zum zweiten Mal durchgeführt wird, wird dabei eine zweite modifizierte resultierende Drehposition des vierten Teils relativ zu dem ersten Teil hergestellt, bei der das vierte Teil relativ zu dem ersten Teil um einen Winkelbetrag von 360°/3 verdreht ist, im Vergleich zur ersten modifizierten resultierenden Drehpositionbei erstmaliger Durchführung der Schrittfolge f)-h). Bei einer erneuten Verdrehung um 360°/3 würde das vierte Teil relativ zu dem ersten Teil wieder in die resultierende Drehposition aus Schritt c) gelangen, weshalb dieser Schritt und eine erneute Verfahrensdurchführung unnötig sind, da das Verfahren aus dieser resultierende Drehposition heraus bereits durchgeführt wurde. Analog zum vorangehenden Beispiel kann bei M=4, 5 oder 6 die Schrittfolgef)-h) jeweils (M-1) mal durchgeführt werden, die resultierenden (modifizieren) Drehpositionen des ersten und des vierten Teils zueinander, jeweils um 360°/4, 360°/5 oder 360°/6 geändert werden.

In einem weiteren Aspekt betrifft die Erfindung eine Anordnung zur Ermittlung von Fehlern eines Drehpositionsermittlungssystems, das Drehpositionen von Teilen einer Drehvorrichtung für ein Koordinatenmessgerät misst, insbesondere zur Durchführung des zuvor beschriebenen Verfahrens, wobei die Anordnung aufweist:

- die Drehvorrichtung, die ein erstes Teil und ein zweites Teil aufweist, welche relativ zueinander um eine Drehachse der Drehvorrichtung drehbar sind,

- das Drehpositionsermittlungssystem,

- eine Referenzdrehvorrichtung mit zwei relativ zueinander drehbaren Teilen, wobei eines der zwei Teile ein drittes Teil ist, das bezüglich der Drehachse drehfest mit dem zweiten Teil der Drehvorrichtung gekoppelt ist, und das andere der zwei Teile ein viertes Teil ist, das relativ zu dem dritten Teil um eine Drehachse der Referenzdrehvorrichtung drehbar ist, wobei vorzugsweise die Drehachse der Referenzdrehvorrichtung koaxial oder im Wesentlichen koaxial zur Drehachse der Drehvorrichtung ist,

- eine Drehpositions-Ermittlungseinrichtung zur Ermittlung einer resultierenden Drehposition des ersten Teils und des vierten Teils relativ zueinander bezüglich der Drehachse,

- eine Fehler-Ermittlungseinrichtung zur Ermittlung des Fehlers des Drehpositionsermittlungssystems, wobei die Ermittlungseinrichtung ausgestaltet ist,

  • aus der veränderten resultierenden Drehposition des ersten Teils und des vierten Teils relativ zueinander, und optional aus

    i) den Drehpositionen der Drehvorrichtungoder der Änderung der Drehposition der Drehvorrichtung, und
    ii) aus den Drehpositionen der Referenzdrehvorrichtung, oder der Änderung der Drehposition der Referenzdrehvorrichtung, und/oder alternativ oder zusätzlich

  • aus den Drehpositionen der Drehvorrichtung oder der Änderung der Drehposition der Drehvorrichtung, und aus den Drehpositionen der Referenzdrehvorrichtung oder der Änderung der Drehposition der Referenzdrehvorrichtung,
    den Drehpositionsfehler des Drehpositionsermittlungssystems zu ermitteln.

Zu der Anordnung und den Komponenten der Anordnung wird auf die vorherige Offenbarung des Verfahrens Bezug genommen, worin bereits Ausgestaltungen der Anordnung zur Durchführung des Verfahrens offenbart sind.

Beispiele einer Drehpositions-Ermittlungseinrichtung wurden oben bereits genannt. Es ist auch möglich, ein Koordinatenmessgerät als Drehpositions-Ermittlungseinrichtung zu verwenden. In einer weiteren Variante können als Drehpositions-Ermittlungseinrichtung ein- oder mehrere Abstandssensoren verwendet werden.

Bei der vorangehend genannten Anordnung ist vorzugsweise an der Drehvorrichtung und/oder an der Referenzdrehvorrichtung ein Prüfelement angebracht, dessen Drehposition oder Drehpositionsänderung mit der Drehpositions-Ermittlungseinrichtung erfasst wird. Das Prüfelement ist vorzugsweise an dem ersten Teil oder an dem vierten Teil angebracht. In einer Variante ist das Prüfelement ein Reflektor, der auf ihn auftreffende Strahlung abhängig von der relativen Drehposition des ersten Teils zu dem vierten Teil reflektiert. Ein Reflektor kann insbesondere verwendet werden, wenn die Drehpositions-Ermittlungseinrichtung ein Autokollimator oder ein Laserabstandssensor ist. Ein beispielhafter Reflektor ist ein Spiegel oder ein Retroreflektor.

In einer weiteren Variante ist das das Prüfelement ein bereits beschriebener Messkörper, der in einem Abstand zu Drehachse und/oder nicht koaxial mit der Drehachse angeordnet ist, sodass durch die Messvorrichtung anhand einer veränderten Drehposition des Messkörpers der Drehwinkel des Messkörpers um die Achse feststellbar ist.

III. Halteelement

Ein nachfolgend offenbartes Halteelement kann in dem Verfahren zu II. eingesetzt werden oder in einer gemeinsamen Anordnung mit dem oben beschriebenen Prüfkörper der erfindungsgemäßen Anordnung eingesetzt werden. Das Halteelement ermöglicht eine Ausrichtung einer Drehvorrichtung zur Ermittlung von Bewegungsfehlern.

Angegeben wird ein Halteelement zum Halten einer Drehvorrichtung, die ein bezüglich einer Drehachse drehbares Teil aufweist, oder die eine Mehrzahl von um Drehachsen drehbare Teile aufweist, oder zum Halten einer Sensoranordnung, die eine Mehrzahl Sensoren aufweist, wobei die Sensoren ausgestaltet sind, Abweichungen bezüglich zumindest eines Bewegungs-Freiheitsgrades der Drehvorrichtung zu messen,
wobei das Halteelement aufweist:

- eine erste Halterung zum Halten der Drehvorrichtung oder der Sensoranordnung,
- einen Träger, an dem die erste Halterung befestigt ist, wobei der Träger zumindest einen ersten Kopplungsbereich und einen zweiten Kopplungsbereich aufweist, über die das Halteelement an eine Basis ankoppelbar ist, und

wobei der erste Kopplungsbereich ausgestaltet ist, das Halteelement in einer ersten Position und/oder Orientierung an der Basis anzukoppeln, sodass die von dem Halteelement gehaltene Drehvorrichtung oder Sensoranordnung bei Ankopplung des ersten Kopplungsbereichs an der Basis in einer ersten Position und/oder Orientierung angeordnet ist, und wobei der zweite Kopplungsbereich ausgestaltet ist, das Halteelement in einer zweiten Position und/oder Orientierung an der Basis anzukoppeln, sodass die von dem Halteelement gehaltene Drehvorrichtung oder Sensoranordnung bei Ankopplung des zweiten Kopplungsbereichs an der Basis in einer zweiten Position und/oder Orientierung angeordnet ist.

Die Position und/oder Orientierung des Halteelements oder auch andere in dieser Beschreibung genannte Positionen und Orientierungen sind vorzugsweise reproduzierbar. Statt des Begriffes "Orientierung" kann und wird auch der synonyme Begriff "Ausrichtung" gebraucht.

Bei einer Drehvorrichtung mit einer Mehrzahl von um Drehachsen drehbaren Teilen sind die Drehachsen vorzugsweise nicht koaxial zueinander.

Nach einer grundlegenden Idee ist das Halteelement ein Zwischenelement, womit die Drehvorrichtung oder Sensoranordnung in vorzugsweise reproduzierbarer Lage auf einer Basis angeordnet werden kann. Statt die Drehvorrichtung direkt auf der Basis anzuordnen und auszurichten wird das Halteelement, an dem die Drehvorrichtung oder Sensoranordnung befestigt ist, auf der Basis angeordnet. Das Halteelement ermöglicht durch seine Ausgestaltung mehrere, vorzugsweise reproduzierbare, Lagen auf der Basis, je nachdem wie es relativ zur Basis orientiert wird, insbesondere mit welcher Seite es auf die Basis gelegt oder an der Basis angekoppelt wird. Bei Umorientierung des Halteelements wird die Drehvorrichtung oder die Sensoranordnung ebenfalls umorientiert, vorzugsweise reproduzierbar, da eine feste Verbindung zwischen dem Halteelement und der Drehvorrichtung oder der Sensoranordnung existiert.

Durch die Ausgestaltung der Kopplungsbereiche des Halteelements ist es möglich, das Halteelement sowohl in einer vorzugsweise reproduzierbaren Orientierung und vorzugsweise auch in einer reproduzierbaren Position an der Basis anzukoppeln. Entsprechend kann auch die Drehvorrichtung oder die oder Sensoranordnung in einer reproduzierbaren Orientierung und vorzugsweise auch in einer reproduzierbaren Position relativ zum Halter und damit auch zur Basis orientiert werden.

Durch das Halteelement ergeben sich insbesondere folgende Vorteile:

- Die Rüstzeiten werden minimiert. Es kann schnell zwischen der Messung/Qualifizierung zweier verschiedener Achsen umgeschaltet werden, ohne die Drehvorrichtung ausbauen zu müssen.
- Es können mehrere Halteelemente verwendet werden, zur Prüfung mehrerer Drehvorrichtungen. Beispielsweise kann eine Drehvorrichtungen in einem Halteelement vermessen werden, während eine andere Drehvorrichtung in einem weiteren Halteelement vorbereitet wird
- Die Kopplungsbereiche gewährleisten eine immer gleiche räumliche Orientierung der Drehvorrichtung,
- Die Kopplungsbereiche gewährleisten eine immer gleiche Position und/oder Orientierung der Drehvorrichtung,
- Die Drehvorrichtung kann in der späteren Einbaulage, die bei der Messung mit der Drehvorrichtung verwendet wird, geprüft werden.
- Das Halteelement kann zur Bestimmung der Nachgiebigkeit eines Drehschwenkgelenks in verschiedenen Einbaulagen, auch in Kombination mit angepassten Prüfkörpern, verwendet werden

- Mit dem Halteelement, insbesondere mit einem nachfolgend noch beschriebenen winkelförmigen Träger, lässt sich eine einstufige Drehvorrichtung, z.B. ein Drehtisch, in verschiedenen Einbaulagen, wie zum Beispiel horizontal und vertikal, qualifizieren,
- Eine Sensoranordnung kann so orientiert werden, dass eine Drehvorrichtung, an der ein Prüfkörper angebracht ist (z.B. ein Prüfkörper, der ein Doppelkugelnormal aufweist) in seiner Einbaulage qualifiziert werden kann. In dieser Variante ist die Drehvorrichtung zur späteren Messung beispielsweise in ein Koordinatenmessgerät eingebaut und an einer der Achsen ist ein Prüfkörper angebracht. Die Sensoranordnung kann mit dem Halteelement passend zum Prüfkörper hin orientiert werden.

Im Speziellen entspricht die erste Orientierung, in der die Drehvorrichtung angeordnet ist, einer vorgegebenen Orientierung einer ersten Drehachse der Drehvorrichtung, und die zweite Orientierung, in der die Drehvorrichtung angeordnet ist, entspricht einer vorgegebenen Orientierung einer zweiten Drehachse der Drehvorrichtung, sodass bei Ankopplung des ersten Kopplungsbereichs an der Basis und bei Ankopplung des zweiten Kopplungsbereichs an der Basis jeweils eine Drehachse der Drehvorrichtung in ihrer vorgegebenen Orientierung ausgerichtet ist. Eine vorgegebene Orientierung kann prinzipiell jede Orientierung sein, die zur Durchführung einer Messung mit oder an der Drehachse erforderlich oder erwünscht ist. Die vorgegebene Orientierung der ersten Drehachse der Drehvorrichtung und die vorgegebene Orientierung der zweiten Drehachse der Drehvorrichtung können relativ zu einem externen Bezug gleich sein. An anderem Ort in dieser Beschreibung wird ein Verfahren vorgestellt, wo eine Drehachse einer Drehvorrichtung in eine bestimmte Orientierung relativ zu der Drehachse einer Referenzdrehvorrichtung gebracht wird, sodass die betreffende Achse der Drehvorrichtung und die Achse der Referenzdrehvorrichtung koaxial oder in Wesentlichen koaxial zueinander sind. Mit dem Verfahren können Bewegungsfehler der Drehvorrichtung bestimmt werden, insbesondere Drehpositionsfehler. Wenn die Basis ein Teil einer weiteren Drehvorrichtung, insbesondere eines Drehtisches ist, wie unten noch beschrieben, dann kann also die erste Orientierung derart sein, dass die erste Drehachse konzentrisch oder koaxial, d.h. fluchtend, mit der Drehachse des Drehtisches ist. Entsprechend kann die zweite Orientierung derart sein, dass die zweite Drehachse konzentrisch oder koaxial, d.h. fluchtend, mit der Drehachse des Drehtisches ist, nach entsprechender Umorientierung bzw. Neuausrichtung des Halteelements und der damit verbundenen Drehvorrichtung.

In einer weiteren, alternativen oder ergänzenden Variante ist die vorgegebene Orientierung einer Drehachse der Drehvorrichtung eine Orientierung zu einer extern fixierten Sensoranordnung. Beispielsweise kann an einem um eine erste Drehachse drehbaren Teil der Drehvorrichtung ein Prüfkörper angebracht sein, der beispielsweise ein Doppelkugelnormal aufweist. Der Prüfkörper, der zusammen mit der Drehvorrichtung an dem Halteelement angebracht ist, wird mit Hilfe des Halteelements in optimaler Weise zu der Sensoranordnung hin orientiert und Bewegungsfehler der ersten Drehachse können ermittelt werden. Wenn Bewegungsfehler der zweiten Drehachse ermittelt werden sollen, kann der Prüfkörper an einem um die zweite Drehachse drehbaren Teil der Drehvorrichtung angebracht werden und mit Hilfe des Halteelements können der Prüfkörper und die Drehvorrichtung umorientiert werden, bis wiederum eine optimale Orientierung des Prüfkörpers zur Sensoranordnung hergestellt ist.

Die Drehvorrichtung, ist beispielsweise ein Drehtisch, ein Drehgelenk mit einer Drehachse, oder ein Dreh-Schwenk-Gelenk mit zwei oder mehr Drehachsen.

Die Sensoranordnung weist beispielsweise Sensoren auf, die in verschiedene Raumrichtungen orientiert sind. Weiterhin kann die Sensoranordnung einen Sensorhalter aufweisen. Bevorzugte Sensoren sind Abstandssensoren, die auch an anderer Stelle dieser Beschreibung genannt sind und die den Abstand zu einem an anderem Ort dieser Beschreibung beschriebenen Prüfelement messen, wobei das Prüfelement Teil eines ebenfalls an anderem Ort beschriebenen Prüfkörpers sein kann, wobei der Prüfkörper an einer Drehvorrichtung mit einer zu qualifizierenden Drehachse angebracht sein kann..

Die Erfindung bezieht sich insbesondere auf Drehvorrichtungen, die in Koordinatenmessgeräten (nachfolgend abgekürzt als KMG), Werkzeugmaschinen, Robotern und anderen Anwendungen, bei denen es auf hohe Genauigkeit ankommt, einsetzbar sind. Die zueinander drehbaren Teile der Drehvorrichtung sind auch nach Befestigung der Drehvorrichtung an dem Haltelement relativ zueinander drehbar. Beispielsweise wird eines der Teile an dem Haltelement befestigt bzw. von dem Haltelement gehalten, während andere Teile relativ zu diesem Teil beweglich sind.

Die Basis kann ein beliebiger Untergrund sein, auf welchem die Drehvorrichtung zwecks Qualifizierung einer Drehachse positioniert werden soll.

Die Oberfläche der Basis, auf welche das Halteelement aufgesetzt und angekoppelt wird, wird auch als "Spannfläche" bezeichnet.

Insbesondere ist die Basis ein drehbarer Teil einer weiteren Drehvorrichtung, insbesondere eines Drehtisches oder eines weiteren Dreh (Schwenk) Gelenks.

Im Speziellen ist die Basis der Drehteller eines Drehtisches. Der Drehtisch ist in einer weiteren speziellen Variante ein sogenannter Referenzdrehtisch, dessen Drehposition oder Drehpositionsänderung genau bekannt ist. Wenn die Drehvorrichtung mittels des Halteelements auf einem Referenzdrehtisch positioniert wird, kann ein spezielles Verfahren zur Ermittlung von Drehfehlern, insbesondere des Drehpositionsfehlers der Drehvorrichtung durchgeführt werden, das nachfolgend und in den Ausführungsbeispielen noch beschrieben ist.

Das Halteelement weist einen Träger auf, der ein zentraler tragender Teil des Halteelements ist. Der Träger weist die bereits erwähnten Kopplungsbereiche auf. Der Träger weist eine oder mehrere Halterungen auf, woran eine Drehvorrichtung angebracht werden kann. Soll beispielsweise eine zweistufige Drehvorrichtung (Drehvorrichtung mit zwei Drehachsen) in verschiedenen Einbaulagen, beispielsweise horizontal und vertikal, geprüft werden, so ist ein zweiter Halter vorteilhaft, der zum ersten Halter entsprechend der gewünschten Einbaulage angeordnet ist.

Der Träger ist so gestaltet, dass das Halteelement in mindestens zwei, vorzugsweise reproduzierbaren Orientierungen an oder auf der Basis positioniert werden kann.

In einer speziellen Ausführungsform weist der Träger einen ersten Schenkel und einen zweiten Schenkel auf, die winklig zueinander stehen, wobei eine Halterung einem der Schenkel befestigt ist, vorzugsweise an der Innenseite des Schenkels, und wobei der erste Schenkel den ersten Kopplungsbereich aufweist, vorzugsweise an seiner Außenseite, und der zweite Schenkel den zweiten Kopplungsbereich aufweist, vorzugsweise an seiner Außenseite. Ein solcher Winkelträger ist vorteilhaft für zwei und mehrstufige Drehschwenkgelenke. Der Winkel zwischen den Schenkeln ist vorzugsweise gleich oder im Wesentlichen gleich zu dem Winkel zwischen zwei Drehachsen einer zu qualifizierenden Drehvorrichtung, beispielsweise beträgt der Winkel 90° bei einem Dreh-Schwenk-Gelenk mit Drehachsen, die im 90° Winkel zueinander stehen. Der Winkelträger ist vorzugsweise aus massivem Material relativ hoher Dichte, insbesondere Metall, bevorzugt Stahl. Eine massive und massereiche Ausführung ist vorteilhaft zur Verhinderung von Verformungen des Trägers, z.B. durch eventuelle Antastkräfte während der Qualifizierung. Sofern Verformungen des Trägers auftreten, ist aber auch eine rechnerische Korrektur möglich, wenn Gewichtskräfte und Momente, bzw. Antastkräfte und Hebellängen bekannt sind. Ferner ist eine massive und massereiche Ausführung des Trägers vorteilhaft für eine stabile Positionierung und Lagerung auf einer Basis.

Grundsätzlich kann der Träger neben einem ersten und einem zweiten Kopplungsbereich auch noch weitere Kopplungsbereiche aufweisen. In einer Ausführungsform weist der Träger einen dritten Kopplungsbereich auf, über den das Halteelement an die Basis ankoppelbar ist, wobei der dritte Kopplungsbereich ausgestaltet ist, das Halteelement in einer dritten Position und/oder Orientierung an der Basis anzukoppeln, sodass die von dem Halteelement gehaltene Drehvorrichtung oder Sensoranordnung bei Ankopplung des dritten Kopplungsbereichs an der Basis in einer dritten Position und/oder Orientierung angeordnet ist. Dieses Prinzip kann für noch weitere Kopplungsbereiche (vierte, fünfte etc.) fortgesetzt werden.

Ein dritter Kopplungsbereich ist vorteilhaft, wenn ein Dreh-Schwenk-Gelenk mit drei Drehachsen qualifiziert werden soll. In einer Ausführungsform weist der Träger zusätzlich zu den oben beschriebenen Schenkeln einen dritten Schenkel auf, der winklig zu dem ersten Schenkel und/oder dem zweiten Schenkel steht und der einen dritten Kopplungsbereich aufweist, vorzugsweise an seiner Außenseite, über die das Halteelement an die Basis ankoppelbar ist. Der Winkel des dritten Schenkels zu den anderen beiden Schenkeln bildet beispielsweise den Winkel ab, in dem eine dritte Drehachse einer Drehvorrichtung zu den anderen beiden Drehachsen steht.

In einer Variante weist ein zuvor beschriebener Winkelträger einen dritten, zu den beiden anderen Schenkeln orthogonalen Schenkel auf, wobei die drei Schenkel zu einem Halb-Würfel verbunden sein können. Jeder der Schenkel, oder jede der Seiten eines Halbwürfels, weist an der Außenseite einen Kopplungsbereich auf. Ein solcher Trägeraufbau ist bei dreiachsigen Drehschwenkgelenken vorteilhaft.

In einer weiteren Variante ist der Träger winkelförmig und der erste, der zweite und der dritte Schenkel sind C-förmig angeordnet, wobei die Schenkel beispielsweise in einem rechten Winkel zueinander stehen.

In einer Ausführungsform sind an den Kopplungsbereichen Kopplungsmittel angeordnet. Vorzugsweise weist der erste Kopplungsbereich erste Kopplungsmittel auf und der zweite Kopplungsbereich weist zweite Kopplungsmittel auf. Wenn ein dritter Kopplungsbereich vorhanden ist, so sind an diesem vorzugsweise dritte Kopplungsmittel angeordnet.

Die Kopplungsmittel sind vorzugsweise an dem oben beschriebenen Träger angebracht, beispielsweise an den Außenseiten des Trägers, insbesondere an Außenseiten von Schenkeln eines oben beschriebenen Winkelträgers.

Die Kopplungsmittel, auch bezeichnet als Kopplungselemente, sind vorzugsweise formschlüssig mit Haltelementen verbindbar, die an der Basis angeordnet sind. Hierbei können ein oder mehrere Bewegungsfreiheitsgrade freigehalten werden, beispielsweise um eine thermische Ausdehnung des Haltelements, insbesondere des Trägers, zu ermöglichen.

In einer Ausführungsform sind einer oder mehrere der Kopplungsbereiche als Dreipunktlagerung ausgestaltet. Eine Dreipunktlagerung kann aus drei Lagermitteln gebildet sein, beispielsweise Kugeln Bolzen oder Stifte. Insbesondere sind erste Kopplungsmittel und/oder zweite Kopplungsmittel und/oder dritte etc.Kopplungsmittel als Dreipunktlagerung ausgestaltet oder sind Teil einer Dreipunktlagerung. Eine Dreipunktlagerung kann durch Kugeln ausgeführt sein, die auf der Gegenseite (Basis) in je eine Vertiefung eingreifen, oder insbesondere in Walzenpaare oder Kugeltrippel eingreifen, die an der Basis angeordnet sind.

In einer vorteilhaften Variante ist die Dreipunktlagerung so ausgeführt, dass

- Ein erstes Lagermittel auf Seiten des Trägers, beispielsweise eine Kugel, in eine auf Seite der Basis angeordnete Vertiefung eingreift, die keinen seitlichen Bewegungsfreiheitsgrad ermöglicht, also z.B. in ein Kugeltripel eingreift,
- Ein zweites Lagermittel auf Seiten des Trägers, beispielsweise eine Kugel in eine auf Seite der Basis angeordnete Vertiefung eingreift, die einen seitlichen Bewegungsfreiheitsgrad ermöglicht, also z.B. in ein Walzenpaar eingreift, und
- Ein drittes Lagermittel auf Seiten des Trägers, beispielsweise eine Kugel oder eine Schraubenspitze, auf einer planen oder im Wesentlichen planen Oberfläche auf der Basis aufsetzt, beispielsweise auf eine an der Basis angebrachte Hartmetallscheibe aufsetzt.

Bei dieser Ausführungsform ist gewährleistet, dass eine eventuell vorhandene thermische Ausdehnung des Trägers immer in zwei definierte Richtungen erfolgt.

Vorzugsweise wird eine Zugkraft zwischen dem Halteelement und der Basis erzeugt, was auch als "Vorspannen" bezeichnet wird. Durch eine solche Zugkraft kann ein Herausspringen des Halteelements aus einer Lagerung verhindert werden. Ein Herausspringen aus der Lagerung kann beispielsweise je nach Orientierung des Halteelements und einer daran befestigten Drehvorrichtung durch deren Gewicht erfolgen, oder durch eine Bewegung des Halteelements, wenn die Basis beispielsweise ein Drehteller eines Referenzdrehtisches ist, wie in den Ausführungsbeispielen beschrieben, oder von Teilen der Drehvorrichtung.

Durch das Vorspannen wird die Reproduzierbarkeit der Orientierung des Haltelements und einer daran angebrachten Drehvorrichtung erhöht. Eine Vorspannung kann z.B. magnetisch erfolgen, vorzugsweise an einem zentralen Punkt inmitten mehrerer Lagerstellen, oder durch das Eigengewicht des Haltelements. Es kann eine Zusatzmasse am Haltelement angebracht sein, um die Masse des Haltelements zu erhöhen. Für eine magnetische Vorspannung kann das Haltelement einen Magneten aufweisen, der beispielsweise in das Haltelement eingebaut oder eingelassen sein kann. Ein solcher Magnet kann eine Anziehungskraft auf einen ferromagnetischen Untergrund, beispielsweise auf eine ferromagnetische Basis ausüben. Die Vorspannung kann auch sinnvoll sein, wenn während der Qualifizierung der Drehachse große Beschleunigungen auftreten, z.B. als Folge von Ausrückbewegungen, bei rastenden Drehschwenkgelenken. Weitere Mittel zur Vorspannung sind Schrauben, Haken, ein Bajonett oder eine Feder.

An Stelle einer Dreipunktlagerung kann das Halteelement auch auf andere Weise örtlich auf der Basis fixiert sein, beispielsweise mit einem oder mehreren Anschlägen, Haken, Schrauben, Rastmitteln etc.

Einer oder mehrere der Kopplungsbereiche können ein oder mehr Justiermittel zur Justierung der Ausrichtung des Halteelements auf der Basis aufweisen. Beispiele hierfür sind Schraubtriebe, wie Stellschrauben, Nivellierschrauben. Ein Justiermittel kann auch gleichzeitig ein Lagermittel sein, beispielsweise einer Dreipunktlagerung. Beispielsweise kann einer der Lagerpunkte eine Spitze einer Nivellierschraube sein, die auf einer Gegenfläche an der Basis aufliegt.

Mit dem oder den Justiermitteln kann beispielsweise die Koaxialität zwischen einer Drehachse der Drehvorrichtung und der Drehachse eines Referenzdrehtisches eingestellt werden, wenn ein Verfahren zur Bestimmung des Drehpositionsfehlers der Drehvorrichtung durchgeführt werden soll, das nachfolgend und in den Ausführungsbeispielen noch beschrieben ist.

Das Halteelement weist eine Halterung zum Halten der Drehvorrichtung auf, die an dem Träger befestigt ist. Die Halterung ist vorzugsweise so ausgestaltet, dass eine Drehvorrichtung mit einer daran vorgesehenen Anschlussstelle passend verbindbar mit der Halterung ist. Eine Anschlussstelle der Drehvorrichtung ist eine mechanische und vorzugsweise auch elektrische Schnittstelle der Drehvorrichtung, womit die Drehvorrichtung in ein Koordinatenmessgerät oder eine Werkzeugmaschine eingebaut werden kann. Beispielsweise wird ein Dreh-Schwenk-Gelenk für ein Koordinatenmessgerät mit einer Halterung auf Seiten des Koordinatenmessgeräts angeschlossen, die beispielsweise an einer Pinole vorgesehen ist. Eine übliche Schnittstelle an einer Drehvorrichtung weist als mechanische Elemente eine Dreipunktlagerung auf, beispielsweise drei Kugelpaare, in die jeweils eine Walze auf Seite des KMG, insbesondere an einer Pinole, eingreift, und elektrische Kontakte. Die Halterung des Halteelements kann zumindest mechanisch identisch zu einer Halterung ausgeführt sein, die zur Befestigung der Drehvorrichtung an einem KMG ist, vorzugsweise auch identisch in den elektrischen und, sofern vorhanden, auch pneumatischen Kontakten. Mit anderen Worten weist das Haltelement eine Schnittstelle in Form einer Halterung auf, die identisch ist zur Schnittstelle an einem KMG, an welcher die Drehvorrichtung zum Zweck des Messbetriebs anbringbar ist.

Das Halteelement kann verschiedene Halterungen aufweisen, die in Form verschiedener Schnittstellen ausgestaltet sind. So ist es möglich, verschiedene Drehvorrichtungen mit jeweils anderer (Gegen)Schnittstelle an dem Halteelement anzubringen. Verschiedene Halterungen bzw. verschiedene Schnittstellen können im Fall eines winkelförmigen Trägers beispielsweise an verschiedenen Schenkeln des Trägers angebracht sein, insbesondere an den Innenseiten der Schenkel. Entsprechend kann an einem dritten Schenkel, wie oben beschrieben, eine dritte Halterung, die wiederum als eine noch eine andere Schnittstelle ausgestaltet ist, angebracht sein.

In einer Ausführungsform weist das Halteelement eine oder mehrere Einrichtungen, zur Energieversorgung der Drehvorrichtung oder der Sensoranordnung auf. Beispiele hierfür sind elektrische Anschlüsse und/oder elektrische Leitungen, womit und wodurch eine an dem Halteelement befestigte Drehvorrichtung oder Sensoranordnung mit Strom versorgt werden kann, um eine Drehung von Teilen der Drehvorrichtung zu bewirken. Kontakte und/oder Leitungen können beispielsweise in/an dem Träger angeordnet sein.

In einer speziellen Ausführungsform ist die Einrichtung zur Energieversorgung in einem Kopplungsbereich des Halteelements angeordnet oder in mehreren Kopplungsbereichen, insbesondere auf einer oder mehreren Außenseiten des Trägers. Die nachfolgende Beschreibung der Einrichtung bezieht sich auf einen Kopplungsbereich. Für andere Kopplungsbereiche kann eine Einrichtung zur Energieversorgung analog ausgeführt sein.

In einer Variante weist die Einrichtung zur Energieversorgung ein erstes Element einer ersten Steckverbindung, das im Kopplungsbereich angeordnet ist und das mit einem zweiten Element der ersten Steckverbindung, das an der Basis angeordnet ist, verbindbar ist. Die Elemente der Steckverbindung weisen vorzugsweise eine oder mehr elektrische Kontaktstellen auf.

Die Einrichtung zur Energieversorgung kann ein erstes Element einer zweiten Steckverbindung aufweisen, das an dem Träger auf der Seite der Halterung für die Drehvorrichtung angeordnet ist und das mit einem zweiten Element der zweiten Steckverbindung, das an der Drehvorrichtung oder der Sensoranordnung angeordnet ist, verbindbar ist. Die Elemente der Steckverbindung weisen vorzugsweise eine oder mehr elektrische Kontaktstellen auf.

Die Einrichtung zur Energieversorgung kann eine oder mehr Kontakte bzw. Kontaktstellen aufweisen, die jeweils mit einer oder mehr Gegenkontaktstellen bzw. Gegenkontakten, die an der Basis angeordnet sind, verbindbar sind, wobei über die Gegenkontakte, die an der Basis angeordnet sind, der Drehvorrichtung Energie zugeführt wird. Eine oder mehrere der Kontaktstellen bilden in einer Variante auch gleichzeitig ein Lagermittel einer oben bereits beschriebenen Dreipunktlagerung. Hierbei dient ein Lagermittel einer Dreipunktlagerung nicht nur der mechanischen Lagerung des Halteelements auf der Basis sondern auch als Kontakt für die Energieversorgung der an dem Halteelement angebrachten Drehvorrichtung zum Betrieb der Drehvorrichtung. Beispielsweise kann ein Lagermittel in Form einer elektrisch Leitfähigen Kugel oder einer elektrisch leitfähigen Schraube auch gleichzeitig als elektrische Kontaktstelle dienen.

An oder in dem Träger des Halteelements können ein oder mehrere Versorgungsleitungen angeordnet sein, welche sich von dem Kontakt/Lagermittel bis zu der Halterung für die Drehvorrichtung erstrecken. In der Halterung kann/können die Versorgungsleitung(en) wiederum in ein oder mehr Kontaktstellen münden, an welche die Drehvorrichtung angeschlossen wird. Die Kontaktstellen an der Halterung können Teil einer zuvor beschriebenen Schnittstelle zur Anbringung der Drehvorrichtung sein. In oder an der Basis können ebenfalls Versorgungsleitung(en) angeordnet sein, welche Strom von einer externen Stromquelle zu den Gegenkontaktstellen an der Basis leiten.

In einer Ausführungsform der Erfindung weist das Halteelement ein oder mehrere Erkennungsmittel auf, die zur Erkennung der Orientierung des Halteelements an der Basis dienen. Das/die Erkennungsmittel können stattdessen oder zusätzlich auch zur Erkennung des Typs der Drehvorrichtung oder der Sensoranordnung ausgestaltet sein. Beispielsweise kann mit dem Erkennungsmittel erkannt werden, ob es sich bei der Drehvorrichtung und einen Drehtisch oder ein Drehschwenk-Gelenk handelt und/oder es kann erkannt werden, um welchen Typ Drehtisch oder Drehschwenk-Gelenk es sich handelt. Beispielsweise kann erkannt werden, welche Sensoren die Sensoranordnung aufweist und/oder in welcher räumlichen Orientierungen einzelne Sensoren angeordnet sind. Beispiele von Erkennungsmitteln sind ein Barcode, ein QR- oder Matrixcode, oder eine Sensorik. Eine Sensorik kann zum Beispiel als Reflektoren oder Schaltnocken oder Reed-Kontakte oder Radio Frequency Identifier (RFID) ausgeführt sein, über die eine Erkennung der Orientierung ermöglicht ist. Es ist möglich, eine solche Sensorik in eine Dreipunktlagerung zu integrieren. Auflagepunkte der Lagerung können als Kontakte für ein Erkennungsmittel dienen, oder ein Erkennungsmittel kann im Zentrum einer Dreipunktlagerung angeordnet sein.

Mit Hilfe des Erkennungsmittels können bei einer Qualifizierung einer Achse der Drehvorrichtung automatisch z.B. zur jeweiligen Achse passende Prüfpläne aktiviert werden und/oder die ermittelten Korrekturwerte der passenden Achse zugeordnet werden. Das Erkennungsmittel kann auch allein oder zusätzlich so ausgestaltet sein, dass zwischen verschiedenen Typen eines Halteelements oder Trägers unterschieden werden kann bzw. ein bestimmter Typ erkannt werden kann, beispielsweise ein Typ, der für eine bestimmte Drehvorrichtung passend ausgestaltet ist.

In einer Ausführungsform weist der Träger des Halteelements eine oder mehrere Öffnungen zum Durchlass einer Messstrahlung auf. Wenn des Halteelement während einer Messung relativ zu einem Strahlung aussendenden Sensor, wie einem Autokollimator oder einem Laserabstandssensor, gedreht wird, können in bestimmten Drehpositionen Teile des Trägers den Messstrahl verdecken, weshalb eine solche Durchtrittsöffnung von Vorteil ist. Insbesondere kann ein Träger Schenkel aufweisen und in einem oder mehreren der Schenkel können jeweils eine oder mehrere Öffnungen angeordnet sein.

In einem weiteren Aspekt betrifft die Erfindung eine Anordnung, aufweisend

- ein Halteelement wie vorangehend beschrieben,
- eine erste Drehvorrichtung oder eine Sensoranordnung, die von dem Halteelement gehalten wird,
- eine Basis, die ausgestaltet ist zum Ankoppeln des Halteelements in zumindest zwei verschiedenen, vorzugsweise reproduzierbaren Posen, wobei eine Pose durch die Orientierung und Position des Halteelements definiert ist.

Die Anordnung kann eine Bewegungsfehler-Ermittlungseinrichtung mit zumindest einen Messsensor aufweisen, die ausgestaltet ist, eine Messgröße zu messen, die eine Ermittlung von Drehfehlern der Drehvorrichtung ermöglicht, wobei das Halteelement derart auf eine zu haltende Drehvorrichtung abgestimmt ist, dass der zumindest eine Messsensor in der Lage ist, beispielsweise ohne Veränderung seiner Position und Orientierung relativ zu der Basis, die Messgröße zu messen, wenn das Halteelement mit der gehaltenen Drehvorrichtung in einer ersten der vorzugsweise reproduzierbaren Posen ist, und die Messgröße zu messen, wenn das Halteelement mit der gehaltenen Drehvorrichtung in einer zweiten der vorzugsweise reproduzierbaren Posen ist. Eine spezielle Bewegungsfehler-Ermittlungseinrichtung ist eine Drehpositions-Ermittlungseinrichtung, die nachfolgend noch anhand eines Verfahrens zur Ermittlung eines Drehpositionsfehlers einer Drehvorrichtung beschrieben ist. Bei dem Verfahren wird eine Drehvorrichtung mit einer Referenzdrehvorrichtung gekoppelt. Im Speziellen ist die Basis der Drehteller eines Referenzdrehtisches, dessen Drehposition oder Drehpositionsänderung genau bekannt ist. Wenn die Drehvorrichtung mittels des Halteelements auf einem Referenzdrehtisch positioniert wird, kann ein spezielles Verfahren zur Ermittlung von Drehfehlern, insbesondere des Drehpositionsfehlers, der Drehvorrichtung durchgeführt werden, das nachfolgend und in den Beispielen näher beschrieben ist.

Ferner kann die Anordnung neben den genannten Elementen auch einen Prüfkörper aufweisen, der mit der Drehvorrichtung verbunden ist. Ein Prüfkörper wird nachfolgend noch beschrieben und kann an der Drehvorrichtung zwecks Qualifizierung einer Drehachse der Drehvorrichtung angebracht werden. Ein Qualifizierungsverfahren unter Verwendung des Prüfkörpers ist nachfolgend und in den Beispielen noch beschrieben.

Bei der Anordnung kann zwischen dem Halteelement, insbesondere dessen Träger, und der Basis ein X-Y-Tisch und oder ein Kipptisch angebracht sein, womit eine Orientierung des Halteelements und der daran befestigten Drehvorrichtung erfolgen kann.

Die Anordnung kann ferner eine Stellvorrichtung zur Justierung oder zum Verfahren des Halteelements mitsamt der Drehvorrichtung aufweisen. Damit kann eine kollisionsfreie Positionierung des Halteelements mitsamt der Drehvorrichtung auf der Basis durchgeführt werden. Beispielsweise kann eine Stellvorrichtung das Halteelement linear auf der Basis verschieben, wenn die Lagerung so ausgestaltet ist, dass sie eine Linearführung erlaubt. Beispielsweise kann bei einer V-förmigen Lagerung, bei der eine V-Führung an der Basis angebracht ist, das Haltelement in der V-Führung verschoben werden.

Das Halteelement und die Drehvorrichtung können von Hand, oder von einem Roboter, oder von sonstigen Aktuatoren, z.B. pneumatischen Aktuatoren positioniert und/oder von einer Orientierung in eine andere Orientierung gedreht werden.

Für unterschiedliche Baulängen von Drehvorrichtungen, beispielsweise an sich gleiche aber unterschiedlich lange Drehschwenkgelenke, kann die Basis mit mehreren alternativen Lagerstellen versehen sein und/oder die Basis kann beispielsweise mehrere Lagermittel für Lagerungen an unterschiedlichen Positionen aufweisen, damit das Halteelement mitsamt der Drehvorrichtung an verschiedenen Positionen auf der Basis positioniert werden kann.

Nachfolgend wird die Erfindung anhand von Beispielen beschrieben. Es zeigen:

Fig. 1    eine Anordnung zur Durchführung eines Verfahrens in Prinzipdarstellung,

Fig. 2    einen Prüfkörper mit einem orthogonal zur Drehachse ausgerichteten Spiegel und einem zur Drehachse koaxial ausgerichtetem Doppelkugelnormal,

Fig. 3    einen Prüfkörper mit einem orthogonal zur Drehachse ausgerichteten Spiegel und einem zur Drehachse koaxial ausgerichtetem Zylinder,

Fig. 4    einen Prüfkörper mit zwei zueinander und zur Drehachse orthogonal ausgerichteten Spiegeln und einer Kugel, die zentrisch auf der Drehachse angeordnet ist,

Fig. 5    einen Prüfkörper mit einem orthogonal zur Drehachse ausgerichteten Spiegel und einer zentrisch auf der Drehachse angeordneten Kugel und einem weiteren in Richtung der Drehachse orientierten Spiegel,

Fig. 6    einen Prüfkörper mit zwei vorzugsweise zueinander und zur Drehachse orthogonal ausgerichteten Spiegeln,

Fig. 7    einen Prüfkörper mit einer Kugel, die in der zur Drehachse orthogonalen Ebene auf einem Radius > 0 montiert ist und einem zur Drehachse koaxial ausgerichtetem Doppelkugelnormal,

Fig. 8    einen Prüfkörper mit einem Spiegel, der in der zur Drehachse orthogonalen Ebene auf einem Radius > 0 montiert ist,

Fig. 9    einen Aufbau aus einem Prüfkörper und einem Autokollimationsfernrohr mit Mehrfachauswertung,

Fig. 10    ein Beispiel für die Verbindung eines zweiachsigen Drehschwenkgelenks mit einem Prüfkörper zur Verwendung in einer erfindungsgemäßen Anordnung zur Qualifizierung der B-Achse,

Fig. 11    ein Beispiel für die Verbindung eines zweiachsigen Drehschwenkgelenks mit einem Prüfkörper zur Verwendung in einer erfindungsgemäßen Anordnung zur Qualifizierung der A-Achse,

Fig. 12    eine erfindungsgemäße Anordnung zur Qualifizierung der B-Achse eines zweiachsigen Drehschwenkgelenks und zur Bestimmung weiterer translatorischer und rotatorischer Abweichungen,

Fig. 13    eine erfindungsgemäße Anordnung zur Qualifizierung der Drehachse eines Drehtisches und zur Bestimmung weiterer translatorischer und rotatorischer Abweichungen.

Fig. 14    eine Anordnung mit einer Drehvorrichtung und einer Referenzdrehvorrichtung,

Fig. 15    eine Anordnung mit einer Drehvorrichtung und einer Referenzdrehvorrichtung,

Fig. 16    eine Anordnung mit einer Drehvorrichtung und einer Referenzdrehvorrichtung,

Fig. 17    eine Anordnung mit einer Drehvorrichtung und einer Referenzdrehvorrichtung,

Fig. 18    eine Anordnung mit einer Drehvorrichtung und einer Referenzdrehvorrichtung,

Fig. 19    eine Anordnung mit einer Drehvorrichtung und einer Referenzdrehvorrichtung,

Fig. 20    eine Anordnung mit einer Drehvorrichtung und einer Referenzdrehvorrichtung,

Fig. 21    eine Anordnung mit einer Drehvorrichtung und einer Referenzdrehvorrichtung,

Fig. 22    eine Anordnung mit einer Drehvorrichtung und einer Referenzdrehvorrichtung,

Fig. 23    eine Anordnung mit einer Drehvorrichtung und einer Referenzdrehvorrichtung,

Fig. 24    eine Anordnung zur Vornahme einer Umschlagsmessung mit dem Verfahren,

Fig. 25    eine Fehlerkorrekturkurve aus einer Umschlagsmessung,

Fig. 26    eine Fehlerkorrekturkurve aus einer Umschlagsmessung,

Fig. 27    eine Ausführungsform eines Haltelements, angeordnet in einem Messaufbau,

Fig. 28    ein erstes Element für eine Steckverbindung zur Verbindung eines Halteelements mit einer Basis oder zur Verbindung eine Drehvorrichtung mit einem Halteelement,

Fig. 29    ein zweites Element für eine Steckverbindung zur Verbindung eines Halteelements mit einer Basis oder zur Verbindung eine Drehvorrichtung mit einerm Halteelement,

Fig. 30    ein Halteelement mit einer daran angebrachten Sensoranordnung in ersten Position und Orientierung,

Fig. 31    ein Halteelement mit einer daran angebrachten Sensoranordnung in zweiten Position und Orientierung.

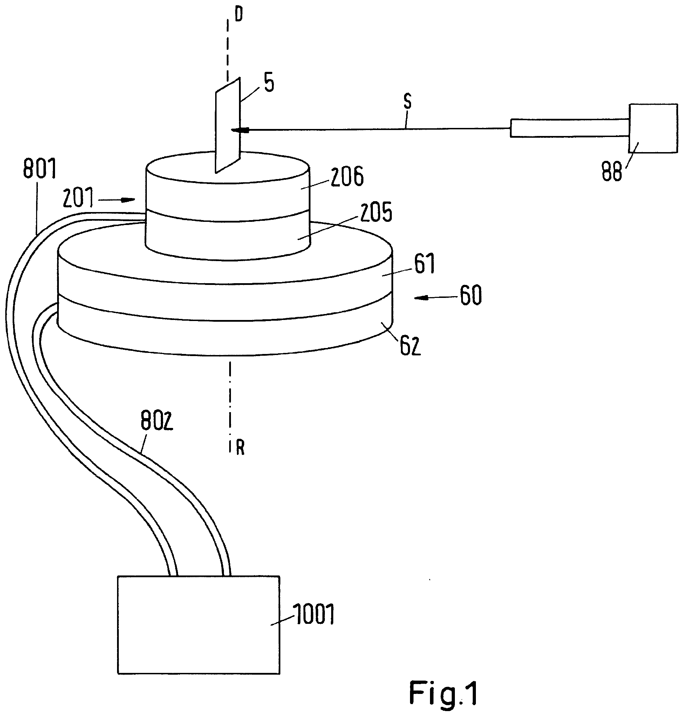

Ein möglicher Aufbau zum Ablauf der Fehlererfassung ist in Fig. 1 gezeigt: Auf einer Referenzdrehvorrichtung 60, hier ein Drehtisch, der ein Unterteil 62 und einen Drehteller 61 aufweist, ist eine Drehvorrichtung 201 aufgesetzt. Die Drehvorrichtung 201 ist in diesem Beispiel ebenfalls ein Drehtisch, bei dessen Drehwinkelmessystem (nicht dargestellt) der Drehwinkelfehler ermittelt werden soll. Der Drehtisch 201 weist ein Unterteil 205 und einen Drehteller 206 auf. Das Unterteil 205 des Drehtisches 201 ist auf den Drehteller 61 der Referenzdrehvorrichtung 60 aufgesetzt. Aufgrund der Reibung zwischen dem Teller 61 und dem Unterteil 205 sowie dem Eigengewicht des Drehtisches 201 ist das Unterteil 205 mit dem Drehteller 61 drehfest verbunden. Der Teller 61 des Referenzdrehtisches 60 ist gegen das Unterteil 62 um die Achse R der Referenzdrehvorrichtung drehbar. Der Teller 206 des Drehtisches 201 ist gegen das Unterteil 205 um die Achse D drehbar. Die Achsen D und R sind im Wesentlichen koaxial angeordnet.

Auf dem Teller 206 des Drehtisches 201 ist als Prüfelement 5 ein Spiegel angeordnet, der in Richtung eines Autokollimationsfernrohres (AKF) 88 ausgerichtet ist. Der Messtrahl S des AKF 88 trifft auf die Oberfläche des Spiegels 5.

Die Reihenfolge, in denen die Referenzdrehvorrichtung 60, die Drehvorrichtung 201 und der Spiegel 5, mit zugeordnetem AKF 88, zu einander stehen, ist variabel. Es wäre auch denkbar, dass das AKF 88 auf der Drehvorrichtung 201 steht und der Spiegel 5 extern befestigt wird. Zudem könnte, beispielsweise bei Kalibrierung einer sehr großen Drehvorrichtung 201, die Referenzdrehvorrichtung 60 auf der Drehvorrichtung 201 stehen.

Die Fig. 1 zeigt ferner eine Fehlerermittlungseinrichtung 1001, die beispielsweise eine Recheneinheit ist, insbesondere ein Computer, der eine Berechnung nach einem vorgegebenen Programmablauf vornehmen kann. Neben der Fehlerermittlung können mit dem Computer 1001 auch Steuerungssignale an den Stator 205 des Drehtisches 201 und an den Stator 62 des Referenzdrehtisches 60 gesendet werden, insbesondere Signale zur Steuerung der Bewegungen der Rotoren 61 und 206. Neben der Fehlerermittlung können an den Computer 1001 auch Messsignale vom Stator 205 des Drehtisches 201 und vom Stator 62 des Referenzdrehtisches 60 gesendet werden, insbesondere Messsignale, die Auskunft über die Drehposition der Rotoren 61 und 206 geben. Ein Kabel 801 dient der Signalübertragung vom Stator 205 des Drehtisches 201 zur Fehlerermittlungseinrichtung 1001, und ein Kabel 802 dient der Signalübertragung vom Stator 62 des Referenzrehtisches 60 zur Fehlerermittlungseinrichtung 1001. Ferner dienen die Kabel 801 und 802 auch der Energieübertragung. Selbstverständlich können statt jeweils eines Kabels 801 oder 802 auch jeweils mehrere Kabel vorgesehen sein, beispielsweise eines für eine Signalübertragung und eines für eine Energieübertragung. Nicht gezeigt sind in dieser und folgenden Figuren Signal- und Energieübertragungseinrichtungen zu einem AKF oder zu Sensoren und weitere Steuer- oder Auswerteeinrichtungen. Nicht dargestellt sind ferner Benutzerschnittstellen an dem nur schematisch dargestellten Computer 1001 oder ein Display.

Nachfolgend sind mögliche Ausführungsformen des Verfahrens beschrieben. Ermittelt werden soll der Drehpositionsfehler des Drehpositionsermittlungssystems des Drehtisches 201.

Der Teller 61 des Referenzdrehtisches 60 wird zum Unterteil 62 so positioniert, dass das Drehpositionsermittlungssystem des Referenzdrehtisches 60 auf seiner Referenz- bzw. Nullmarke steht. Ebenso wird der Teller 206 des Drehtisches 201 zum Unterteil 205 so positioniert, dass das Drehpositionsermittlungssystem des Drehtisches 201 auf seiner Referenz- bzw. Nullmarke steht. Statt der Nullmarken kann jede beliebige Drehposition als erste Drehposition verwendet werden.

Nun kann der Drehpositionierwinkel des Spiegels 5, der nachfolgend als Offset-Winkel bezeichnet wird, mit dem AKF 88, oder alternativ mit einem anderen Winkelmessgerät erfasst werden. Der Offset Winkel kann im Spezialfall auch Null betragen, d.h. es wäre in diesem Fall kein Offset vorhanden.

Zur Fehlererfassung des Drehpositionsermittlungssystems des Drehtisches 201 werden zunächst Stützstellen für die Fehlererfassung definiert. Diese können dabei unregelmäßig, wie auch regelmäßig auf eine oder mehrere Umdrehungen des Tellers 61 des Referenzdrehtisches 60 verteilt werden, wobei als eine zu wählende Schrittweite die Variante der ganzzahligen Teiler von 360° bevorzugt ist. Hierdurch bleiben Fehler durch ein schlecht eingestelltes Messsystem unberücksichtigt.

Ob der Teller 61 von oben betrachtet in positiver oder negativer Richtung gedreht wird, ist für das Verfahren nicht maßgeblich, d.h. beide Varianten sind gleichwertig. Es kann aber in positiver und negativer Drehrichtung verdreht werden, um Hysterese-Effekte festzustellen.

Für eine negative Drehrichtung des Tellers 61 wären die anzufahrenden Drehwinkelpositionen (Sollpositionen) bei einer Anzahl von sechs Schritten für die Referenzachse z.B. 0°, -60°, -120°, -180°, -240° und -300°. Die Anzahl kann allerdings nahezu beliebig erhöht werden, wenn z.B. kurzperiodische Fehler der zu kalibrierenden Drehachse erfasst werden sollen, bzw. Aliasing-Effekten vorgebeugt werden soll.

Bei der Variation der Drehposition des Tellers 61 des Referenzdrehtisches 60 und des Tellers 206 des Drehtisches wird vorzugsweise eine der folgenden Positionierungsstrategien angewandt:

Variante 1 des Verfahrens:

Die Variante 1 ist ein spezielles Beispiel der Variante d), die in der allgemeinen Beschreibung beschrieben wurde. Für die jeweilige Stützstelle werden die Einstellungen folgendermaßen vorgenommen:
Der Teller 61, auch bezeichnet als Rotor, des Referenzdrehtisches 60 wird auf einer negativen vorgegebenen Solldrehposition positioniert, hier beispielsweise -60°. Dies ist die im allgemeinen Teil der Beschreibung genannte veränderte Drehposition der Referenzdrehvorrichtung, d.h. die veränderte Drehposition des dritten Teils 61 (hier der Teller) und vierten Teils 62 (hier das Unterteil 62, auch bezeichnet als Stator) relativ zueinander, erhalten durch Variieren der Drehposition des Referenzdrehtisches 60.

Die veränderte Drehposition der Referenzdrehvorrichtung ist genau bekannt, weil das Winkelmesssystem des Referenzdrehtisches 60 kalibriert ist. Diese Größe soll nachfolgend als X bezeichnet werden.

Der Teller 206 des Drehtisches 201, auch bezeichnet als Rotor des Drehtisches 201, wird auf den negierten Wert der Solldrehposition des Referenztisches positioniert, in diesem Fall +60°, wobei die negative Sollposition mit Hilfe des fehlerbehafteten Drehpositionsermittlungssystems des Drehtisches 201 eingestellt wird. Dies ist die im allgemeinen Teil der Beschreibung genannte veränderte Drehposition der Drehvorrichtung 201, d.h. die veränderte Drehposition des ersten Teils (hier der Teller 206) und zweiten Teils (hier das Unterteil 205, auch bezeichnet als Stator) relativ zueinander, erhalten durch Variieren der Drehposition des Drehtisches 201.

Die veränderte Drehposition der Drehvorrichtung wird durch das Drehpositionsermittlungssystem angezeigt, dessen Fehler bestimmt werden soll. Diese Größe soll nachfolgend als Y bezeichnet werden.

Wenn das Drehpositionsermittlungssystem des Drehtisches 201 fehlerhaft ist, wenn also der reale Drehwinkel von +60° abweicht, dann hat dies zur Folge, dass die relative Drehposition des ersten Teils 206 und des vierten Teils 62 relativ zueinander im Vergleich zum Ausgangszustand verändert ist. Im Ausgangszustand wurde der Offset-Winkel des Spiegels 5 mit dem AKF 88 ermittelt, wie oben beschrieben, wobei der Offset Winkel im Spezialfall auch Null betragen kann. Die Veränderung der relativen Drehposition des ersten Teils 206 und des vierten Teils 62 relativ zueinander, die als Größe Z bezeichnet werden soll, entspricht:

Z = Winkel, der vom AKF nach Variieren der Drehpositionen ermittelt wird - Offsetwinkel Der Drehpositionsfehler F (in diesem Fall der Winkelpositionsfehler) des Drehpositionsermittlungssystems des Drehtisches 201 wird mit der Fehler-Ermittlungseinrichtung 1001 ermittelt.

Der Drehpositionsfehler entspricht in diesem Beispiel: F = Z.

Der Drehpositionsfehler in der speziellen Variante 1 entspricht also der Differenz zwischen dem vom AKF 88 erfassten Winkel und dem vorangehend genannten Offset-Winkel des Spiegels. Der nominelle (fehlerbehaftete) Drehwinkel des ersten Teils 206 und zweiten Teils 205 zueinander (Y) und der nominelle Drehwinkel des dritten Teils 61 und des vierten Teils 62 relativ zueinander (X) addieren sich zu Null. Mit dem nominellen Drehwinkel ist der angezeigte Winkel gemeint, der hier auf einer Vorgabe beruht.

Es ist in einer anderen Verfahrensvariante auch möglich, die nominellen Winkel X und Y so zu wählen, dass Sie sich nicht zu Null addieren, und die Drehpositionen der Drehvorrichtung und der Referenzdrehvorrichtung so vorzunehmen, dass die Drehposition des ersten Teils 206 und des vierten Teils 62 relativ zueinander im Vergleich zum Ausgangszustand verändert ist, das AKF also eine Winkelabweichung Z misst. Der Fehler F ergibt sich dann aus

$$F = Z - (\text{Differenzbetrag der nominellen Winkel X und Y})$$

Variante 2 des Verfahrens:

Die Variante 2 ist ein spezielles Beispiel der Variante e), die in der allgemeinen Beschreibung beschrieben wurde.

Der Teller 61 des Referenzdrehtisches wird auf einer negativen vorgegebenen Solldrehposition positioniert, z.B. -60°. Dies ist die im allgemeinen Teil der Beschreibung genannte veränderte Drehposition der Referenzdrehvorrichtung, d.h. veränderte Drehposition des dritten Teils 61 (hier der Teller) und vierten Teils 62 (hier das Unterteil) relativ zueinander, die genau bekannt ist, weil das Winkelmesssystem des Referenzdrehtisches 60 kalibriert ist. Diese Größe soll nachfolgend als X bezeichnet werden.

Der Teller 206 des Drehtisches 201 wird so positioniert, dass der vom externen AKF 88 gemessene Winkel exakt dem vor Variieren der Drehpositionen gemessenen Offset-Winkel entspricht. Dies bedeutet, dass die Drehposition des Spiegels 5 relativ zum AKF 88 im Vergleich zu vorher (vor Variieren der Drehpositionen) unverändert ist. Dies bedeutet weiterhin, dass die resultierende Drehposition des ersten Teils 206 und des vierten Teils 62 nicht verändert ist oder im Wesentlichen nicht verändert ist. Der vom AKF angezeigte Winkelwert abzüglich des zuvor bestimmten Offsets ergibt also im Idealfall Null. Der Idealfall wirdaufgrund von Messfehlern oder Einstellungenauigkeiten in der Regel nicht erreicht, weshalb im Realfall der vom AKF angezeigte Winkelwert abzüglich dem zuvor bestimmten Offset im Rahmen des Messfehlers oder der Einstellungenauigkeit etwas um Nullschwankt.

Am Drehpositionsermittlungssystem wird der Winkel Y abgelesen, der sich durch die oben beschriebenen Einstellungen ergibt. Die Einstellung des Drehtisches entspricht der im allgemeinen Teil der Beschreibung genannten veränderten Drehposition der Drehvorrichtung, d.h. der veränderten Drehposition des ersten Teils (hier der Teller 206) und zweiten Teils (hier das Unterteil 205) relativ zueinander, angezeigt durch das Drehpositionsermittlungssystem, dessen Fehler (F) bestimmt werden soll. Die Winkelposition des Tellers 206 des zu kalibrierenden Drehtisches 201 entspricht: Y = +60° + Drehpositionsfehler des Drehpositionsermittlungssystems des Drehtisches 201

$$Y = -X + F$$

Der Drehpositionsfehler F (in diesem Fall der Winkelpositionsfehler) des Drehpositionsermittlungssystems des Drehtisches 201 wird mit einer Fehler-Ermittlungseinrichtung 1001 ermittelt. Der Drehpositionsfehler F entspricht:

$$F = X + Y$$

Dabei entspricht Y dem vom fehlerbehafteten Messsystem angezeigten, nominellen Winkelwert.
also der Summe der Drehwinkel, die von dem Drehpositionsermittlungssystem des Referenzdrehtisches 60 und dem Drehpositionsermittlungssystem des Drehtisches 201 angezeigt werden. Im Gegensatz zu Variante 1 bleibt Z bei der Berechnung unberücksichtigt, da der Wert (annähernd) Null beträgt.

Variante 3 des Verfahrens:

Die Variante 3 ist ein spezielles Beispiel der Variante e), die in der allgemeinen Beschreibung beschrieben wurde.

Der Teller 206 des Drehtisches 201 wird auf einer positiven vorgegebenen Solldrehposition positioniert, z.B. +60°, angezeigt durch das (fehlerhafte) Drehpositionsermittlungssystem des Drehtisches 201. Dies ist die im allgemeinen Teil der Beschreibung genannte veränderte Drehposition der Drehvorrichtung, d.h. veränderte Drehposition des ersten Teils 206 (hier der Teller) und zweiten Teils 205 (hier das Unterteil) relativ zueinander. Diese Größe soll nachfolgend als Y bezeichnet werden.

Der Teller 61 des Referenzdrehtisches 60 wird so positioniert, dass der vom externen Winkelmessgerät 88 gemessene Winkel exakt dem zuvor gemessenen Offset-Winkel entspricht. Dies bedeutet, dass die Drehposition des Spiegels 5 relativ zum AKF 88 im Vergleich zu vorher (vor Variieren der Drehpositionen) unverändert ist. Dies bedeutet weiterhin, dass die resultierende Drehposition des ersten Teils 206 und des vierten Teils 62 nicht verändert ist.

Am kalibrierten Winkelmesssystem des Referenzdrehtisches 60 wird der Winkel X abgelesen, der sich durch die oben beschriebenen Einstellungen ergibt. Die Einstellung des Referenzdrehtisches entspricht der im allgemeinen Teil der Beschreibung genannten veränderten Drehposition der Referenzdrehvorrichtung 60, d.h. der veränderten Drehposition des dritten Teils (hier der Teller 61) und vierten Teils (hier das Unterteil 62) relativ zueinander, angezeigt durch das kalibrierte Winkelmesssystem. Die Winkelposition des Tellers 61 des Referenzdrehtisches 60 entspricht:

$$X = -60° + \text{Drehpositionsfehler des Drehpositionsermittlungssystems des Drehtisches 201}$$

$$= -Y + F$$

Der Drehpositionsfehler F (in diesem Fall der Winkelpositionsfehler) des Drehpositionsermittlungssystems des Drehtisches 201 wird mit einer Fehler-Ermittlungseinrichtung (nicht gezeigt) ermittelt. Der Drehpositionsfehler entspricht:

$$F = X + Y$$

also der Summe der Drehwinkel, die von dem Drehpositionsermittlungssystem des Referenzdrehtisches 60 und dem Drehpositionsermittlungssystem des Drehtisches 201 angezeigt werden, wie bei der oben beschriebenen Variante 2. Im Gegensatz zu Variante 1 bleibt Z bei der Berechnung unberücksichtigt, da der Wert Null beträgt.

Bei allen Varianten können in weiteren Verfahrensschritten weitere Winkel eingestellt werden und andere Drehrichtungen gewählt werden.

Die oben beispielhaft aufgeführten Varianten 1-3 unterscheiden sich folgendermaßen:
Variante 1 bietet gegenüber Variante 2 und Variante 3 einen Geschwindigkeitsvorteil, da bei Variante 2 und 3 die Drehposition der zu kalibrierenden Drehachse bzw. der Referenzachse auf eine externe Referenz geregelt werden muss. Die Regelung auf eine Drehposition des eigenen Messsystems ist in der Regel schneller. Bei Anwendung der Variante 2 und 3 ist man allerdings unabhängig von der Genauigkeit des externen Winkelmessgeräts (AKF), da man immer auf denselben (unter Umständen ungenauen) angezeigten Winkel positioniert. Man ist aber abhängig von der Reproduzierbarkeit des AKF-Messsystems.

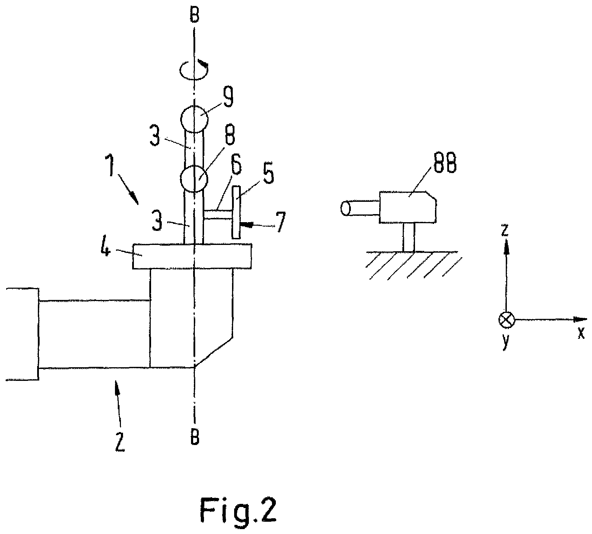

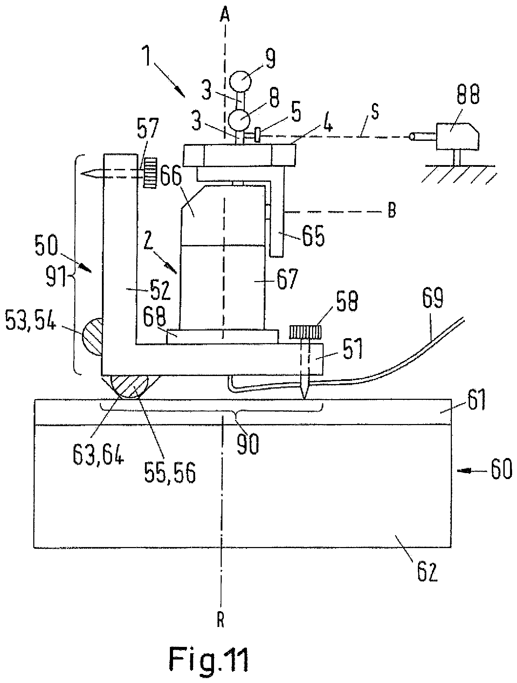

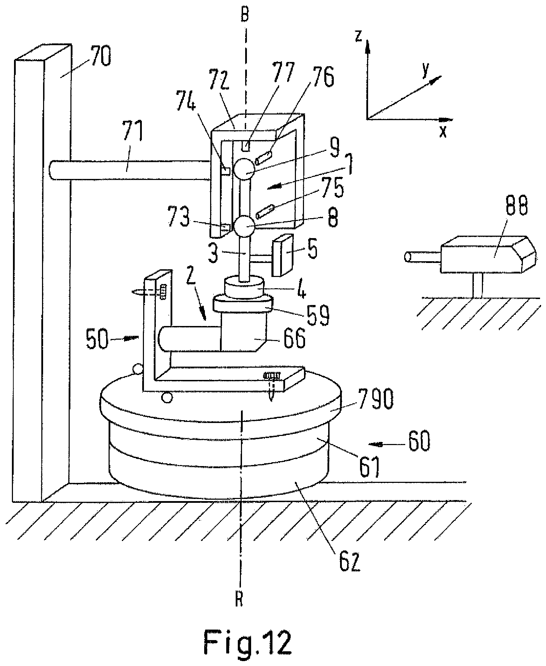

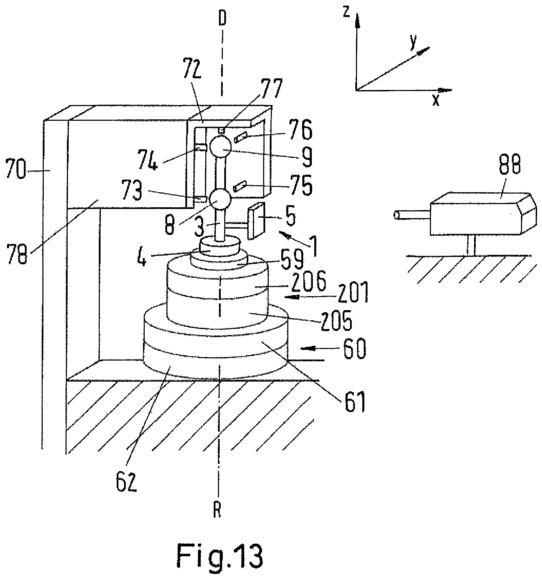

Die Fig. 2 zeigt einen Prüfkörper 1, der mit einem Drehschwenkgelenk 2 verbunden ist. Der Prüfkörper 1 weist einen zylinderstabförmigen Halter 3 und einen Sockel 4 auf. Die Drehachse B bezeichnet eine der Drehachsen des Dreh-Schwenk-Gelenks 2. Der zylinderstabförmige Halter 3 weist eine Rotationssymmetrie auf und die Rotationssymmetrieachse des Halters 3 ist koaxial zu der Drehachse B angeordnet. Dies ist aber nicht in jedem Fall notwendig, wie anhand der Fig. 11 gezeigt, wo die Rotationssymmetrieachse des Halters 3 nicht koaxial mit der dortigen Drehachse A des Dreh-Schwenk-Gelenks ist. Ferner muß der Halter 3 keine Rotationssymmetrie aufweisen und kann im Prinzip einen beliebigen Querschnitt haben. Der Sockel 4 ist beispielsweise über eine Dreipunktlagerung mit dem Dreh-Schwenk-Gelenk 2 verbunden. Das drehbare Teil des Dreh-Schwenk-Gelenks 2, woran der Sockel 4 angebracht ist, und das gegenüber dem Teil 66 (s. Fig. 12) drehbar ist, ist nicht sichtbar: Es liegt innerhalb des Teils 66 (s. Fig. 12) und ist gegen das Teil 66 um die Achse B drehbar. Seitlich der Drehachse B ist als Prüfelement 5 ein Spiegel angebracht, der über einen stabförmigen Träger 6 mit dem Halter 3 verbunden ist. Die Reflexionsfläche 7 bzw. die Spiegelfläche ist von der Drehachse B abgewandt und zeigt in dieser Darstellung nach rechts und ist in Richtung eines Autokollimationsfernrohres 88 ausgerichtet. In dem gewählten Koordinatensystem, das rechts in der Fig. 2 dargestellt ist, zeigt die Drehachse B in Z-Richtung und der Spiegel in der gezeigten Stellung in X-Richtung. Bei Drehung des Halters 3 um die Drehachse B dreht sich der Spiegel 5 um den gleichen Drehwinkel wie der Halter 3 und der Drehwinkel ist mittels des Autokollimationsfernrohres 88 (nachfolgend abgekürzt als AKF) detektierbar. Die Drehungen können nur sehr klein sein. An dem Halter 3 sind zwei Kugeln 8, 9 als rotationssymmetrische Elemente angebracht. Beide Kugeln 8, 9 sind koaxial zur Drehachse B ausgerichtet, d.h. ihre Rotationssymmetrieachse ist axial fluchtend mit der Drehachse B. Dies ist aber nicht in jedem Fall notwendig, wie anhand der Fig. 11 gezeigt, wo die Kugeln 8, 9 nicht koaxial mit der dortigen Drehachse A des Dreh-Schwenk-Gelenks sind. Die Kugeln 8, 9 bilden ein Doppelkugelpaar. Der Halter 3 kann zweiteilig ausgebildet sein, wobei ein Teil sich beispielsweise vom Sockel 4 bis vor die erste Kugel 8 erstreckt und ein zweiter Teil die erste Kugel 8 und die zweite Kugel 9 beinhaltet. Die Kugeln 8, 9 können mit fünf Abstandssensoren abgetastet werden, wie nachfolgend in der Fig. 12 und 13 noch beschrieben. Die Abstandssensoren können beispielsweise kapazitive Sensoren, Wirbelstromsensoren, Magnetfeldsensoren, optische Sensoren, insbesondere Interferometer, oder mechanische Induktivtaster sein. Zusätzlich kann die Verkippung des Spiegels 5 sowohl um die Drehachse B als auch um die Y-Achse von dem AKF beobachtet werden. Die fünf Abstandssensoren, die anhand eines nachfolgenden Beispiels noch beschrieben sind, ermöglichen eine Erfassung der Bewegungsfehler in den drei translatorischen Raumrichtungen und die Verkippung um die X- bzw. Y-Achse. Das AKF ermöglicht bei Anwendung eines nachfolgend noch beschriebenen Verfahrens mit einer gegenläufig drehenden Referenzdrehachse die Erfassung des Drehpositionsfehlers der Achse B. Zusätzlich erhält man aus der Messung mit dem AKF noch einen der beiden Kippwinkel der Achse B um die X- oder Y-Achse, je nachdem wie AKF und Spiegel ausgerichtet sind. In der gezeigten Darstellung könnte der Kippwinkel um die Y-Achse gemessen werden. Zur Messung des Kippwinkels um die X-Achse müsste der Spiegel mit der Reflexionsfläche 7 in Richtung des Betrachters ausgerichtet sein und der Strahl des AKF in Betrachtungsrichtung auf den Spiegel gerichtet sein. Selbstverständlich können die Kippwinkel nach Wechsel des Aufbaus hintereinander gemessen werden. Der oder die Kippwinkel können mit dem über die Abstandssensoren (nachfolgend noch beschrieben) ermittelten Winkel verglichen werden, wodurch sich die Messsicherheit erhöht.

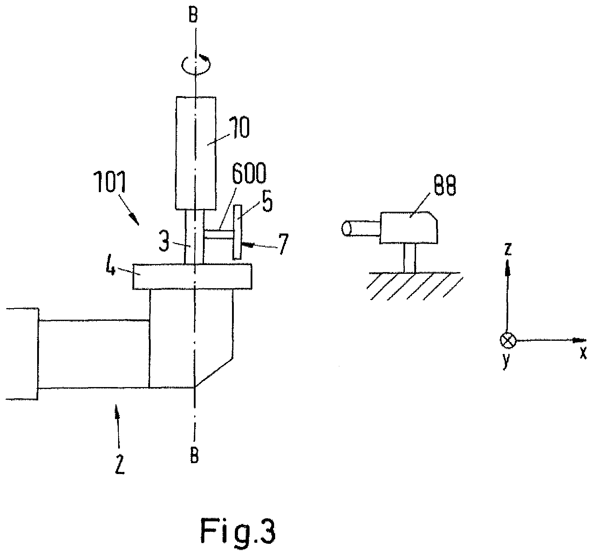

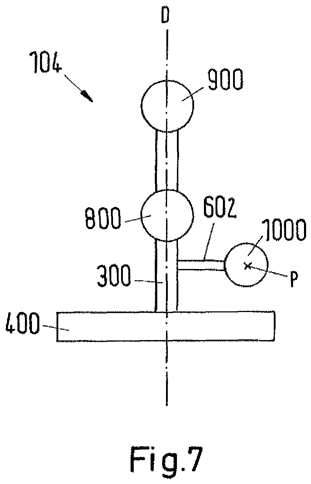

Die Fig. 3 zeigt einen Aufbau mit einem Prüfkörper 101, mit gleicher Bedeutung der Bezugszeichen wie in Fig. 1, mit dem Unterschied, dass statt der Kugeln 8, 9 ein Zylinder 10 mit durch Sensoren erfassbarer Stirnfläche als rotationssymmetrisches Element verwendet wird. Der Zylinder 10 ist ein Spezialfall eines zweiten Messkörpers im Sinne der allgemeinen Erfindungsbeschreibung, der rotationssymmetrisch ist. Bei dem Prüfkörper 101 ist, wie auch in Fig. 2, kein "erster" Messkörper im Sinne der allgemeinen Erfindungsbeschreibung vorhanden (ein solcher erster Messkörper ist in Form einer Kugel in der Fig. 7 gezeigt). Statt einer Zylinderform könnte der zweite Messkörper 10 auch die Form eines Quaders aufweisen, wobei in der Ansicht der Fig. 3 der Blick des Betrachters auf eine der vier Seitenflächen des Quaders fiele. Der Quader 10 wäre ein Spezialfall eines zweiten Messkörpers im Sinne der allgemeinen Erfindungsbeschreibung, der mehrere in verschiedene Richtungen weisende Flächen aufweist.

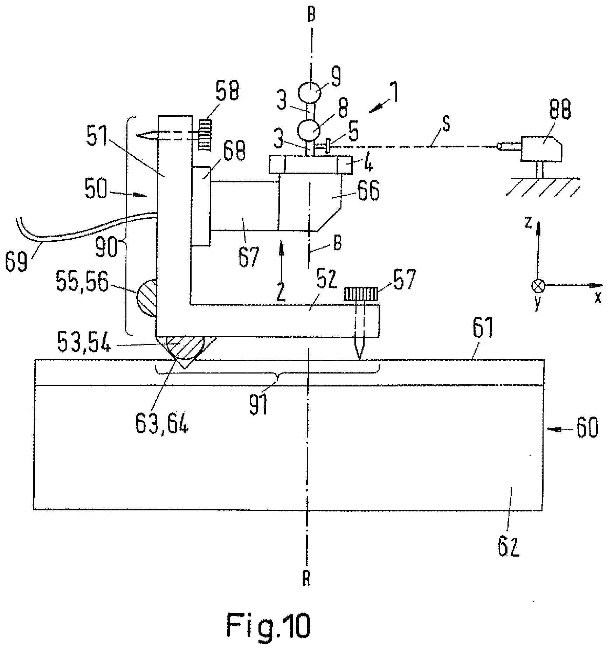

Anhand der Fig. 10 bis 12 wird nun zunächst der Einbau des Prüfkörpers 1 in ein KMG und ein Verfahren zur Ermittlung des Drehpositionsfehlers und weiterer translatorischer und rotatorischer Fehler beschrieben.

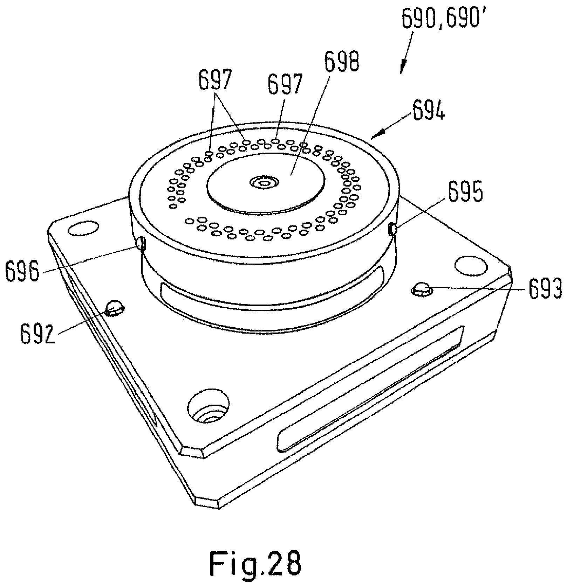

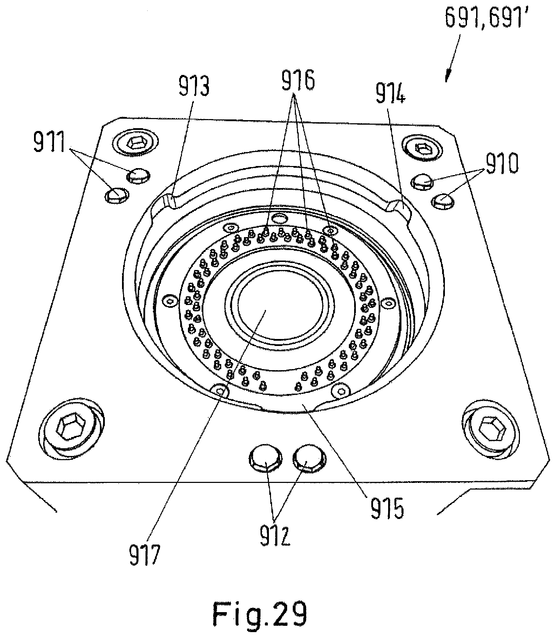

Fig. 10 zeigt im oberen Teil den prinzipiellen Aufbau aus Prüfkörper 1, einer Drehvorrichtung 2 und einem AKF 88, der bereits in Fig. 2 beschrieben wurde. Die Drehvorrichtung 2, auch bezeichnet als Prüfling, ist in diesem Beispiel ein Dreh-Schwenk-Gelenk 2, das an einem winkelförmigen Halteelement 50 angebracht ist. Das Halteelement 50 weist eine Halterung 68 auf, an welcher die Drehvorrichtung 2 angebracht ist. Ferner ist eine Stromzufuhr 69 gezeigt, über welche die Drehvorrichtung 2 mit Energie versorgt wird. Alternativ kann die Energie- und Sensorsignalversorgung auch direkt über eine Steckverbindung erfolgen, wie in Fig. 28 und 29 gezeigt. Das Dreh-Schwenk-Gelenk 2 kann zusammen mit dem Halteelement 50 ggf. auch pneumatisch, hydraulisch oder anderweitig betrieben werden (nicht gezeigt). Der Winkel weist zwei Schenkel 51, 52 auf, die einen Träger bilden, wobei die Schenkel an der Außenseite jeweils mit einer Dreipunktlagerung versehen sind. Jede Dreipunktlagerung besteht aus zwei kugelförmigen Elementen und einer Rändelschraube zur Verstellung. Möglich sind auch Elemente in Form eines Kugelteils, vorzugsweise einer Halbkugel. Am unteren Schenkel 52 sind die halbkugelförmigen Elemente 53 und 54 angebracht, die Kopplungsmittel bilden, wobei in der gewählten Perspektive nur das vordere kugelförmige Element sichtbar ist. Als dritter Punkt der Dreipunktlagerung und weiteres Kopplungselement, ist das Ende einer Stellschraube 57 vorgesehen. Die halbkugelförmigen Elemente 53 und 54 und das Ende der Stellschraube 57 liegen im zweiten Kopplungsbereich 91 des Halteelements 50. Das Halteelement 50 ist über den zweiten Kopplungsbereich 91 an die Basis angekoppelt. In analoger Weise weist der zweite Schenkel 51 zwei halbkugelförmige Elemente 55, 56 als Kopplungselemente auf, von denen in der gewählten Perspektive nur das Vordere sichtbar ist, und eine Stellschraube 58 als Kopplungselement. Die Kopplungselemente können allgemein auch als "Lagerelemente" bezeichnet werden und werden in den Beispielen verkürzt auch als "Elemente" bezeichnet.

Die halbkugelförmigen Elemente 55 und 56 und das Ende der Schraube 58 liegen im ersten Kopplungsbereich 90 des Halteelements 50. Bei den Elementen 53, 54, 55, 56 kann es sich um eine Halbkugel handeln oder auch um eine Ganzkugel, die teilweise im Schenkel versenkt ist.

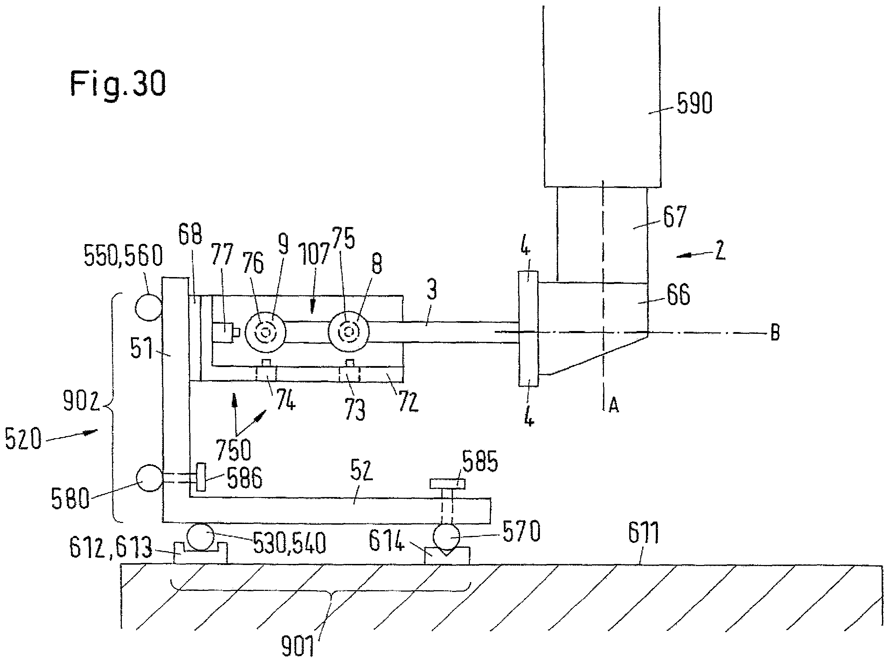

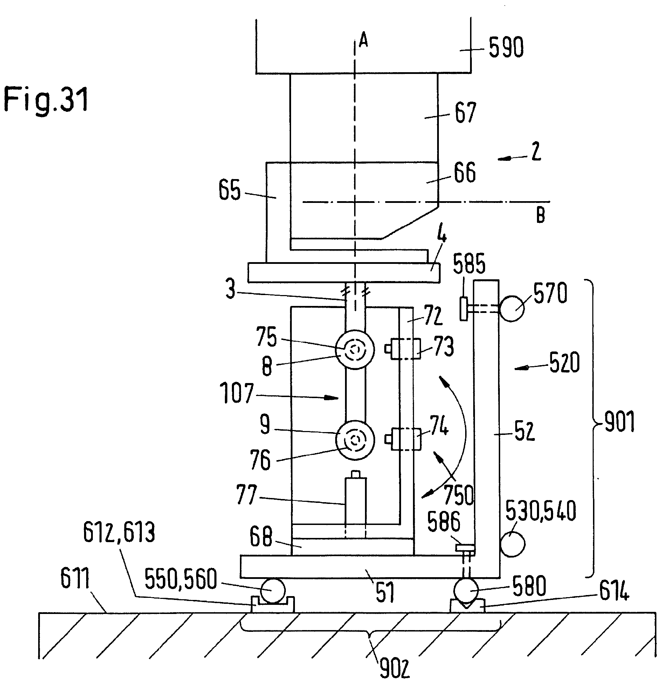

In den vorliegenden Figuren ist pro Kopplungsbereich nur ein Justiermittel in Form einer Stellschraube 57 oder 58 zu sehen. Zum Einstellen der Koaxialität mit der Referenzdrehachse kann in einem oder mehreren der Kopplungsbereiche jeweils eine weitere Stellschraube vorgesehen sein, die nicht gezeigt ist. Im Allgemeinen können Justiermittel in beliebiger sinnvoller Anzahl und Kombination vorhanden sein. Beispielsweise kann eines der kugelförmigen Elemente 53, 54 oder eines der kugelförmigen Elemente 55, 56 durch eine Stellschraube ersetzt sein. Es ist weiterhin möglich eine Stellschraube mit einem kugelförmigen Lagerelement oder teilkugelförmigen Lagerelement zu kombinieren, wie in Fig. 30 und 31 gezeigt. In diesem Fall würde die Stellschraube 57 und/oder 58 nicht wie gezeigt spitz zulaufen, sondern am Ende eine Kugel oder nach unten weisende Halbkugel aufweisen, wie anhand der Stellschrauben 585 und 586 in Fig. 30 und 31 gezeigt. Allgemein wird ein spitz zulaufendes Lagerelement oder Justiermittel vorzugsweise dann verwendet, wenn die Lagerung auf einer glatten Fläche erfolgt. Ein Lagerelement oder Justiermittel in Form einer (Teil)Kugel kann vorteilhaft mit einer Führung 63, 64 zusammen wirken, beispielsweise einem Walzenpaar oder einem Kugeltripel.

Die Dreipunktlagerung des winkelförmigen Halteelements 50 ermöglicht eine sehr genaue reproduzierbare Orientierung des Prüfkörpers 1. Rüstzeiten werden minimiert, vor allem bei Serienmessungen. Durch das Halteelement 50 können leicht verschiedene Orientierungen des Dreh-Schwenk-Gelenks 2 hergestellt werden, wie bei einem Vergleich der Fig. 10 und 11 (unten) erkennbar.

Je nach räumlicher Orientierung des Prüflings 2 können Momente oder Verschiebungen, beispielsweise aufgrund der Gewichtskraft des Prüfkörpers 1, des Prüflings 2 oder gegebenenfalls der Antastkräfte, auftreten. In diesem Fall werden in einer bevorzugten Variante Verformungen des Prüflings 2 oder des Winkelhalters rechnerisch eliminiert.

In der Fig. 10 wurde der Prüfling 2, in diesem Fall das Dreh-Schwenk-Gelenk 2, zusammen mit dem Halteelement 50, an dessen Schenkel 51 das Dreh-Schwenk-Gelenk 2 angebracht ist, auf einen Referenzdrehtisch 60 aufgesetzt. Der Referenzdrehtisch 60 weist einen Drehteller 61 auf und ein Unterteil 62, gegen das der Drehteller 61 drehbar ist. Die Drehachse des Tellers 61 ist mit R bezeichnet. Der Referenzdrehtisch 60 besitzt die Drehachse R. Die Energieversorgung des Referenzdrehtisches 60 ist nicht dargestellt. Allgemein bei dieser Erfindung, und auch in den gezeigten Beispielen, ist eine orthogonale Ausrichtung von Drehachsen nicht zwingend. Die Achsen B und R in Fig. 10 könnten auch beispielsweise horizontal ausgerichtet sein, wie auch die Achsen A und R in Fig. 11, B und R in Fig. 12 und D und R in Fig. 13. Eine horizontale Ausrichtung von B und R in Fig. 10 und 12 hat den Vorteil, dass sich das Dreh-Schwenk-Gelenk 2 bei dem hierin beschriebenen Verfahren zur Aufnahme des Drehpositionsfehlers (s. z.B. unten) in einer Orientierung befindet, die bei bestimmten Bauformen eines Koordinatenmessgeräts seiner Orientierung im späteren Messbetrieb entspricht, beispielsweise bei der Bauform des Horizontalarm-Koordinatenmessgeräts.

Das Halteelement 50 ist mittels seiner Dreipunktlagerung, bestehend aus den kugelförmigen Elementen 53, 54 und der Rändelschraube 57, auf dem Teller 61 des Referenzdrehtisches 60 gelagert und dreht zusammen mit dem Teller 61. Auf dem Teller 61 des Drehtisches 60 sind Führungen 63, 64 (zu sehen ist nur die vordere Führung 63) zur Lagerung der Auflagekugeln 53, 54 vorgesehen. Die schematisch dargestellten Führungen 63, 64 können beispielsweise Walzenpaare oder Kugeltripel oder eine Kombination davon sein. Durch die Führungen 63, 64 ist eine reproduzierbare und konstante Positionierung des Halteelements 50 auf dem Drehtisch 60 gewährleistet.

Der Referenzdrehtisch 60 verfügt über eine kalibrierte Drehwinkelanzeige. Alternativ zu dem in der Fig. 10 gezeigten Aufbau kann ein Prüfling 2 auch direkt auf den Referenzdrehtisch 60 gesetzt werden, ohne dass ein Halteelement 50 verwendet wird (vergleiche die nachfolgende Fig. 13 mit einem Drehtisch als Prüfling). Wie in dem Aufbau der Fig. 10 zu sehen, sind die Drehachse B des Prüflings 2 und die Drehachse R des Referenzdrehtisches 60 zueinander im Wesentlichen fluchtend bzw. im Wesentlichen koaxial.

Ein beispielhaftes Verfahren zur Aufnahme des Drehpositionsfehlers der Drehachse B des Prüflings 2 wird in folgenden Schritten durchgeführt:

(1) Der Teller 61 des Referenzdrehtisches 60 und Prüfkörper 1 drehen schrittweise in entgegengesetzte Richtungen, z.B. +3° und -3°. Mit dem Teller 61 drehen sich das Halteelement 50 und die Teile 66 und 67 des Dreh-Schwenk-Gelenks 2 beispielsweise um +3° um die Achse R. Der Prüfkörper 1 wird relativ zu dem Teil 66 des Dreh-Schwenk-Gelenks 2 um -3° um die Achse B gedreht, wobei die relative Drehung zwischen dem Sockel 4 und dem Teil 66 erfolgt. Aus der Position des externen Beobachters, d.h. aus dem Inertsystem betrachtet bleibt der Spiegel 5 dadurch ortsfest wenn beide Drehachsen ideal drehen, oder im Wesentlichen ortsfest. Nach Abschluss des Bewegungsschritts wird der Positionswert des Spiegels 5 durch das AKF 88 ermittelt. Bei drehpositionsfehlerfreier Drehung um die Achse B müßte die Position des Spiegels 5 konstant sein. Durch einen Drehpositionsfehler resultiert hingegen eine abweichende Position des Spiegels und der Drehpositionsfehler wird mit dem AKF 88 bestimmt.

(2) Schritt (1) wird mit anderen Winkelwerten wiederholt, vorzugsweise bis ein mehrfaches von 360° erreicht ist. Bei wälzgelagerten zueinander drehbaren Teilen ist es vorteilhaft, mindestens 2,5 Umdrehungen zu erfassen. Alternativ können die Drehbewegung und die Winkelmessung mit dem AKF 88 kontinuierlich erfolgen. Es können auch zusätzliche rechnerische Korrekturen vorgenommen werden, um Synchronisationsprobleme auszugleichen. Der große Vorteil dieses Verfahrens ist, dass die Schrittweite sehr klein gewählt werden kann, also auch kurzperiodische Fehleranteile in relativ kurzer Zeit erfassbar werden.

(3) Im Anschluss kann die Messung der übrigen, insgesamt 5, rotatorischen und translatorischen Fehler stattfinden. Dazu wird der untere Referenzdrehtisch 60 nicht gedreht, d.h. der Teller 61 relativ zum Unterteil 62 fixiert, und nur der Prüfkörper 1 wird um die Achse B gegen das Teil 66 des Dreh-Schwenkgelenks 2 gedreht. Ein Aufbau zur Aufnahme weiterer Fehler ist in Fig. 12 erläutert.

(4) Aus den gewonnenen Daten werden Kenngrößen errechnet, die gegen eine gegebene Spezifikation verglichen werden. Oder aus den Daten werden Korrekturwerte für eine CAA- Korrektur ermittelt.

Bei Drehvorrichtungen mit mehreren Drehachsen (mehrstufige Drehachsen) werden die Schritte (1) - (4) für jede Drehachse wiederholt.

In alternativen Verfahren, kann zunächst der Drehpositionsfehler und mindestens ein weiterer Taumelfehler ermittelt werden und im Anschluss die translatorischen Fehler. Oder die Erfassung aller Freiheitsgrade erfolgt zeitgleich. Daraus ergeben sich folgende bevorzugte Anforderungen an die Referenzdrehachse R:

- Werden die Fehler Rb (Drehpositionsfehler der Achse B des Prüflings 2) und die Fehler Tx, Ty, Tz (translatorische Abweichung in Richtung X, Y, bzw. Z), Rx, Ry (rotatorische Abweichungen um X- bzw. Y-Achse) nacheinander ermittelt, sollte die Referenzdrehachse R des Drehtisches 60 lediglich einen möglichst geringen Drehpositionsfehler aufweisen. Eine Drehung des Tellers 61 gegen das Unterteil 62 um die Referenzdrehachse R könnte vorzugsweise nur bei der Aufnahme des Rb-Fehlers erfolgen, wie oben erläutert. Wenn der Referenzdrehtisch 60 gegenüber der zu kalibrierenden Drehachse aber sehr kleine Taumel- und Translationsanteile hat, kann aber auch eine komplette Qualifikation der zu kalibrierenden Drehachse beim Drehen des Tellers 61 gegen das Unterteil 62 um die R-Achse erfolgen. Die Minimierung oder Eliminierung des Drehpositionsfehlers der Referenzdrehachse R wird kann z.B. durch mechanische Präzision, einen hochgenauen Maßstab, Selbstkalibrierverfahren oder eine CAA (Computer aided accuracy)-Korrektur erfolgen.

- Werden in einem ersten Verfahrensgang die Fehler Rb, Rx, Ry gleichzeitig ermittelt und anschließend gleichzeitig die Fehler Tx, Ty, Tz (oder zunächst gleichzeitig Rb, Rx und anschließend gleichzeitig die Fehler Tx, Ty, Tz, Ry; oder in einem ersten Verfahrensgang gleichzeitig Rb, Ry und in einem zweiten Verfahrensgang gleichzeitig die Fehler Tx, Ty, Tz, Rx) ermittelt, muss die Referenzdrehachse R einen möglichst geringen Drehpositionsfehler und einen möglichst geringen Taumelfehler aufweisen. Die Referenzdrehachse R würde sich nur bei der Aufnahme des Rb, Rx, Ry- Fehlers bewegen. Ein geringer Taumelfehler kann z.B. durch mechanischen Aufwand, CAA-Korrekturen, oder eine teilweise Online-Korrektur erreicht werden.

- Werden alle Fehler Rb, Rx, Ry,Tx, Ty, Tz gleichzeitig ermittelt, muss die Referenzdrehachse R möglichst geringe Bewegungsfehler in allen 6 Freiheitsgraden aufweisen. Dies kann z.B. durch mechanischen Aufwand, CAA-Korrekturen, oder eine vollständige Online-Korrektur erreicht werden.

In der Fig. 11 ist ein Aufbau zur Bestimmung des Drehpositionsfehlers der A-Achse des Dreh-Schwenk-Gelenks 2 gezeigt. Die zweite Achse B, die mit dem Aufbau nach Fig. 10 vermessen wurde, ist in Fig. 11 zum Vergleich eingezeichnet. Gegenüber dem Aufbau der Fig. 10 wurde das Halteelement 50 um 90° gedreht. Das Halteelement 50 ist über den ersten Kopplungsbereich 90 an die Basis angekoppelt, bzw. liegt mit einer an dem Schenkel 51 vorgesehenen Dreipunktlagerung (statt einer an 52 vorgesehenen Dreipunktlagerung wie in Fig. 10) auf dem Teller 61 des Referenzdrehtisches 60 auf, ohne dass die Drehvorrichtung 2 ausgebaut werden muss. Die Dreipunktlagerung mittels der Kugeln 55, 56 und der Rändelschraube 58 erfolgt in analoger Weise wie in der Fig. 10. Der Prüfkörper 1 wurde umgebaut und entlang der Drehachse A des Dreh-Schwenk-Gelenks 2 ausgerichtet.

Die Kugeln 8 und 9 können auf einer Flucht mit der Achse A angeordnet sein oder nicht, wie hier gezeigt. Wenn bei der Qualifikation der Teller des Referenzdrehtisches 60 um die Achse R gedreht wird, sodass die Position des Prüfkörpers und des Spiegels 5 unverändert oder im Wesentlichen unverändert bleibt, wie oben beschrieben (Teller 61 des Referenzdrehtisches 60 und der Prüfkörper 1 drehen in entgegengesetzte Richtung um die Achse R bzw. A), müssen die Kugeln nicht zwangsweise fluchten. Dann ist die Achse A vorzugsweise im Wesentlichen koaxial oder konzentrisch zur Achse R. Wird hingegen keine Drehung um die Achse R durchgeführt, dann wird die Doppelkugel 8, 9 vorzugsweise im Wesentlichen konzentrisch und koaxial zu der Achse A angeordnet. Wenn der Teller 61 des Referenzdrehtisches 60 und der Prüfkörper 1 in gleiche Richtung um die Achse R bzw. A drehen, dann wird die Doppelkugel 8, 9 vorzugsweise im Wesentlichen konzentrisch und koaxial zu der Achse A angeordnet, und die Achse A ist vorzugsweise im Wesentlichen koaxial oder konzentrisch zur Achse R.

Der Prüfkörper 1 ist mit dem Adapter 65 an dem Dreh-Schwenk-Gelenk 2 befestigt. Der Adapter 65 wird magnetisch gehalten. In gleicher Weise wie in der Fig. 10 bleibt das AKF 88 auf den Spiegel 5 ausgerichtet. Das Verfahren zur Aufnahme des Drehpositionsfehlers um die Achse A kann analog durchgeführt werden, wie oben in Fig. 10 bei der Achse B beschrieben. In diesem Fall wird der Prüfkörper aber nicht relativ zu dem Teil 66 verdreht sondern das Teil 66 wird gegen das Teil 67 um die Achse A gedreht und der Prüfkörper 1 ist relativ zum Teil 66 nicht drehbar.

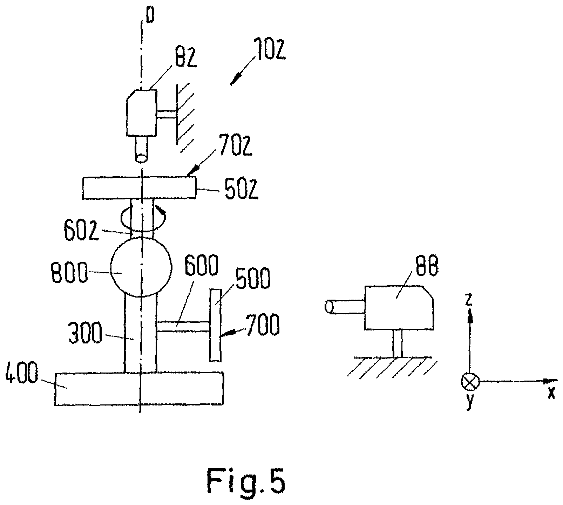

Die Fig. 12 zeigt den Aufbau der Fig. 10 in größerem Zusammenhang und die Positionierung von Sensoren zur Aufnahme weiterer translatorischer und rotatorischer Fehler, die bei Drehung des Dreh-Schwenk-Gelenks 2 um die Achse B auftreten. Ein Ständer 70 trägt einen Arm 71, an dem ein Sensorhalter 72 mit drei senkrecht zueinander stehenden Wänden angebracht ist. An einer ersten Wand sind zwei Abstandssensoren 73, 74 angebracht, die in X-Richtung auf die Kugel 8 und 9 weisen. Mit den Abstandssensoren kann der Translationsfehler Tx sowie der Rotationsfehler Ry, der sich bei Rotation des Halters 3 um die Y-Achse ergibt, erfasst werden. An der rückseitigen Wand des Sensorhalters 72 sind Abstandssensoren 75 und 76 angebracht, die in Y-Richtung auf die Kugeln 8 bzw. 9 ausgerichtet sind. Mit den Abstandssensoren 75 und 76 kann der Translationsfehler in Y-Richtung Ty und der Rotationsfehler Rx erfasst werden. Mit dem Abstandssensor 77, der in Z-Richtung auf die obere Kugel 9 ausgerichtet ist, kann der Translationsfehler in Z-Richtung Tz erfasst werden. Die Kugeln 8, 9 sind ein Doppelkugelpaar. Alternativ kann ein Zylinder verwendet werden, wie bei dem Prüfkörper 101 in Fig. 5 und gleich angeordnete Abstandssensoren können auf die Zylinderoberfläche und die Stirnfläche des Zylinders gerichtet sein.

In Fig. 12 ist der Drehtisch 60, bestehend aus Unterteil 62 und drehbarem Teller 61, etwas anders aufgebaut als in der Fig. 10 gezeigt: Auf dem Teller 61 ist eine Planscheibe aufgebracht, die zusammen mit dem Teller gedreht wird.

Als weiterer Unterschied zu Fig. 10 ist zwischen den Prüfkörper 1 und das Teil 66 des Dreh-Schwenk-Gelenks 2 eine Adapterplatte 59 eingebaut, die ein mechanisches Interface zwischen Prüfkörper 1 und Prüfling 2 bildet. Die Adapterplatte 59 ermöglicht als mechanisches Interface die Verwendung des immer gleichen Prüfkörpers 1 für eine Vielzahl von Prüflingen.

In der Fig. 13 ist ein Messaufbau gezeigt, der analog zu dem Aufbau in Fig. 12 ist. Im Unterschied zum Aufbau der Fig. 12 ist der Prüfling 201 in diesem Fall ein Drehtisch, dessen Rotationsachse D kalibriert werden soll bzw. deren Drehpositionsfehler, und weitere Bewegungsfehler, bestimmt werden soll. Der Drehtisch 201 ist auf einem kalibrierten Referenzdrehtisch 60 aufgesetzt, dessen drehbarer Teller um die Rotationsachse R rotierbar ist. Der Referenzdrehtisch 60 ist genauso aufgebaut wie in Fig. 12. Der Drehtisch 201 weist ein Unterteil 205 und einen Drehteller 206 auf, der um die Achse D rotierbar ist. Im Unterschied zur Fig. 12 ist in dem vorliegenden Aufbau ein andersartiger Arm 78 für die Sensorhalterung 72 vorgesehen.

Auf den Drehteller 201 ist eine Adapterplatte 59 aufgesetzt. Auf der Adapterplatte 59 ist der Prüfkörper 1 positioniert. Die Merkmale des Prüfkörpers 1 wurden bereits anhand vorangehender Figuren erläutert. Der Prüfkörper 1 rotiert zusammen mit dem Teller 206 des zu kalibrierenden Drehtisches 201. Das Verfahren zur Aufnahme des Drehpositionsfehlers der Achse D ist beispielsweise wie folgt:

(1) Der Teller 61 des Referenzdrehtisches 60 wird um einen Winkel gedreht, beispielsweise +3° um die Achse R. Dabei wird das auf dem Teller positionierte Unterteil 205 des Prüflings-Drehtisches 201 ebenfalls um +3° gedreht. Anschließend oder gleichzeitig mit der Drehung des Tellers 61 des Referenzdrehtisches 60 wird der Teller 206 des Prüflings-Drehtisches 201 in entgegengesetzte Richtung, beispielsweise um -3°, um die Achse D gedreht. Dabei wird auch der Prüfkörper 1 um den gleichen Winkel gedreht, in diesem Beispiel -3°. Aus dem Inertsystem betrachtet bleibt der Spiegel 5 dadurch ortsfest. Nach Abschluss des Bewegungsschritts wird der Positionswert des Spiegels 5 durch das AKF 88 ermittelt. Bei drehpositionsfehlerfreier Drehung um die Achse D müsste die Position des Spiegels 5 konstant sein. Durch einen Drehpositionsfehler resultiert hingegen eine abweichende Position des Spiegels und der Drehpositionsfehler wird mit dem AKF 88 bestimmt.

Weitere Schritte sind analog wie bei dem anhand Fig. 10 beschriebenen Verfahren:

(2) Schritt (1) wird mit anderen Winkelwerten wiederholt, vorzugsweise bis ein Mehrfaches von 360° erreicht ist. Bei wälzgelagerten Drehachsen ist es vorteilhaft, mindestens 2,5 Umdrehungen zu erfassen. Alternativ können die Drehbewegung und die Winkelmessung mit dem AKF 88 kontinuierlich erfolgen. Es können auch zusätzliche rechnerische Korrekturen vorgenommen werden, um Synchronisationsprobleme auszugleichen. Der große Vorteil dieses Verfahrens ist, dass die Schrittweite sehr klein gewählt werden kann, also auch kurzperiodische Fehleranteile in relativ kurzer Zeit erfassbar werden.

(3) Im Anschluss kann die Messung der übrigen, insgesamt 5, rotatorischen und translatorischen Fehler stattfinden. Dazu wird der untere Referenzdrehtisch 60 nicht gedreht, d.h. der Teller 61 relativ zum Unterteil 62 fixiert, und nur der Prüfkörper 1 wird um die Achse D zusammen mit dem Teller 206 gegen das Unterteil 205 des Drehtisches 201 gedreht.

(4) Aus den gewonnenen Daten werden Kenngrößen errechnet, die gegen eine gegebene Spezifikation verglichen werden. Oder aus den Daten werden Korrekturwerte für eine CAA- Korrektur ermittelt.

In den nachfolgenden Beispielen sind weitere Ausführungsformen eines Prüfkörpers und deren Besonderheiten beschrieben:

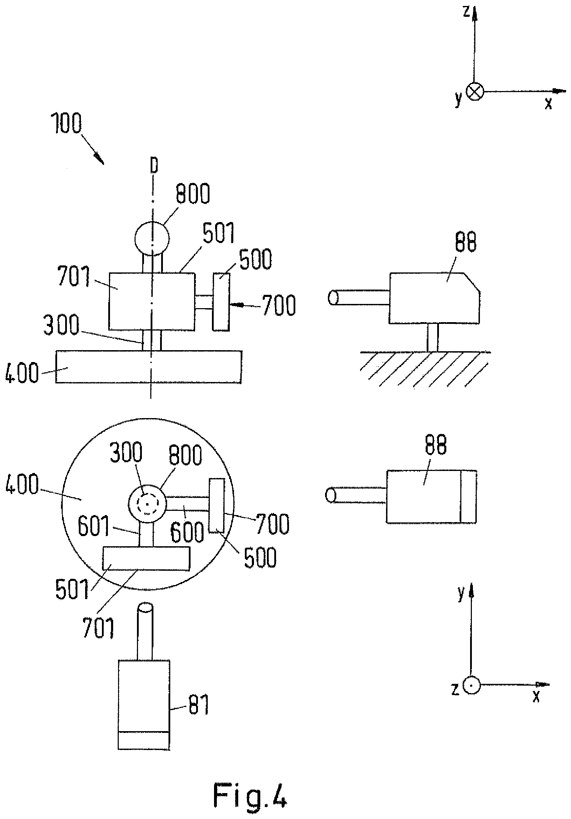

Die Fig. 4 zeigt einen Prüfkörper 100 mit einem Spiegel 500 mit der Reflexionsfläche 700, die von der Drehachse D abgewandt ist. Ferner weist der Prüfkörper einen zweiten Spiegel 501 auf, mit einer Spiegelfläche 701, die ebenfalls von der Drehachse D abgewandt ist. Die beiden Reflexionsflächen 700 und 701 stehen orthogonal zueinander, wobei in der gewählten Ansicht die Spiegelfläche 701 in Richtung des Betrachters zeigt und die Spiegelfläche 700 seitlich nach rechts in Richtung des AKF 88 ausgerichtet ist. Der untere Teil der Fig. 4 zeigt den Aufbau von oben mit Blickrichtung entlang der Drehachse D. Im unteren Teil der Fig. 4 ist ein zweites AKF 81 abgebildet, das auf die Spiegelfläche 701 des zweiten Spiegels 501 ausgerichtet ist.

Ferner weist der Prüfkörper 100 der Fig. 4 auch einen Halter 300 und eine am Ende des Halters angebrachte Kugel 800 auf. Die Spiegel sind mit Trägern 600, 601 an dem Halter 300 befestigt. Statt einer Kugel 800 kann alternativ ein Zylinder vorgesehen sein, wie in Fig. 3 gezeigt, oder eine Doppelkugel, wie in Fig. 2. Im Gegensatz zur Ausführungsform nach Fig. 2 ist nur eine Kugel vorhanden, was wie folgt begründet ist: Die Doppelkugel der Fig. 2 oder der Zylinder der Fig. 3 wird nur zur Erfassung des von dem AKF 88 nicht erfassten zweiten Kippwinkels benötigt, in diesem Fall des Kippwinkels um die X-Achse. Stehen zwei Spiegel 500, 501 und zwei zugeordnete AKF 88, 81 zur Verfügung, kann auf eine Doppelkugel oder einen Zylinder verzichtet werden, da der zweite Kippwinkel über die Verkippung des Spiegels 501 mit dem AKF 81 erfasst werden kann. Damit können zwei der fünf Abstandssensoren, die in den Fig. 12 und 13 gezeigt sind, eingespart werden. Die Verwendung eines AKF 81 bietet den Vorteil, dass der Arbeitsabstand größer sein kann und die Einrichtung einfacher ausgeführt sein kann. Das AKF bietet höchste Genauigkeit und eine verlässliche Messung.

In der Fig. 5 ist ein Prüfkörper 102 gezeigt, der einen Spiegel 502 aufweist, der eine in Richtung der Drehachse D weisende Reflexionsfläche 702 aufweist. Anders ausgedrückt weist die Spiegelfläche 702 nach oben in Z-Richtung. Der Spiegel 502 ist mittels des Trägers 602 auf der Kugel 800 befestigt. Alle weiteren Elemente wurden bereits anhand der Fig. 4 beschrieben. Statt einer Kugel 800 kann alternativ ein Zylinder vorgesehen sein, wie in Fig. 3 gezeigt, oder eine Doppelkugel, wie in Fig. 1, wobei der Spiegel 502 entsprechend mittels des Trägers 602 auf der dem Zylinder oder der oberen Kugel der Doppelkugel befestigt wäre. Ein zweites AKF 82 ist auf die Spiegelfläche 702 des zweiten Spiegels 502 gerichtet und misst die beiden Verkippungen des Prüfkörpers 102 um die X- und die Y-Achse. Außerdem könnte der in den Fig. 12 und 13 gezeigte Axialsensor 77 auf den in Achsrichtung orientierten Spiegel 502 bzw. dessen Reflexionsfläche 702 messen, um die Translationsabweichung in Z-Richtung Tz zu bestimmen.

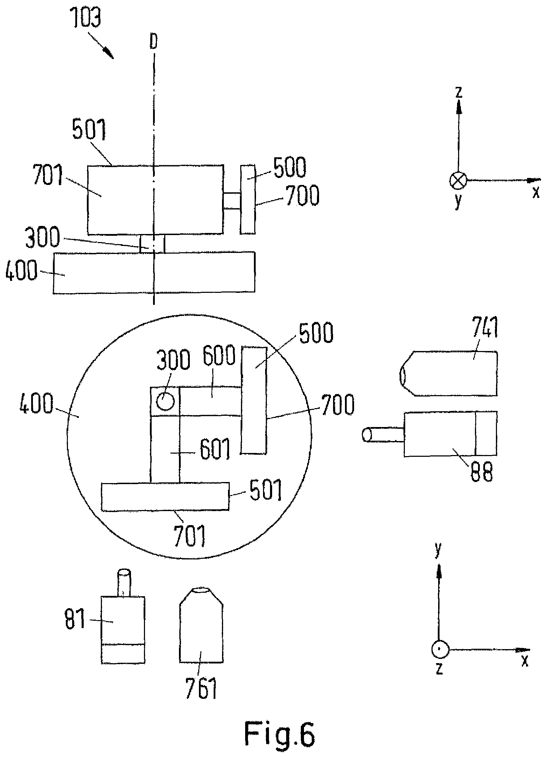

Fig. 6: Die Ausführungsform eines Prüfkörpers 103 nach Fig. 6 ist fast identisch zur Ausführungsform nach Fig. 4, außer dass der Prüfkörper 103 keine Kugel 800 als rotationssymmetrisches Element aufweist. Bei dieser Ausführungsform wird die Translation in X-Richtung mit einem Abstandssensor 741 erfasst, der im unteren Teil der Fig. 6 abgebildet ist (Blick auf den Aufbau in -Z-Richtung). Die Translation in Y-Richtung wird mit einem auf den Spiegel 501 gerichteten Abstandssensor 761 erfasst. In diesem Fall kann die Bestimmung der drei rotatorischen Fehler (Drehpositionsfehler der Achse D, Rx und Ry) und die Messung der Translationsfehler Tx und Ty simultan erfolgen. Soll die axiale Translationsabweichung Tz ebenfalls erfasst werden, kann an dem Prüfkörper 103 eine Gegenfläche angebracht werden, die in Z-Richtung weist. Auf diese Gegenfläche kann ein weiterer Abstandssensor gerichtet werden. Beispielsweise kann ein dritter Spiegel 502 vorgesehen sein, wie in der Fig. 5 abgebildet, auf dessen Spiegelfäche 702 ein AKF 82 und ein weiterer Abstandssensor gerichtet sind.

Ziel der Anordnung aus Fig. 6 ist die gleichzeitige Messung des Positionsfehlers (AKF 88, 81), einer Rotation (AKF 88, 81) und einer Translation (Abstandssensor 741, 761) mit dem jeweils gleichen Spiegeltarget 500 oder 501. Bei der Verwendung der Anordnungen aus Autokollimator(AKF)/Abstandssensor 88/741 und 81/761 wird der Abstandssensor 741 bzw. 761 zur Translationsmessung vorzugsweise so angeordnet dass er zentrisch auf den Spiegel 500 bzw. 501 ausgerichtet ist, sofern auch die Spiegel 500 und 501 selbst zentrisch zur Drehachse D ausgerichtet sind - wenn anders ausgedrückt die Drehachse D in der Perspektive der oberen Fig. 6 den Spiegel 501 in zwei Hälften teilt, und entsprechend den Spiegel 500 in zwei Hälften teilt wenn man von rechts darauf schauen würde. Vorteilhaft wäre bei dieser Anordnung, dass die spiegelnde Ebene des Spiegels 500 bzw. 501 so angeordnet ist, dass die Drehachse D in dieser Ebene liegt, um sog. Cosinus-Fehler zu vermeiden.

Anders ausgedrückt sollte der Messstrahl des Abstandssensors 741 bzw. 761 in seiner gedachten Verlängerung auf die Drehachse D treffen.

Wenn der Messstrahl des Abstandssensors 741 bzw. 761 in seiner gedachten Verlängerung nicht auf die Drehachse D trifft, dann sind in der Praxis folgende Punkte zu beachten: Die gezeichnete Anordnung ist deswegen nicht bevorzugt, weil die Laser-Abstandssensoren 741 und 761 exzentrisch sitzen und eine Verdrehung der Spiegel 500 bzw. 501, durch einen Positionsfehler, vom Laser 741 und 761 aufgrund des vorhandenen Hebels als Translation interpretiert werden würden. Die durch die Rotation verursachten Abstandsänderungen würden sich zu den tatsächlichen Translationen addieren. Für dieses Problem sind folgende Lösungen denkbar:

1. Der Abstandssensor 741 bzw. 761 wird so angeordnet, dass der gedanklich verlängerte Strahl des Lasers die Drehachse schneidet, wie oben schon gesagt. Dadurch entfallen der Hebel und der Abstandssensor 741 bzw. 761 sieht nur noch die tatsächliche Translation. Vorteilhaft wäre bei dieser Anordnung, dass die spiegelnde Ebene des Spiegels 500 bzw. 501 so angeordnet ist, dass die Drehachse in dieser Ebene liegt. Ansonsten entstehen sog. Cosinus-Fehler. Das AKF kann problemlos exzentrisch angeordnet werden.

2. Die durch die Rotation am Laser 741 bzw. 761 sichtbare Abstandsänderung kann rechnerisch eliminiert werden. Der Drehwinkel ist durch die AKF-Messung bekannt. Der Zusammenhang zwischen Abstandsänderung am Laser 741 bzw. 761 und Drehwinkel kann durch eine einfache Drehung des Referenzdrehtisches, bei feststehendem Prüfling bestimmt werden. Der Referenzdrehtisch muss dabei zusätzlich die Anforderung, möglichst translationsfehlerfrei zu sein, erfüllen. Die vom Laser 741 bzw. 761 bestimmte Translation muss um die durch die Rotation verursachte Abstandsänderung bereinigt werden. Alternativ kann der Zusammenhang zwischen Drehwinkel und Abstandsänderung am Laser aus den Hebelverhältnissen berechnet werden.

3. Der Effekt der durch die Rotation verursachten Abstandsänderung kann ausgemittelt werden, wenn zwei Laser verwendet werden. Wichtig ist dafür, dass ein Laser auf der einen Seite der Drehachse angeordnet ist und der andere auf der anderen Seite der Drehachse angeordnet ist. Die Signale müssen sich also gegenphasig ändern. Die zwei Laser sind vorzugsweise möglichst exakt auf einer Höhe angeordnet und haben vorzugsweise den gleichen Abstand von der Drehachse. Die beiden Abstandsmesser aber auch beliebig angeordnet werden, solange die Abstände der Laser zur Drehachse bekannt sind. Dann können die Laser auch beide auf einer Seite der Drehachse angeordnet sein.

Anstelle eines Laser-Abstandssensors 741 bzw. 761 kann auch ein kapazitiver Abstandssensor in Frage kommen, da mit kapazitiven Sensoren auch gegen metallisch verspiegelte Spiegeloberflächen gemessen werden kann.

In der Fig. 7 ist ein Prüfkörper 104 mit einem Prüfelement 1000 in Kugelform gezeigt, wobei die Kugel 1000 ein erster Messkörper gemäß der allgemeinen Erfindungsbeschreibung ist. Die Prüfkugel 1000 ist über einen Träger 602 mit dem Halter 300 verbunden. Der Halter weist eine Doppelkugel 800, 900 auf, die schon in vorigen Ausführungsformen beschrieben wurde und die ein zweiter Messkörper gemäß der allgemeinen Erfindungsbeschreibung ist, ebenso wie der in anderen Figuren gezeigte Zylinder 10 (Fig. 3), die Kugel 800 (Fig. 4) und Doppelkugeln 8,9. Bei dieser Ausführungsform wird ein KMG zur Messung der Kugelposition der Kugel 1000 benutzt, nachdem der Prüfkörper 104 in ein KMG eingebaut wurde, beispielsweise analog Fig. 12 oder Fig. 13. In der gezeigten Ausführungsform dient der Mittelpunkt P der Kugel 1000 als Referenzpunkt. In verschiedenen Drehpositionen des Prüfkörpers 104 kann die Position des Referenzpunkts P bestimmt werden, und der Drehwinkel des Prüfkörpers 104 kann aus den Positionen des Referenzpunktes P und dem Abstand des Referenzpunktes von der Drehachse D bestimmt werden. Die Drehachse D muss nicht zwangsläufig durch den Halter 300 verlaufen, sondern kann auch daneben verlaufen, wie in Fig. 11 gezeigt.

Es ist in einer nicht gezeigten Ausführungsform auch möglich, mehrere Kugeln 1000 an dem Prüfkörper 104 anzubringen und zu vermessen. Mit mehreren Kugeln ist es möglich, den Bewegungsfehler zu messen wie beschrieben in Busch, K. ; Franke, M. ; Schwenke, H. ; Wiegand, U. : Rückführung von Koordinatenmessgeräten durch Abschätzung der zu erwartenden Messabweichungen durch Simulation /Physikalisch-Technische Bundesanstalt. 1996.-Forschungsbericht). Oder es können Drehpositionsänderungen an mehreren Kugeln ermittelt werden. Am Beispiel von Reflektoren wurde im allgemeinen Beschreibungsteil eine "Umschlagsmessung" oder Mehrfachmessung mit zwei Spiegeln beschrieben, die in einem Winkel von >180° bis 360° zueinander stehen, oder drei oder mehr Spiegeln, die in einem Winkel von >180° bis <360° zueinander stehen, insbesondere im Winkel $\alpha = 360°- [(N-2)/N]*180°$ (N ist ganze Zahl $\geq$ 3) zueinander stehen. In analoger Weise kann auch eine Messung mit mehreren Kugeln erfolgen, die in einem Abstand zu Drehachse und/oder nicht koaxial mit der Drehachse angeordnet sind, wobei eine gedachte Line von einer Kugel zu der Drehachse und eine gedachte Linie einer benachbarten Kugel zu der Drehachse im Winkel 360°/M zueinander stehen, wobei M eine ganze Zahl größer oder gleich 2 ist, insbesondere 2-8. Insbesondere weist jede der Kugeln einen Referenzpunkt auf, insbesondere den Kugelmittelpunkt, und eine gedachte Line von Kugelmittelpunkt einer Kugel zu der Drehachse und eine gedachte Linie von dem Kugelmittelpunkt einer benachbarten Kugel zu der Drehachse stehen im Winkel von 360°/M zueinander.

Die Messgenauigkeit des KMG kann gesteigert werden, wenn die aus dem Inertsystem betrachtete Kugel 1000 ortsfest bleibt, in analoger Weise wie oben anhand eines ortsfesten Spiegels bei gegenläufiger Drehung von Referenzdrehtischteller und Prüfkörper erläutert. Bei ortsfester Kugel muss sich das Messsystem des KMG nur um die Kugel bewegen. Lange Fahrwege des Messsystems des KMG werden dadurch vermieden. Der Drehpositionsfehler kann durch einen größeren Abstand der Kugel von der Achse D bzw. einen längeren Träger 602 überhöht werden.

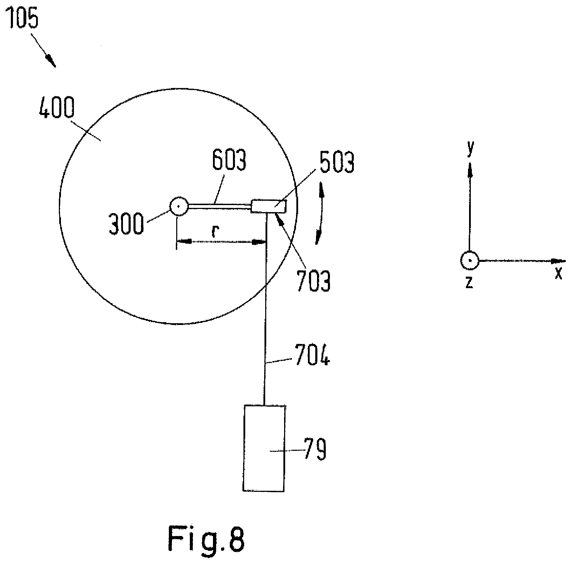

Die Fig. 8 zeigt einen Prüfkörper 105 mit einem Spiegel 503, dessen Reflexionsfläche 703 in Drehrichtung bzw. entgegengesetzt zur Drehrichtung, dargestellt durch einen Doppelpfeil, ausgerichtet ist. Der Spiegel 503 ist über einen Träger 603 mit dem Halter 300 verbunden. In der gewählten Perspektive fällt der Blick entlang der Drehachse auf den Prüfkörper 105. Alternativ kann der Spiegel 503 auch auf dem Sockel 400 angebracht sein und über den Sockel 400 mit dem Halter 300 direkt verbunden sein. Im Fall einer Verbindung über den Sockel 400 kann der Spiegel 503 auf den Sockel 400 aufgesetzt sein. Bei dieser Ausführungsform wird das AKF durch einen Laser 79 ersetzt, der eine Abstandsmessung zur Oberfläche 703 des Spiegels 503 durchführt. Hierzu wird auf die Oberfläche 703 ein Laserstrahl 704 gerichtet. Bei Drehung des Spiegels 703 wird eine Änderung des Abstands gemessen. Der Winkel, um den sich der Prüfkörper 105 gedreht hat, wird indirekt über die Position des Spiegels 503 bestimmt und ergibt sich zu

$$\alpha = \arctan(dx/r)$$

dx = Änderung des Abstands zwischen Laser 79 und Spiegelfläche 703
r = kürzester Abstand des Laserstrahls von der Drehachse.

Auch der Prüfkörper 105 aus Fig. 8 kann zusätzlich einen Zylinder, eine Kugel oder eine Doppelkugel aufweisen.

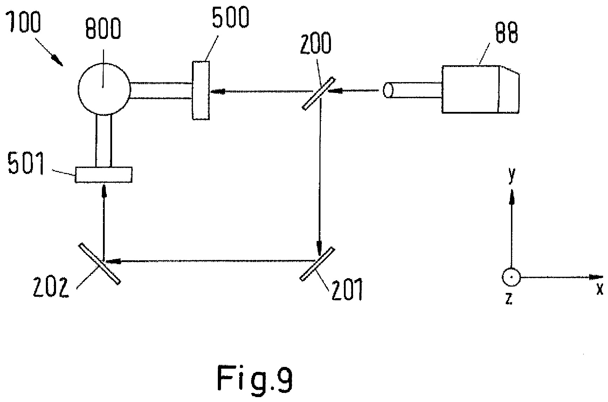

Die Fig. 9 zeigt einen Prüfkörper 100, wie anhand der Fig. 4 beschrieben. Im Gegensatz zum Aufbau der Fig. 4 wird beim Aufbau der Fig. 9 die Position jedes Spiegels 500, 501 mit nur einem AKF 88 gemessen, dessen Strahl durch einen halbdurchlässigen Spiegel auf den Spiegel 500 gelenkt wird und gleichzeitig durch Reflexion in dem halbdurchlässigen Spiegel 200 und Umlenkung in den Spiegeln 201 und 202 auf den Spiegel 501 gelenkt wird. Durch diese Anordnung wird mit jedem der beiden Spiegel 500, 501 der Drehpositionsfehler Rz erfasst. Zusätzlich wird im ersten Strahl, also auf Spiegel 500, Ry erfasst bzw. im zweiten Strahl, also auf Spiegel 501, Rx erfasst.

In Varianten des oben beschriebenen Verfahrens kann die Erfassung der verschieden Freiheitsgrade auch sequentiell erfolgen. Auf diese Weise kann z.B. zunächst ein erster Spiegel mit dem AKF beobachtet werden und in einem weiteren Messlauf, nach Umbau des AKF, ein zweiter.

Prinzipiell ist für jeden Freiheitsgrad ein separater Prüfkörper denkbar. So könnte z.B. zuerst ein Spiegel relativ zur Drehachse befestigt werden, und in einem zweiten Messlauf ein Doppelkugelnormal.

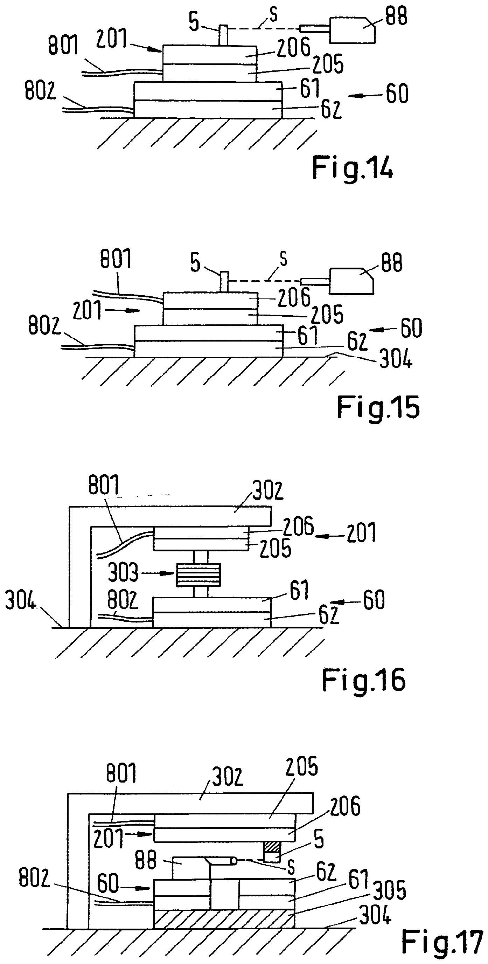

In den nachfolgenden Figuren 14-23 sind weitere Anordnungen mit einer Drehvorrichtung 201, in diesem Fall einen Drehtisch, einer Referenzdrehvorrichtung 60, in diesem Fall einem Referenzdrehtisch, und gegebenenfalls weiteren Komponenten gezeigt.

Die Fig. 14 ist im Aufbau vergleichbar zur Fig. 1. Die Drehvorrichtung 201 ist auf einer Referenzdrehvorrichtung 60 angeordnet, wobei der Stator 205 der Drehvorrichtung 201 drehfest mit dem Rotor 61 des Referenzdrehtisches verbunden ist. Auf dem Rotor 206 der Drehvorrichtung 201 ist als Prüfelement ein Spiegel 5 aufgebracht, dessen Drehposition mittels des Autokollimators 88 erfasst wird. Eine Energiezuführung 802 in Form eines Kabels führt zum Stator 62 des Referenzdrehtisches 60 und eine Energiezuführung 801 in Form eines Kabels führt zum Stator 205 des Drehtisches 201. Die Kabel 801, 802 dienen auch der Signalübertragung, z.B. von Steuer und Messignalen an eine in Fig. 1 dargestellte Fehler-Ermittlungseinrichtung 1001. Im Sinne der allgemeinen Beschreibung ist in der Fig. 14 der Rotor 206 das erste Teil, der Stator 205 das zweite Teil, der Rotor 61 das dritte Teil und der Stator 62 das vierte Teil. Die Anordnung könnte auch umgekehrt sein, d.h. der Referenzdrehtisch 60 wäre dann auf dem Drehtisch 201 angeordnet, wobei die Rotoren jeweils oberhalb des Stators angeordnet wären. In diesem Fall wäre die Abfolge der Teile von oben nach unten folgende:

- Reflektor 5 auf dem Rotor 62,
- Rotor 62 des Referenzdrehtisches 60
- Stator 61 des Referenzdrehtisches 60, der drehfest zum Rotor 205 ist
- Rotor 205 des Drehtisches 201, der drehfest zum Stator 61 ist
- Stator 206 des Drehtisches 201

Bei dieser Anordnung wäre im Sinne der allgemeinen Beschreibung der Stator 206 das erste Teile, der Rotor 205 das zweite Teil, der Stator 61 das dritte Teil und der Rotor 62 das vierte Teil. Aus dieser Zuordnung wird klar, dass in der Fig. 14 das erste Teil 206 ein Rotor ist, wohingegen es in der beschriebenen Modifikation, wo der Drehtisch unterhalb angeordnet ist, ein Stator ist, dass das zweite Teil 205 in der Fig. 1 ein Stator ist, wohingegen es in der Abwandlung mit umgekehrter Anordnung von Drehvorrichtung 201 und Referenzdrehvorrichtung 206 ein Rotor ist. Entsprechend sind die Funktionen des dritten und des vierten Teils 61, 62, die zu dem Referenzdrehtisch 60 gehören, in der Modifikation der Anordnung der Fig. 14 gegenüber der Fig. 14 in ihrer Funktion vertauscht. In der Fig. 14 ist das Teil 62 ein Stator und das Teil 61 ein Rotor, wogegen bei umgekehrter Anordnung von Drehtisch 201 und Referenzdrehtisch 60 das Teil 61 ein Stator ist und das Teil 62 ein Rotor.

In der nachfolgenden Figurenbeschreibung wird dem ersten Teil aus der allgemeinen Beschreibung immer das Bezugszeichen 206 zugeordnet, dem zweiten Teil das Bezugszeichen 205, dem dritten Teil das Bezugszeichen 61 und dem vierten Teil das Bezugszeichen 62, unabhängig davon, ob das betreffende Teil bezüglich der jeweiligen Drehvorrichtung oder Referenzdrehvorrichtung ein Rotor oder ein Stator ist. Ein Stator einer Drehvorrichtung ist in einer Definition das Teil, welches eine Energiezufuhr und einen Antrieb aufweist, mit welchem der Rotor angetrieben wird. Wenn die Drehvorrichtung bestimmungsgemäß im Messbetrieb eines Koordinatenmessgeräts verwendet wird, wird der Rotor rotiert, während der Stator stationär bleibt. In nachfolgenden Figuren sind im Gegensatz zu diesem Prinzip auch Anordnungen beschrieben, die nicht den Einsatz der Drehvorrichtungen im Messbetrieb darstellen und bei denen der Stator rotiert wird, und der Rotor stationär bleibt, beispielsweise stationär zu einem Untergrund.

Ein Nachteil des Aufbaus aus der Fig. 14 ist, dass bei der Durchführung des Verfahrens der Stator 205 des Drehtisches 201 gegenüber dem Stator 62 des Referenzdrehtisches 60 verdreht wird und dadurch auch die Energiekabel 801 und 802 gegeneinander verdreht werden, was bei höherem Drehwinkel oder mehrfachen Umdrehungen zu Aufwicklungen des Kabels 801 führen kann. Der Reflektor 5 auf dem Rotor 206 des Drehtisches 201 in der Fig. 14 kann Teil eines im allgemeinen Teil der Beschreibung beschriebenen Prüfkörpers sein, beispielsweise des Prüfkörpers 1 aus Fig. 2 oder des Prüfkörpers 101 aus Fig. 3 oder des Prüfkörpers 100 aus Fig. 4 oder des Prüfkörpers 102 aus Fig. 5 oder des Prüfkörpers 103 aus Fig. 6, wobei bei Verwendung eines Prüfkörpers gemäß Fig. 4, 5 oder 6 das Bezugszeichen 5 durch das Bezugszeichen 500 zu ersetzen wäre. Anders ausgedrückt kann auf dem Rotor 206 ein Prüfkörper positioniert sein, der drehfest zu dem Rotor 206 ist und einen Reflektor 5 oder 500 aufweist, auf den mit einem Autokollimator 88 ein Messstrahl gerichtet wird.

In der Fig. 15 ist eine Anordnung gezeigt, bei welcher im Vergleich zu Fig. 14 der Drehtisch 201 um 180° gedreht wurde. Der Rotor 205 des Drehtisches 201 ist in diesem Fall das zweite Teil (in Fig. 14 ist das Teil 205 hingegen ein Stator) und der Rotor 205 ist drehfest mit dem Rotor 61 (drittes Teil) des Referenzdrehtisches 60 verbunden. Der Vorteil gegenüber dem Aufbau der Fig. 14 ist folgender: Das in dieser Erfindung beschriebene Verfahren zur Ermittlung eines Fehlers eines Drehpositionsermittlungssystems des Drehtisches 201 kann so durchgeführt werden, dass der Stator 206 gegenüber dem Stator 62 nicht oder nur wenig gegeneinander verdreht werden und die bei der Fig. 14 beschriebene Problematik eine Aufwicklung des Kabels 801 vermieden wird. Der Rotor 61 und der damit drehfest gekoppelte Rotor 205 können hingegen relativ zum Stator 62 und relativ zum Stator 206 um beliebige Winkel und in beliebige Richtungen gedreht werden. Wie bei der Fig. 14 kann auch der Aufbau der Fig. 15 so modifiziert werden, dass der Drehtisch 201 unten und der Referenzdrehtisch 60 oben angeordnet ist, wobei die Statoren 62 und 206 jeweils ganz unten bzw. ganz oben angeordnet sind, d.h. der Gesamtaufbau der Fig. 15 könnte um 180° gedreht werden, sodass er auf dem Kopf steht, mit Ausnahme des Reflektors 5, der dann auf dem Stator 62 des Referenzdrehtisches 60 angeordnet würde.

In der Fig. 16 ist ein Aufbau gezeigt, bei dem keiner Drehpositions-Ermittlungseinrichtung 88, also insbesondere kein Autokollimator 88, erforderlich ist, um ein Verfahren zur Ermittlung eines Fehlers des Drehpositionsermittlungssystems des Drehtisches 201 durchzuführen. Die Bedeutung der Teile 61, 62, 205, 206 ist die gleiche wie in der Fig. 15. In dieser Ausführungsform ist der Stator 206 des Drehtisches 201 über einen Träger 302 drehfest mit einem Untergrund 304 verbunden. Auf dem Untergrund 304 ist auch der Stator 62 des Referenzdrehtisches 60 drehfest angeordnet, sodass im Ergebnis die Statoren 62 und 206 zueinander drehfest sind. Die Rotoren 61, 205 sind über eine rotationssteife Kupplung 303 miteinander verbunden und die Rotoren 61, 205 können synchron gegenüber ihren jeweiligen Statoren verdreht werden. Hierbei genügt es, wenn einer der Rotoren 61 oder 205 angetrieben wird und den jeweils anderen Rotor über die rotationssteife Kupplung 303 antreibt. Die Anordnung der Fig. 16 eignet sich zur Durchführung der Variante e) des im allgemeinen Beschreibungsteil beschriebenen Verfahrens zur Fehlerermittlung. Bei dieser Variante werden die resultierende Drehposition des ersten Teils 206 und des vierten Teils 62 nicht verändert, d.h. das Teil 206 wird nicht relativ zu dem Teil 62 gedreht. Es ist in diesem Fall nicht erforderlich, die unveränderte Drehposition des ersten Teils 206 und des vierten Teils 62 relativ zueinander mittels einer externen Ermittlungseinrichtung 88 festzustellen, da die beiden Teile 62 und 206 aufgrund einer mechanischen Verbindung über den Träger 302 drehfest zueinander sind. Die drehsteife Kupplung 303 kann beispielsweise eine Faltenbalgkupplung, eine Klauenkupplung oder ein (doppeltes) Kardangelenk sein. Wenn ein Drehtisch den anderen antreibt, wie oben erwähnt, werden Spannungen vermieden. Wie bei der Fig. 15 könnten auch bei der Fig. 16 der Drehtisch 201 unten angeordnet sein, und der Referenzdrehtisch 60 oben angeordnet sein, wobei wiederum die beiden Statoren 62 und 206 über den Träger 302 und den Untergrund 304 drehfest miteinander verbunden wären. In dieser Variante wäre der Stator 62 des Referenzdrehtisches 60 an dem Träger 302 angebracht und der Stator 206 des Drehtisches 201 auf dem Untergrund 304 positioniert. In der Fig. 16 und der soeben beschriebenen Variante sind die beiden Rotoren durch die Kupplung 303 drehfest verbunden. Ebenso gibt es die zwei Varianten, bei denen die beiden Statoren drehfest miteinander durch die Kupplung 303 verbunden sind und die Rotoren durch den Träger 302 und den Untergrund 304 miteinander drehfest verbunden sind, wobei Nachteile der Kabelführung aufgrund mitrotierender Kabel auftreten.

In der Fig. 17 ist der Stator 61 eines Referenzdrehtisches auf einem Sockel 305 aufgestellt, der wiederum auf einem Untergrund 304 aufgestellt ist. Der Stator 61 ist das dritte Teil im Sinne der allgemeinen Beschreibung. Auf dem Rotor 62 des Referenzdrehtisches 60 (viertes Teil im Sinne der allgemeinen Beschreibung) ist ein Autokollimator 88 positioniert. Der Messstrahl S des Autokollimators 88 ist auf einen Spiegel 5 gerichtet, der an einem Rotor 206 eines Drehtisches 201 befestigt ist. Der Rotor 206 ist das erste Teil im Sinne der allgemeinen Beschreibung. Der Stator 205 (zweites Teil im Sinne der allgemeinen Beschreibung) ist an einem Träger 302 angebracht, der mit dem Untergrund 304 verbunden ist. Die resultierende Drehposition des ersten Teils 206 und des vierten Teils 62, die in diesem Beispiel beide Rotoren sind, wird mit Hilfe des Autokollimators 88 festgestellt. Ebenso kann nach Variieren von Drehpositionen des Drehtisches 201 und des Referenzdrehtisches 60 eine Änderung der Drehstellung des Rotors 206 relativ zum Rotor 62 mit dem AKF 88 ermittelt werden, oder es kann eine unveränderte Position der Teile 62 und 206 relativ zueinander mit dem AKF 88 festgestellt werden. Auch bei dem Aufbau der Fig. 17 sind Variationen denkbar. Beispielsweise könnte das AKF 88 an dem Rotor 206 angebracht sein und der Spiegel 5 an dem Rotor 62. Auch könnte der Referenzdrehtisch 60 oben und der Drehtisch 201 unten positioniert sein, wobei der Stator 61 des Referenzdrehtisches 60 dann an dem Träger 302 befestigt wäre und der Stator 205 des Drehtisches 201 auf dem Sockel 305 bzw. dem Untergrund 304. In weiteren Varianten könnten Rotor und Stator vertauscht werden, also die Teile 62 und 206 jeweils ein Stator sein, wobei Nachteile der Kabelführung aufgrund mit rotierender Kabel auftreten.

Die Drehrichtung eines Drehtisches kann innerhalb eines Drehtisch-eigenen Koordinatensystems so definiert sein, dass bei einem hängenden Drehtisch, wie in der Fig. 16 und 17 mit dem Bezugsweichen 201 gezeigt, die positive Drehachsrichtung nach unten zeigt und bei einem stehenden Drehtisch, wie in der Fig. 16 und 17 mit dem Bezugsweichen 60 gezeigt, nach oben.

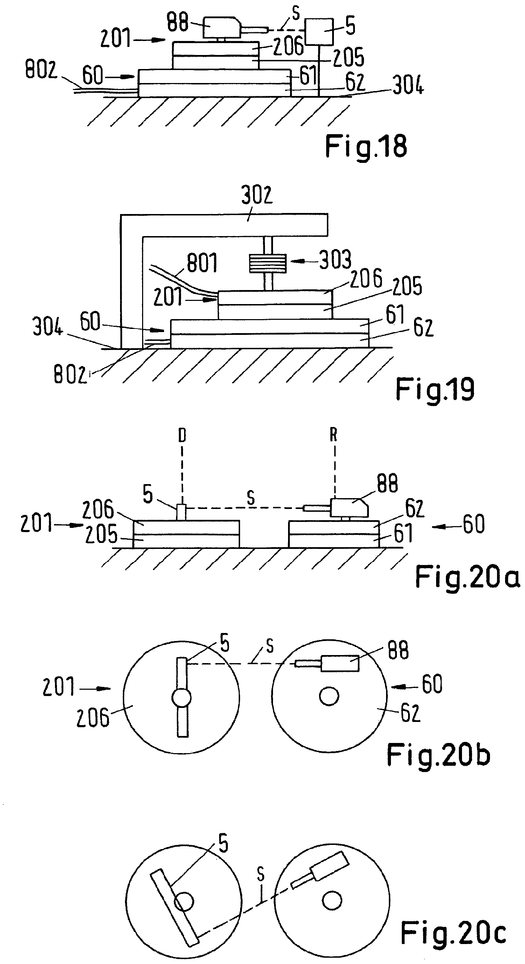

Die Fig. 18 stellt eine Variante des Aufbaus der Fig. 15 dar. In diesem Fall ist das AKF 88 auf dem Rotor 206 des Drehtisches 201 positioniert und kann somit mit dem Rotor 206 mitdrehen. Der Spiegel 5 ist ortsfest zu dem Stator 62 des Referenzdrehtisches 60 auf dem Untergrund 304 befestigt. Zum Beispiel kann der Aufbau aus Fig. 15 auf diese Art und Weise abgewandelt werden: Das AKF 88 kann an dem Teil 206 angebracht sein und der Reflektor 5 auf dem Untergrund 304.

Die Fig. 19 stellt eine Abwandlung der Anordnung aus der Fig. 16 dar. In diesem Fall ist die drehsteife Kupplung 303 zwischen dem Träger 302 und dem Stator 206 (hier erstes Teil im Sinne der allgemeinen Beschreibung) positioniert. Wie bei dem Aufbau aus der Fig. 16 ist auch bei dem Aufbau zu der Fig. 19 keine Drehpositions-Ermittlungseinrichtung, also insbesondere kein AKF 88, erforderlich.

Fig. 20 zeigt eine Ausführungsform, wo die Drehachse D einer Drehvorrichtung 201 und die Referenzdrehachse R einer Referenzdrehvorrichtung 60 nicht koaxial bzw. nicht fluchtend zueinander sind, sondern nebeneinander angeordnet sind. Ein Referenzdrehtisch 60 ist mit einem Stator 61 (drittes Teil im Sinne der allgemeinen Beschreibung) auf dem Untergrund 304 positioniert und ein Drehtisch 201 ist mit seinem Stator 205 (zweites Teil im Sinne der allgemeinen Beschreibung) auf dem Untergrund 304 positioniert. Die beiden Statoren 61 und 205 sind zueinander drehfest. Auf dem Rotor (Drehteller) des Referenzdrehtisches 60 ist ein Autokollimator 88 positioniert. Der Rotor 62 ist das vierte Teil im Sinne der allgemeinen Beschreibung. Auf dem Rotor (Drehteller) 206 des Drehtisches 201 ist ein Spiegel 5 positioniert, auf den der Messstrahl S des Autokollimators gerichtet ist. Der Rotor 206 ist das erste Teil im Sinne der allgemeinen Beschreibung.

In der Fig. 20b ist eine Draufsicht auf die Anordnung aus Fig. 20a gezeigt, wobei sich der Drehtisch 201 und der Referenzdrehtisch 60 in einer ersten Drehposition befinden. In der Fig. 20c ist ebenfalls eine Draufsicht auf die Anordnung zu sehen, wobei im Vergleich zu Fig. 20b der Referenzdrehtisch 60 und der Drehtisch 201 in eine zweite Drehposition gebracht wurden. Beide Drehteller (allg.: Rotoren) 62 und 206 wurden in dieselbe Richtung gedreht, in diesem Fall in der Draufsicht gegen den Uhrzeigersinn. In dieser Anordnung ist eine Messung über einen eingeschränkten Winkelbereich möglich, solange, bis der Messstrahl S nicht mehr auf den Spiegel 5 trifft. Mit dem Autokollimator 88 kann ein unterschiedlicher Drehwinkel des Drehtellers 206 im Vergleich zum Drehwinkel des Drehtellers 62 erfasst werden oder festgestellt werden, dass beide Teller bzw. Rotoren 62 und 206 um den gleichen Winkel verdreht wurden. Dies entspricht bei dem Verfahren zur Ermittlung eines oder mehrerer Fehler eines Drehpositionsermittlungssystems, das in der allgemeinen Beschreibung beschrieben ist, den Verfahrensvarianten d) bzw. e). In Abwandlung der Anordnung der Figur 20 können bei dem Drehtisch 201 und/oder dem Referenzdrehtisch 60 Rotor und Stator vertauscht werden, also einer oder beide der Drehteller 62 und 206 auf dem Untergrund positioniert sein.

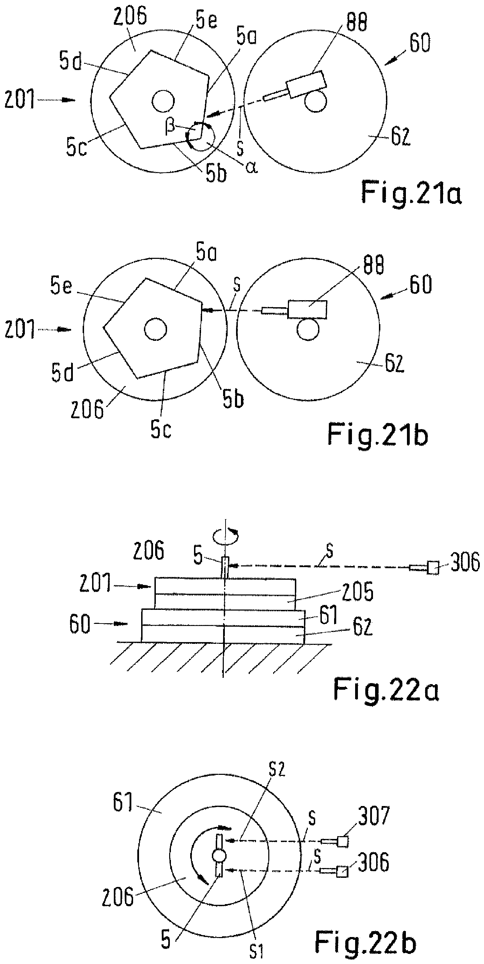

Die Fig. 21 zeigt eine Anordnung aus einem Referenzdrehtisch 60 und einem Drehtisch 201 wie in Fig. 20. In diesem Fall wird statt eines einzelnen Planspiegels 5 ein Prisma mit Pentagon-förmiger Grundfläche verwendet, dessen Seitenflächen verspiegelt sind. Es sind also insgesamt 5 Reflektoren 5a, 5b, 5c, 5d und 5e vorhanden, die aus den Seitenflächen des pentagonalen Prismas aufgebracht sind und in einen Winkel von

$$\alpha = 360° - [(N-2)/N]*180°$$

mit N = 5, also im Winkel

$$\alpha = 360° - [(5-2)/5]*180° = 360°-108° = 252°$$

zueinander stehen. Der in Fig. 21 eingezeichnete Winkel β gibt des Innenwinkel des Pentagons an, der β = [(5-2)/5]

*180° = 108° beträgt. Bei der Anordnung der Fig. 21 ist eine Drehung des Drehtellers 206 um größere Winkel möglich, verglichen mit Fig. 20. Im Prinzip können volle Umdrehungen um 360° des Drehtellers 206 erfolgen. Sobald einer der Spiegel bzw. eine der verspiegelten Seitenflächen des Prismas, beispielsweise die Spiegelfläche 5a, den Messstrahl S des Autokollimators verlässt, wird die nächste benachbarte Spiegelfläche bei einer Drehung gegen den Uhrzeigersinn die Spiegelfläche 5b in den Messstrahl S des Autokollimators gedreht und die Messung kann fortgesetzt werden, wie in Fig. 21b gezeigt.

Mit der Anordnung der Fig. 21 kann auch ein Verfahren durchgeführt werden, bei dem das Verfahren mit den Schritten a) bis d) und/oder e) nach dem allgemeinen Beschreibungsteil durchgeführt wird, wobei bei dieser Verfahrensdurchführung der Messstrahl des Autokollimators 88 auf eine der Spiegelflächen, beispielsweise 5a, gerichtet ist. Es kann das AKF auf dem Rotor 62 so versetzt werden, dass der Messstrahl in die um 180° entgegengesetzte Richtung zeigt und anschließend der Rotor 62 um 180° gedreht werden, sodass der Strahl S wieder wie vorher auf die Spiegelfläche fällt. Anschließend können die Verfahrensschritte d) und/oder e), die im allgemeinen Beschreibungsteil beschrieben sind, erneut durchgeführt werden. Dieses Verfahren kann mit einer Drehung des Drehtellers 206 und Messung an weiteren Spiegelflächen, wie oben beschrieben, kombiniert werden. Dieses Vorgehen wird als Umschlagsmessung bezeichnet, abweichend von dem sonst als Umschlagsmessung bezeichneten Vorgehen, das nur auf eine Drehung um 180° als "Umschlag" bezeichnet.

Die Fig. 22 zeigt in zwei verschiedenen Ansichten, einmal seitlich in Fig. 22a und einmal von oben in der Fig. 22b, einen Aufbau analog zu Fig. 14, wobei im Unterschied zu Fig. 14 ein Drehwinkel nicht mit einem Autokollimator 88 gemessen wird, sondern mit zwei Abstandssensoren 306 und 307, deren Messstrahlen S1 und S2 auf den Reflektor 5 gerichtet sind. Durch die Verwendung zweier nebeneinander und vorzugsweise auf gleiche Höhe und vorzugsweise in gleichem Abstand zum Reflektor 5 angeordneter Sensoren 306 und 307 können Translationsbewegungen des Reflektors 5 von Rotationsbewegungen des Reflektors 5 unterschieden werden, da bei einer Rotation des Reflektors 5 der Abstand zu einem der Sensoren verringert wird und der Abstand zu dem jeweils anderen Sensor vergrößert wird.

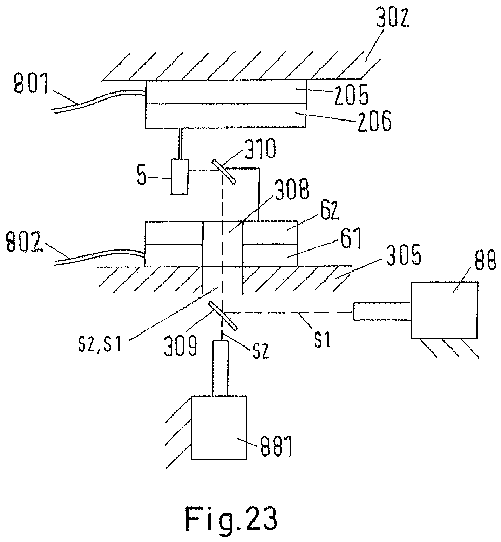

Die Fig. 23 zeigt einen Aufbau analog zu Fig. 17, wobei kein AKF 88 vorgesehen ist, das mit dem Rotor 62 mitdreht. Stattdessen ist entweder ein AKF 88 oder ein AKF 881 vorgesehen, die zwar beide eingezeichnet sind aber alternativ eingesetzt werden. Der Messstrahl S1 des AKF 88 trifft den Spiegel 309 und wird von dem Spiegel 309 durch die konzentrische Durchgangsbohrung 308 auf den Spiegel 310, und von dort auf den Spiegel 5 umgeleitet. Wenn statt des AKF 88 das AKF 881 verwendet wird, entfällt der Spiegel 309 und der Messstrahl S2 des AKF 881 fällt direkt durch die konzentrische Durchgangsbohrung 308 und wird über den Spiegel 310 auf den Spiegel 5 umgeleitet. Es wäre auch die Messung mit zwei AKF 88 und 881 denkbar, wobei der Spiegel 309 dann halbdurchlässig ausgestaltet sein müßte. Durch die Verwendung von zwei AKF 88 und 881 könnte die Messgenauigkeit erhöht werden.

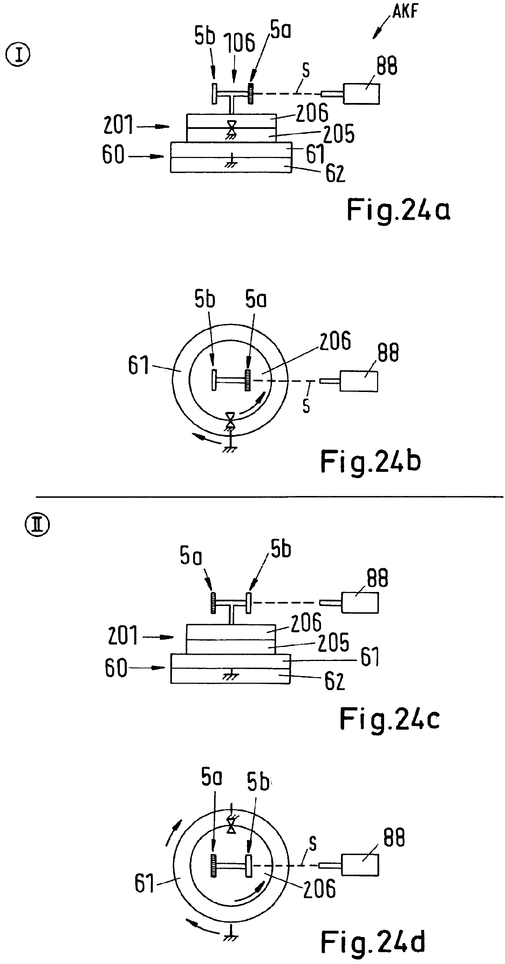

In der Fig. 24 ist das Prinzip einer Umschlagsmessung, die im allgemeinen Beschreibungsteil bereits erwähnt wurde, verdeutlicht. Um Restfehler der Art der Winkelkalibrierung zu kompensieren, kann das in der allgemeinen Beschreibung beschriebene grundlegende Verfahren zur Ermittlung des Fehlers eines Drehpositionsermittlungssystems, mit den Schritten a) bis e), unter Verwendung des hierin beschriebenen Prüfkörpers mit mehreren, bevorzugt gleichmäßig verteilten Reflektorschichten und mehrfachen Messungen in einer so genannten Umschlagsmessung angewandt werden. Ursachen für mögliche Restfehler können die Art des Aufbaus, die Anordnung der verwendeten Komponenten und/oder systematische Restfehler des Messsystems der Referenzdrehvorrichtung 60 oder weitere Fehlerursachen sein.

Eingesetzt wird in der Fig. 24 ein Aufbau analog zu Fig. 14, wobei ein Prüfkörper 106 eingesetzt wird, der zwei Reflektoren 5a und 5b als erstes und zweites Prüfelement aufweist. Die Reflektoren 5a und 5b weisen in umgekehrte Raumrichtungen, d.h. Richtungen, die um 180° zueinander stehen.

Die Umschlagsmessung kann dabei folgendermaßen ablaufen:

- In einer ersten Messung, gezeigt in Fig. 24a und Fig. 24b in zwei verschiedenen Ansichten (von der Seite und von oben) wird der Drehtisch 201 auf eine Startposition (erste Drehposition) eingestellt, beispielsweise die Referenzmarke oder Nullmarke des Drehpositionsermittlungssystems des Drehtisches 201. Die Startposition ist in Fig. 24a durch zwei keilförmige Markierungen an dem Stator 205 und dem Rotor 206 sinnbildlich dargestellt. Der Referenzdrehtisch 60 ist so positioniert, dass mit dem AKF 88 auf den Spiegel 5a gemessen werden kann, also der Messstrahl S auf den Spiegel 5a fällt und wieder zurück in das AKF fällt bzw. reflektiert wird.
- Die Drehposition des Referenztisches 60 wird ebenfalls auf eine Startposition (erste Drehposition) eingestellt, beispielsweise die Referenzmarke oder Nullmarke des Drehpositionsermittlungssystems des Referenzdrehtisches 60. Die Startposition ist in Fig. 24a durch zwei strichförmige Markierungen an dem Stator 62 und dem Rotor 61 sinnbildlich dargestellt.
- Nun erfolgt die eigentliche Messung, bei der der Rotor 206 der Drehvorrichtung 201 und der Rotor 61 der Referenzdrehvorrichtung 60 gegeneinander in verschiedene Richtungen gedreht werden, dargestellt durch Pfeile in der Fig. 24b. Mit dem AKF 88 wird der Drehpositionsfehler des Drehpositionsermittlungssystems des Drehtisches 201 ermittelt. Hierzu wird auf die Beschreibung der Schritte d) und e) des Verfahrens zur Ermittlung des Fehlers des Drehpositionsermittlungssystems verwiesen.

- Für eine zweiten Messung, gezeigt in Fig. 24c und Fig. 24d, wird bei dem Referenzdrehtisch eine modifizierte ersten Drehposition folgendermaßen hergestellt: Der Rotor 61 wird gegenüber der in der Fig. 24b gezeigten Position um 180° (360°/M mit M=2) verdreht. In dieser modifizierten ersten Drehposition kann wiederum (in der Steuerung des Drehtisches 60) eine Referenzmarke oder Nullmarke des Drehpositionsermittlungssystems des Referenzdrehtisches 60 gesetzt werden, als Startpunkt für die Messung, oder der neu eingestellte Winkel 180° des Referenzdrehtisches wird als Offset-Winkel des Referenzdrehtisches vermerkt und berücksichtigt. Von diesem Startpunkt aus kann bei einer erneuten Ermittlung des Fehlers des Drehpositionsermittlungssystems der Rotor 61 des Referenzdrehtisches 60 um eine volle Umdrehung von 360° gedreht werden, beispielsweise bei einem 180°-Offset von 180° bis 540° oder von -180° bis 180°, bei positiver Drehung des Referenzdrehtisches Dreht der Referenzdrehtisch negativ, dann findet die Drehung beispielsweise von 180° bis -180° bzw. von -180° bis -540° statt.
- Der gesamte Drehtisch 201 wurde zusammen mit dem Rotor 61 gedreht, sodass nun, in Fig. 24c/d dargestellt, der Messstrahl S des AKF 88 auf den Spiegel 5b, statt auf den Spiegel 5a fällt. Die Startposition bzw. erste Drehposition des Drehtisches 201, d.h. die Position des Rotors 206 zum Stator 205, ist unverändert, wie in Fig. 24d anhand der sinnbildlichen keilförmigen Markierungen zu sehen (die in Fig. 24c verdeckt auf der Rückseite liegen).
- Durch die modifizierte ersten Drehposition des Referenzdrehtisches 60 erhält man eine modifizierte Drehposition des ersten Teils 206 und des vierten Teils 62 relativ zueinander. In diesem Fall ist das vierte Teil relativ zu dem ersten Teil um einen Winkelbetrag von 360°/2 verdreht, im Vergleich zur ersten resultierenden Drehposition des ersten Teils 206 und des vierten Teils 62 relativ zueinander, die in Fig. 24 a/b gezeigt ist.
- Ausgehend von der in Fig. 24c/d gezeigten Drehposition kann erneut der Fehler des Drehpositionsermittlungssystems des Drehtisches 201 ermittelt werden, wobei auf die Beschreibung der Schritte d) und e) des Verfahrens zur Ermittlung des Fehlers des Drehpositionsermittlungssystems verwiesen wird.
- Die Messung mit dem Aufbau nach Fig. 24a/24b wird als "Messung 1" bezeichnet und die erneute Messung ausgehend von dem Aufbau der Fig. 24c/24d wird als "Messung 2" bezeichnet. Nach den erfolgten Messungen 1 und 2 werden die gemessenen Winkelpositionsfehler des Drehtisches 201 aus den Messungen 1 und 2 auf geeignete Art und Weise miteinander verrechnet, wobei eine Mittelwertbildung unter Berücksichtigung des Drehwinkels der Drehvorrichtung 201 bevorzugt ist. Andere Verrechnungsarten der Einzelmessungen sind denkbar.

Dieses Verfahren kann mit beliebig vielen Spiegelflächen durchgeführt werden, beispielsweise mit fünf Spiegelflächen, wie in der Fig. 21 gezeigt. Beispielsweise können N Spiegelflächen eingesetzt werden, die vorzugsweise in einem Winkel von $\alpha$ = 360°- [(N-2)/N]*180° zueinander stehen, wobei N eine ganze Zahl größer oder gleich 3 ist. Grundsätzlich gilt dabei: je höher die Anzahl der Messungen ist, desto mehr Fehleranteile können durch dieses Prinzip der Mehrfachmessung eliminiert werden. Mit zwei Messungen können Fehler aus den o.g. Ursachen eliminiert werden, die sich in der ersten Fehlerharmonischen (auch bezeichnet als Fehler erster Ordnung) bemerkbar machen würden. Mit vier Messungen werden die erste und die zweite Fehlerharmonische eliminiert, mit sechs Messungen die erste bis einschließlich die dritte Fehlerharmonische usw. Für vier Messungen kann z.B. ein Prüfkörper mit einem Prisma mit quadratischer Grundfläche (das auch als Würfel oder Quader bezeichnet werden kann) eingesetzt werden, wobei die Seitenflächen des Prismas verspiegelt sind. Für fünf Messungen kann ein Prisma mit pentagonaler Grundfläche, dessen Seitenflächen verspiegelt sind, eingesetzt werden. Für sechs Messungen kann ein Prisma mit hexagonaler Grundfläche eingesetzt werden, dessen Seitenflächen verspiegelt sind, usw.

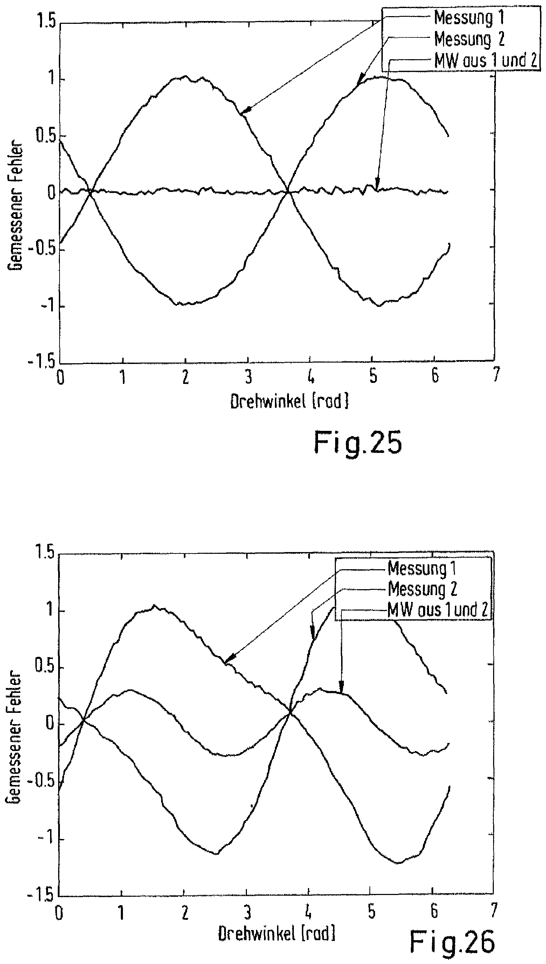

Die Ergebnisse der beispielhaften Umschlagsmessung mit den Spiegeln 5a und 5b gemäß Fig. 24 sind in den Fig. 25 und 26 dargestellt. Im gemessenen Fehlersignal in der Fig. 25 war lediglich die erste Fehlerharmonische enthalten, die bis auf ein Restrauschen eliminiert werden konnte. Das Restrauschen ist der gesuchte Positionsfehler, ohne die Restfehler des Aufbaus. In der Fig. 26 war zusätzlich noch die zweite Fehlerharmonische enthalten, die bei der Umschlagsmessung mit zwei Messungen nicht eliminiert werden konnte.

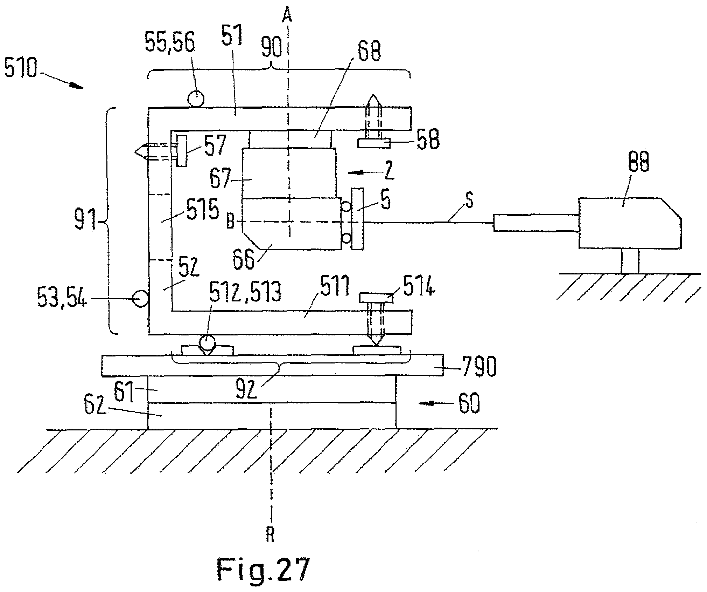

Die Fig. 27 zeigt ein Halteelement, bei dem der Träger einen dritten Schenkel 511, zusätzlich zu dem ersten Schenkel 51 und dem zweiten Schenkel 52, aufweist. Der dritte Schenkel 511 weist einen Kopplungsbereich 92 auf, bezeichnet als dritter Kopplungsbereich, über den das Halteelement 510 an die Basis 61 ankoppelbar ist. In diesem Fall ist auf den Rotor 61 des Referenzdrehtisches 60, eine Planscheibe 790 aufgebracht, auf welche das Halteelement 510 mit dem dritten Kopplungsbereich 92 aufgesetzt ist. Der dritte Kopplungsbereich 92 weist Kopplungsmittel 512, 513 und 514 auf, die analog sind zu den Kopplungsmitteln 55, 56 und 58 des ersten Kopplungsbereiches 90 und den Kopplungsmitteln 53, 54 und 57 des zweiten Kopplungsbereiches 91. Diese Kopplungsmittel wurden bereits anhand der Fig. 10 erläutert. Die Kopplungsmittel 512 und 513 sind in diesem Ausführungsbeispiel kugelförmige Elemente, wobei in der gewählten Perspektive das Element 513 von dem vorne liegenden Element 512 verdeckt ist. Die kugelförmigen Elemente 512 und 513 bilden zusammen mit einer Rändelschraube 514 eine Dreipunktlagerung. Die Kugeln 512 und 513 können zusammen mit dem Auflagepunkt in der Schraube 514 auf den Ecken eines gedachten gleichseitigen oder gleichschenkligen Dreiecks liegen, wobei dies keine zwingende Voraussetzung ist. Ebenso können die Kopplungsmittel 55, 56, 58 oder die Kopplungsmittel 53, 54, 57 auf den Ecken eines gleichseitigen oder gleichschenkligen Dreiecks liegen. Die Schenkel 51, 52 und 511 bilden zusammen einen C-förmigen Träger. Diese Ausführungsform ist besonders vorteilhaft für eine CAA-Datenaufnahme der gezeigten A-Achse eines Dreh-Schwenk-Gelenks 2 in dessen späterer Einbaulage. Die in Fig. 27 gezeigte Lage des Dreh-Schwenk-Gelenks 2 entspricht der späteren Einbaulage während des Messbetriebs, beispielsweise an einer Pinole eines Koordinatenmessgeräts. Anhand der Fig. 10 wurde ein Verfahren zur Aufnahme des Drehpositionsfehlers der Achse B beschrieben, das analog auch für die A-Achse durchgeführt werden kann. Bei diesem Verfahren dreht sich der C-förmige Träger zusammen mit dem Rotor bzw. Drehteller des Referenzdrehtisches 60 um die Drehachse R des Referenzdrehtisches 60. Das Teil 66 wird in gegenläufiger Drehrichtung um die Achse A gedreht, wenn die Drehung um R und um A aus der gleichen Blickrichtung entlang der Achsen, beispielsweise von oben, betrachtet wird. Es wird bei einer Drehung bei den Begriffen "gleichläufig" oder "gleiche Richtung" und "gegenläufig" oder "entgegengesetzte Richtung" im Allgemeinen eine gleiche Betrachtungsposition vorausgesetzt, d.h. eine gleiche Betrachtungsposition eines außen stehenden unbeweglichen Beobachters, wobei die Betrachtungsposition des außen stehenden unbeweglichen Beobachters auch als "Inertsystem" bezeichnet wird. Die Drehbewegung des Halteelements 510 führt dazu, dass der Schenkel 52 in den Messstrahl S des AKF 88 bewegt wird und bei durchgehendem Schenkel 52 den Messstrahl verdecken würde, sodass er nicht mehr auf den Spiegel 5 fällt. Für dieses Problem gibt es beispielsweise folgende Lösungen:

- Der senkrechte Schenkel 52 enthält einen Durchbruch 515, der in der Fig. 27 durch zwei waagerechte gestrichelte Linien dargestellt ist. Dadurch wird die Breite der Abschattung des Strahls S reduziert. Die abgeschotteten Bereiche könnten unberücksichtigt bleiben und in einem CAA-Korrekturfeld interpoliert werden.

- Die abgeschatteten Bereiche könnten bei großer Stützstellenweite, also bei großem Abstand zwischen den im Verfahren angefahrenen Winkelpositionen, also zwischen den Stützstellen liegen.

- Die senkrechten Streben, d.h. die Bereiche des Schenkels 52, die zwischen dem Rand der Aussparung 515 und dem seitlichen Außenrand des Schenkels 52 liegen, könnten so schmal ausgeführt sein, dass die Apertur des AKF 88 nicht komplett verdeckt wird, sodass trotzdem gemessen werden kann. Dies ist insbesondere dann vorstellbar, wenn anstelle eines C-förmigen Trägers ein Dreifuß verwendet wird, bei dem die senkrechten Stützen schmal ausfallen können.

- Nicht immer müssen beim dem Verfahren volle Drehungen des Rotors 61 durchgeführt werden, also nicht immer 360° vermessen werden. Des Weiteren kann das Dreh-Schwenk-Gelenk 2 einen nicht anfahrbaren Drehbereich um die Achse A aufweisen, in den der Schenkel 52 angeordnet sein könnte.

- Das Verfahren könnte mit zwei AKF durchgeführt werden, die das Dreh-Schwenk-Gelenk 2 aus zwei unterschiedlichen Richtungen betrachten.

- Der Strahl S könnte durch Umlenkspiegel auf den Spiegel 5 umgelenkt werden, also an dem Schenkel 52, der den geradlinigen Verlauf des Messstrahls S unterbricht, vorbeigelenkt werden.

Die oben beschriebene Problematik, eine Verdeckung des Messstrahls S, kann nicht nur bei dem C-förmigen Träger aus der Fig. 27 auftreten, sondern auch bei anderweitigen Trägern, die den Messstrahl S verdecken könnten, wenn sie entsprechend gedreht werden. Beispielsweise könnte der Schenkel 51 in der Fig. 10 bei entsprechender Rotation des Halteelements 50 um die Achse R den Messstrahl S unterbrechen, der vom AKF 88 kommend auf den Spiegel 5 fällt. Auch bei dieser Ausführungsform der Fig. 10 können eine oder mehrere der obigen Lösungen angewandt werden. Ganz allgemein und losgelöst vom speziellen Ausführungsbeispiel kann der Träger eines Halteelements eine oder mehrere Durchbrechungen für einen Messstrahl aufweisen. In einem oder mehreren der Kopplungsbereiche können jeweils eine oder mehrere Durchbrechungen vorgesehen sein. Die Geometrie und Dimensionen der Schenkel können aber stattdessen auch so gewählt werden, dass keine Strahlunterbrechung eintritt.

In einer anderen Anordnung des Halteelements 510 auf dem Rotor 61 des Referenzdrehtisches 60 kann die B-Achse nach einem analogen Verfahren vermessen werden wie die A-Achse. Das Halteelement 510 kann dazu mit dem Kopplungsbereich 91 auf die Oberfläche der Planscheibe 790 aufgesetzt werden, also in der dargestellten Perspektive um 90° gegen den Uhrzeigersinn gedreht werden. Anschließend wird der Spiegel 5 so umorientiert, dass der Messstrahl S des AKF 88 in gleicher Weise auf ihn trifft wie in der Fig. 27 gezeigt. So wie in der Fig. 27 dargestellt, könnte der Spiegel 5 durch entweder den Schenkel 51 oder den Schenkel 511, je nach Drehstellung des Halteelements 510, verdeckt werden. Um dies zu vermeiden, kann man entweder eine der oben vorgeschlagenen Lösungen anwenden, beispielsweise in dem Schenkel 51 und dem Schenkel 511 jeweils einen Durchbruch vorsehen (hier nicht dargestellt), oder man kann den Spiegel 5 so weit nach oben positionieren, zusammen mit dem AKF 88, dass er über die Schenkel 51 und 511 hinausragt. Dazu kann beispielsweise ein Prüfkörper eingesetzt werden, wie beispielsweise in der Fig. 10 unter dem Bezugszeichen 1 gezeigt, bei dem der Spiegel 5 in passender Höhe an einem Halter 3 angebracht ist.

Die Fig. 28 und 29 zeigen Elemente einer alternativen Einrichtung zur Energieversorgung der Drehvorrichtung 2. Eine Energieversorgung 69, wie in Fig. 10 und 11 gezeigt, kann durch diese Elemente 690 und 691 ersetzt werden. Das Teil 690 bzw. 690' aus der Fig. 28 ist mit dem Teil 691 bzw. 691' aus der Fig. 29 zu einer Steck- oder Rastverbindung zusammenfügbar. In einem oder mehreren der zuvor beschriebenen Kopplungsbereiche 90, 91 oder 92 (siehe Fig. 11 und Fig. 27 eines Halteelements 50 oder 510) kann beispielsweise ein Element 690 vorgesehen sein. Vorzugsweise ist in jedem der Kopplungsbereiche 90, 91 und 92 jeweils ein Element 690 vorgesehen. Beispielsweise ist ein erstes Steckelement 690 auf der Außenseite des Schenkels 51, d.h. auf der Seite des Schenkels 51, die der Basis 61 zugewandt ist, angeordnet. Damit befindet sich das Steckelement 690 im Kopplungsbereich 90. Bei Verwendung des Elements 690 in einem Kopplungsbereich 90 können die Kopplungsmittel 55, 56 und 58 entfallen, da die Kopplungsmittel 55, 56 und 58 durch die Mittel 692, 693 und 694 ersetzt werden. Das analoge Prinzip kann bei anderen Schenkeln/in anderen Kopplungsbereichen angewandt werden.

An der Basis ist in diesem Beispiel ein zweites Element 691 angeordnet, das in der Fig. 29 gezeigt ist. Beim Aufsetzen des Halteelements 50 auf die Basis 61 werden die Elemente 690 und 691 miteinander verbunden. Das Element 690 für eine Steckverbindung weist Lagermittel 692, 693, 694 (694 ist von dem mittigen erhabenen männlichen Steckerteil verdeckt) auf. Die Lagermittel sind halbkugelförmig gebildet. Die Lagermittel 692, 693, 694 können Mittel einer Dreipunktlagerung sein, die alternativ zu den zuvor beschriebenen Kopplungsmitteln 55, 56, 58 eingesetzt werden können. Des Weiteren sind Klemm/Rastmittel 695, 696 in Form von Halbkugeln für einen Bajonettverschluss vorgesehen. Ein weiteres, drittes Rastmittel ist in dieser Ansicht verdeckt. Das Steckverbindungselement 690 weist eine Vielzahl Kontakte 697 für die Übertragung von Energie und Messsystemsignalen auf. Eine Metallplatte 698 ist dafür vorgesehen, mit einem Magneten 917, der an dem anderen komplementären Steckerelement 691 vorgesehen ist, zusammenzuwirken, um eine Zugkraft auszuüben. Dadurch kann die Kontaktierung zusätzlich zu dem Bajonettverschluss sichergestellt werden. Das in Fig. 28 gezeigte Steckerelement 690 kann in analoger Weise auch an der Drehvorrichtung 2 vorgesehen sein und wird in diesem Fall zur Unterscheidung mit dem Bezugszeichen 690' bezeichnet. Wenn ein Element 690' an der Drehvorrichtung 2 vorgesehen ist, dann weist die Halterung 68 (siehe Fig. 11) für die Drehvorrichtung 2 ein Steckverbindungselement 691' auf, wie in der Fig. 29 gezeigt. Die Halterung 68 kann selbst als Steckverbindungselement 691' ausgeführt sein.

Die Fig. 29 zeigt das bereits erwähnte Steckverbindungselement 691 bzw. 691', das an der Basis 61 und/oder an dem Halteelement 50 auf der Seite eines Halters 68 vorgesehen ist. Das Steckverbindungsteil 691/691' weist Gegen-Lagermittel 910, 911, 912, ausgebildet als Halbkugelpaare, auf. Die Gegen-Lagermittel 910, 911, 912 dienen der Aufnahme der Lagermittel 692, 693 und 694 aus Fig. 28. Ferner ist ein Bajonett mit den Aussparungen 913, 914 und 915 vorhanden, worin die Elemente 695, 696 und das weitere, nicht gezeigte Element aus Fig. 28 einführbar sind. Eine Vielzahl Gegenkontakte 916 sind mit den Kontakten 697 aus Fig. 28 zur Herstellung der Kontaktierung verbindbar. In der Mitte des Steckverbindungselements 691 ist ein Magnet 917 vorgesehen, der mit der Metallplatte 698 aus Fig. 28 zusammenwirkt.

Eine Steckverbindung aus den Teilen 690 und 691 kann auch verwendet werden, um andere Komponenten, die eine Energieversorgung benötigen, in einen Messaufbau mit einzubeziehen. Beispielsweise kann ein AKF 88 über eine solche Steckverbindung an ein drehbares Teil einer Drehvorrichtung angeschlossen werden, beispielsweise wenn ein AKF mit einem Rotor 62 oder 206 verbunden werden soll, wie in den Figuren 17 und 18 dargestellt.

Fig. 31 und 32 zeigen die Verwendung eines Halteelements 520 zum Halten einer Sensoranordnung 750, die eine Mehrzahl Sensoren 73, 74, 75, 76, 77 aufweist, wobei die Sensoren ausgestaltet sind, Abweichungen bezüglich zumindest eines Bewegungs-Freiheitsgrades der Drehvorrichtung 2 zu messen. Die Drehvorrichtung ist ein Dreh-Schwenk-Gelenk 2 mit zwei Drehachsen A, B. Ein solches Dreh-Schwenk-Gelenk 2 wurde bereits in den Fig. 10-12 erläutert. In diesem Beispiel ist das Dreh-Schwenk-Gelenk 2 aber nicht an dem Halteelement 520 angebracht, wie in den Fig. 10-12, sondern an einer senkrecht stehenden Pinole 590 eines nicht weiter dargestellten Koordinatenmessgeräts. Das Dreh-Schwenk-Gelenk 2 befindet sich hier in seiner Einbaulage für zukünftige Messungen.

Die Sensoranordnung 750 in Fig. 31 und 32 wurde in ihrem Aufbau bereits in den Fig. 12 und 13 beschrieben. Die Anordnung weist einen Sensorhalter 72 und Sensoren 73, 74, 75, 76, 77 auf. Die Sensoren 73, 74, 75, 76, 77 sind an dem Sensorhalter 72, der drei senkrecht zueinander stehenden Wänden aufweist, angebracht. Die Sensoren 73, 74 weisen in einer ersten Raumrichtung auf die Kugeln 8 bzw. 9 eines (nicht erfindungsgemäßen) Prüfkörpers 107, die Sensoren 75, 76 weisen in einer zweiten Raumrichtung auf die Kugeln 8 bzw. 9 des Prüfkörpers 107. In der gewählten Perspektive der Fig. 30 und 31 liegen die Sensoren 75, 76 hinter den Kugeln 8, 9 und sind deshalb gestrichelt gezeichnet. Der Sensor 77 weist in einer dritten Raumrichtung auf die Kugel 9. Die Raumrichtungen können die Achsen eines kartesischen Koordinatensystems sein, wobei die Zuordnung zu einer der Achsen X, Y und Z von der Lage des Koordinatensystems und der momentanen Orientierung des Halteelements 520 und der damit verbundenen Sensoranordnung 750 abhängt.

Die Sensoranordnung 750 ist in Fig. 30 und 31, im Gegensatz zu Fig. 12, an dem Halteelement 520 angebracht, indem der Sensorhalter 72 mit der Halterung 68 verbunden ist. Einrichtungen zur Energie- oder Datenübertragung von oder zu den Sensoren 73, 74, 75, 76, 77 und eine Auswertungseinheit sind in den Fig. 30 und 31 nicht dargestellt.

Das Halteelement 520 weist zwei Schenkel 51 und 52 auf, wie auch das Halteelement 50 in den Fig. 10-12. Kopplungsbereiche 901 und 902 sind etwas anders ausgestaltet als die Kopplungsbereiche 90 und 91 in den Fig. 10-12. In den Fig. 10-12 weisen die Lagerelemente 53, 54, 55, 56 eine Halbkugelform auf, wobei es sich jeweils um eine Halbkugel handeln kann oder auch um eine Ganzkugel, die teilweise im Schenkel versenkt ist. Die Lagerelemente 530, 540, 570, 550, 560, 580 sind in den Fig. 30 und 31 ganzkugelförmig, was für die Funktion aber keinen Unterschied ausmacht. Befestigungsmittel zur Befestigung der Lagerelemente 530, 540, und 550, 560, 580 an den Schenkeln sind nicht gezeigt.

Am Schenkel 52 sind die Lagerelemente 530, 540 und 570 angebracht und bilden eine Dreipunktlagerung, wobei in der gewählten Perspektive von den Lagerelementen 530, 540 nur das vordere Element 530 sichtbar ist. Das kugelförmige Lagerelement 570 ist am Ende einer Stellschraube 585 angebracht. Auch eines oder beide der Lagerelemente 530 und 540 kann am Ende einer Stellschraube angebracht sein. Auch andere Verstellmöglichkeiten sind möglich. In analoger Weise wie bei dem Schenkel 52 sind Am Schenkel 52 sind die Lagerelemente 550, 560 und 580 angebracht und bilden eine Dreipunktlagerung, wobei in der gewählten Perspektive von den Lagerelementen 550, 560 nur das vordere Element 550 sichtbar ist. Das kugelförmige Lagerelement 580 ist am Ende einer Stellschraube 586 angebracht. Auch eines oder beide der Lagerelemente 550 und 560 kann am Ende einer Stellschraube angebracht sein.

Das Halteelement 520 ist in Fig. 30 über den Kopplungsbereich 901 an die Basis 611 angekoppelt. Die Ankopplung erfolgt über Gegenkopplungsmittel 612, 613 (in dieser Darstellung von 612 verdeckt) und 614, die an der Basis angebracht sind und mit den kugelförmigen Lagerelementen 530, 540 und 570 zusammen wirken. Es können an der Basis weitere Gegenkopplungsmittel vorhanden sein, um eine andere Position des Haltelements 520 herzustellen. Die Basis 611 ist in diesem Beispiel kein Referenzdrehtisch 60 wie in Fig. 12 sondern eine Basis, insbesondere ein Messtisch eines KMG. In analoger Weise wie in Fig. 30 ist in Fig. 31 das gleiche Halteelement 520 über den Kopplungsbereich 902 an die Basis 611 angekoppelt, statt über 901 wie in Fig. 30. Die Ankopplung erfolgt in Fig. 31 ebenfalls über die Gegenkopplungsmittel 612, 613 und 614. In der Fig. 30 und 31 weichen in der zeichnerischen Darstellung Dimensionen von Teilen mitunter voneinander ab, ohne dass dies in der Realität der Fall ist. Beispielsweise ist in Fig. 31 der Halter 3 kürzer gezeichnet als in Fig. 30, was durch Unterbrechungen in Form von Doppelstrichen angedeutet ist.

Wie in den Fig. 30 und 31 gezeigt, kann die Sensoranordnung 750 so orientiert werden, dass das Dreh-Schwenk-Gelenk 2, an dem der Prüfkörper 107 mit der Doppelkugel 8, 9 angebracht ist in seiner Einbaulage qualifiziert werden kann. Die Lage des Dreh-Schwenk-Gelenks 2 bleibt in den Figuren 30 und 31 unverändert und entspricht der Einbaulage für Messungen. Lediglich die Anordnung des Prüfkörpers an dem Dreh-Schwenk-Gelenk 2 wird verändert und entweder koaxial zur A-Achse (Fig. 31) oder zur B-Achse (Fig. 30) ausgerichtet. Die alternativen Befestigungen eines Prüfkörpers an einem Dreh-Schwenk-Gelenk sind in analoger Weise bereits in den Fig. 10 und 11 gezeigt. In der Fig. 31 erfolgt die Befestigung mit Hilfe eines Adapters 65, der magnetisch an dem Dreh-Schwenk-Gelenk 2 befestigt ist. Nach Umorientierung des Prüfkörpers 107 wird auch die Sensoranordnung 750 mit dem Halteelement 520 passend zum Prüfkörper 107 hin orientiert, sodass die Sensoren 73, 74, 75, 76, 77 auf die Kugeln 8 und 9 hin passend ausgerichtet sind. Die Aufnahme von Bewegungsfehlern kann erfolgen, wenn der Prüfkörper um die A- oder die B-Achse rotiert wird.

## Patentansprüche

1. Anordnung zur Ermittlung eines oder mehrerer Drehfehler einer Drehvorrichtung (2; 201), insbesondere einer Drehvorrichtung für ein Koordinatenmessgerät, bezüglich eines oder mehrerer Bewegungs-Freiheitsgrade, in dem/denen sich eine reale Drehbewegung der Drehvorrichtung (2; 201) von einer idealen Drehbewegung unterscheidet, mit einem Prüfkörper (1; 100; 101; 102), wobei der Prüfkörper aufweist:

   - einen Halter (3, 300), der zusammen mit einem Teil der Drehvorrichtung (2, 201) um eine Drehachse (D; A; B) drehbar ist und der ausgestaltet ist, den Prüfkörper bezüglich der Drehachse anzuordnen oder zu befestigen, um die der Prüfkörper zur Ermittlung des Drehfehlers oder der Drehfehler zu drehen ist,
   - eine Mehrzahl von starr mit dem Halter verbundenen oder an dem Halter ausgeformten Prüfelementen (5, 8, 9; 5, 10; 500, 800), wobei jedes der Prüfelemente der Ermittlung des Drehfehlers bezüglich eines oder mehrerer der Bewegungs-Freiheitsgrade dient,

   wobei ein erstes der Prüfelemente ein quer zu der Drehachse ausgerichteter Reflektor (5; 500) ist, der auf ihn auftreffende Strahlung in einer vom Drehwinkel des Prüfkörpers abhängigen Richtung reflektiert,
   wobei ein zweites der Prüfelemente ein rotationssymmetrischer Messkörper (8, 9; 10; 800) ist, dessen Symmetrieachse koaxial zu der Drehachse anordenbar ist,
   **dadurch gekennzeichnet, dass**
   die Anordnung eine Mehrzahl von Sensoren (73, 74, 75, 76, 77, 88; 81, 88, 741, 761; 79) aufweist, die jeweils einem oder mehreren der Prüfelemente des Prüfkörpers (5, 8, 9; 500, 501; 503) zugeordnet sind und ausgestaltet sind, Abweichungen bezüglich zumindest eines der Bewegungs-Freiheitsgrade zu messen,
   wobei dem Reflektor ein Winkelsensor (81, 82, 88) und/oder ein Abstandssensor (741, 761) zugeordnet ist, wobei mit dem Winkelsensor eine Drehung des Prüfkörpers (1) um eine Drehachse (D; B) der Drehvorrichtung (2; 201) und/oder eine Drehung des Prüfkörpers (1) um eine oder mehrere quer zur Drehachse (D, A, B) stehende Achsen und/oder eine gleichbleibende Position des Prüfkörpers (1) erfassbar sind, und mit dem Abstandssensor ein Translationsfehler durch Messung des Abstands zwischen dem Reflektor (500, 501) und dem Abstandssensor (741, 761) ermittelbar ist,
wobei dem rotationssymmetrischen Messkörper (8, 9; 10; 800) Abstandssensoren (73, 74, 75, 76, 77) zugeordnet sind,
mit denen (73, 74, 75, 76, 77) translatorische Abweichungen in Richtungen quer zur Drehachse (D; A; B) bestimmbar sind.

**2.** Anordnung nach Anspruch 1, wobei der Prüfkörper einen mit dem Halter (3; 300) verbundenen oder an den Halter (3; 300) angeformten Sockel (4; 400) aufweist, wobei der Sockel ausgestaltet ist, den Prüfkörper an einer Drehvorrichtung anzubringen.

**3.** Anordnung nach einem der vorangehenden Ansprüche, wobei der Prüfkörper Mittel zur Befestigung oder Lagerung in oder an einem Koordinatenmessgerät oder zur Befestigung oder Lagerung an einer Drehvorrichtung für ein Koordinatenmessgerät aufweist.

**4.** Anordnung (100) nach einem der vorangehenden Ansprüche, wobei der Prüfkörper, als ein weiteres Prüfelement einen quer zu der Drehachse (D; A; B) ausgerichteter Reflektor (501) aufweist, der auf ihn auftreffende Strahlung in einer vom Drehwinkel des Prüfkörpers abhängigen Richtung reflektiert.

**5.** Anordnung nach einem der vorangehenden Ansprüche, wobei der Prüfkörper als ein weiteres Prüfelement einen Reflektor (502) aufweist, der in Richtung der Drehachse (D; A; B) ausgerichtet ist.

**6.** Anordnung nach einem der Ansprüche 4 oder 5, wobei die Reflektoren (500, 501, 502), auf mehrere Außenflächen eines Trägerkörpers aufgebracht sind.

**7.** Anordnung nach einem der vorangehenden Ansprüche, wobei der rotationssymmetrische Prüfkörper ein Zylinder (10) oder ein Prüfkörper mit mehreren Kugeln (8, 9) ist,
wobei mit den Abstandssensoren (73, 74, 75, 76, 77) rotatorische Abweichungen um Achsen bestimmbar sind, die orthogonal zur Drehachse (D; A; B) sind.

**8.** Anordnung nach einem der vorangehenden Ansprüche, wobei der Winkelsensor (81, 82, 88) ein Autokollimator, ein Laserinterferometer oder ein magnetoresistiver Winkelsensor ist.

**9.** Verfahren zur Ermittlung von Drehfehlern einer Drehvorrichtung (2; 201) für ein Koordinatenmessgerät bezüglich einer Mehrzahl von Bewegungs-Freiheitsgraden, in denen sich eine reale Drehbewegung der Drehvorrichtung (2; 201) von einer idealen Drehbewegung unterscheidet, aufweisend die folgenden Schritte:

- Drehen eines Prüfkörpers (100; 102) aus einer Anordnung nach einem der Ansprüche 1-8, der einen oder mehrere Reflektoren (500, 501, 502) aufweist und der an der Drehvorrichtung (2; 201) angeordnet oder befestigt ist, um eine Drehachse (D; A; B),
- Ermitteln von Drehfehlern mit einer Mehrzahl von Sensoren (73, 74, 75, 76, 77, 88; 81, 88, 741, 761; 79), die jeweils einem der Prüfelemente (5, 8, 9; 500, 501, 503) des Prüfkörpers zugeordnet sind und ausgestaltet sind, Abweichungen bezüglich zumindest eines der Bewegungs-Freiheitsgrade zu messen,

wobei dem oder den Reflektoren (500, 501, 502) des Prüfkörpers (100; 102) ein oder mehrere Winkelsensoren (81, 82, 88) und/oder
ein oder mehrere Abstandssensoren (741, 761) zugeordnet sind,
und das Verfahren einen oder mehreren der Schritte aufweist:

- Erfassen einer Drehung des Prüfkörpers (100; 102) um eine Drehachse (D; B) der Drehvorrichtung (2; 201) mit dem/den Winkelsensoren (81, 82, 88)
- Erfassen einer Drehung des Prüfkörpers (100; 102) um eine oder mehrere quer zur Drehachse (D, B) stehende Achsen mit dem/den Winkelsensoren (81, 82, 88),
- Ermitteln eines oder mehrerer Translationsfehler durch Messung des Abstands zwischen dem Reflektor/ den Reflektoren (500, 501) und dem/den zugeordneten Abstandssensor/sensoren (741, 761),

wobei dem rotationssymmetrischen Messkörper (8, 9; 10) des Prüfkörpers Abstandssensoren (73, 74, 75, 76) zugeordnet sind, und das Verfahren einen oder mehrere der Schritte aufweist:

**EP 2 943 743 B1**

- Bestimmen translatorischer Abweichungen in Richtungen quer zur Drehachse (D; A; B),
- Bestimmen rotatorischer Abweichungen um Achsen, die orthogonal zur Drehachse (D; A; B) sind.

10. Verfahren nach Anspruch 9, wobei unter Verwendung der ermittelten Drehfehler ein Winkelmesssystem der Drehvorrichtung kalibriert wird.

11. Verfahren nach einem der Ansprüche 9 oder 10, wobei der rotationssymmetrische Messkörper ein Zylinder (10) oder ein Prüfkörper mit mehreren Kugeln (8, 9) ist.

**Claims**

1. Arrangement for determining one or more rotation errors of a rotating apparatus (2; 201), in particular a rotating apparatus for a coordinate measuring machine, with respect to one or more degrees of freedom of movement, in which a real rotating movement of the rotating apparatus (2; 201) differs from an ideal rotating movement, with a test body (1; 100; 101; 102), wherein the test body comprises:

   - a holder (3, 300) which, together with a part of the rotating apparatus (2, 201), can be rotated about an axis of rotation (D; A; B) and which is configured to arrange or fasten the test body with respect to the axis of rotation about which the test body can be rotated for the purpose of determining the rotation error or the rotation errors,
   - a plurality of test elements (5, 8, 9; 5, 10; 500, 800), which are rigidly connected to the holder or are formed on the holder, wherein each of the test elements serves for determining the rotation error with respect to one or more of the degrees of freedom of movement,

   wherein a first of the test elements is a reflector (5; 500), which is aligned transversely to the axis of rotation and reflects radiation incident on it in a direction dependent on the rotational angle of the test body,
   wherein a second of the test elements is a rotationally symmetrical measurement body (8, 9; 10; 800), the axis of symmetry of which can be arranged coaxially in relation to the axis of rotation,
   **characterized in that**
   the arrangement comprises a plurality of sensors (73, 74, 75, 76, 77, 88; 81, 88, 741, 761; 79), which are respectively assigned to one or more of the test elements of the test body (5, 8, 9; 500, 501; 503) and are configured to measure deviations with respect to at least one of the degrees of freedom of movement,
   wherein the reflector is assigned an angle sensor (81, 82, 88) and/or a distance sensor (741, 761), wherein a rotation of the test body (1) about an axis of rotation (D; B) of the rotating apparatus (2; 201) and/or a rotation of the test body (1) about one or more axes that are transverse to the axis of rotation (D, A, B) and/or an unchanging position of the test body (1) can be sensed by the angle sensor, and a translational error can be determined by the distance sensor by measuring the distance between the reflector (500, 501) and the distance sensor (741, 761),
   wherein the rotationally symmetrical measurement body (8, 9; 10; 800) is assigned distance sensors (73, 74, 75, 76, 77),
   with which (73, 74, 75, 76, 77) translational deviations in directions transverse to the axis of rotation (D; A; B) can be determined.

2. Arrangement according to Claim 1, wherein the test body comprises a pedestal (4; 400) connected to the holder (3; 300) or formed on the holder (3; 300), wherein the pedestal is configured to attach the test body to a rotational device.

3. Arrangement according to one of the preceding claims, wherein the test body comprises means for fastening or mounting in or on a coordinate measuring machine or for fastening or mounting on a rotational device for a coordinate measuring machine.

4. Arrangement (100) according to one of the preceding claims, wherein the test body comprises as a further test element a reflector (501), which is aligned transversely to the axis of rotation (D; A; B) and reflects radiation incident on it in a direction dependent on the rotational angle of the test body.

5. Arrangement according to one of the preceding claims, wherein the test body comprises as a further test element a reflector (502), which is aligned in the direction of the axis of rotation (D; A; B).

6. Arrangement according to either of Claims 4 and 5, wherein the reflectors (500, 501, 502) are provided on a number of outer surfaces of a support body.

**EP 2 943 743 B1**

7. Arrangement according to one of the preceding claims, wherein the rotationally symmetrical test body is a cylinder (10) or a test body with multiple spheres (8, 9), wherein rotational deviations about axes that are orthogonal to the axis of rotation (D; A; B) can be determined by the distance sensors (73, 74, 75, 76, 77) .

8. Arrangement according to one of the preceding claims, wherein the angle sensor (81, 82, 88) is an autocollimator, a laser interferometer or a magnetoresistive angle sensor.

9. Method for determining rotation errors of a rotating apparatus (2; 201) for a coordinate measuring machine, with respect to a plurality of degrees of freedom of movement, in which a real rotating movement of the rotating apparatus (2; 201) differs from an ideal rotating movement, comprising the following steps:

- rotating a test body (100; 102) from an arrangement according to one of Claims 1-8, which comprises one or more reflectors (500, 501, 502) and is arranged or fastened on the rotating apparatus (2; 201), about an axis of rotation (D; A; B),
- determining rotation errors with a plurality of sensors (73, 74, 75, 76, 77, 88; 81, 88, 741, 761; 79), which are respectively assigned to one of the test elements (5, 8, 9; 500, 501; 503) of the test body and are configured to measure deviations with respect to at least one of the degrees of freedom of movement,

wherein the reflector or reflectors (500, 501, 502) of the test body (100; 102) is or are assigned one or more angle sensors (81, 82, 88) and/or one or more distance sensors (741, 761), and the method comprises one or more of the steps:

- sensing a rotation of the test body (100; 102) about an axis of rotation (D; B) of the rotating apparatus (2; 201) with the sensor(s) (81, 82, 88),
- sensing a rotation of the test body (100; 102) about one or more axes transverse to the axis of rotation (D, B) with the angle sensor(s) (81, 82, 88),
- determining one or more translational errors by measuring the distance between the reflector/reflectors (500, 501) and the assigned distance sensor/sensors (741, 761),

wherein the rotationally symmetrical measurement body (8, 9; 10) of the test body is assigned distance sensors (73, 74, 75, 76), and the method comprises one or more of the steps:

- determining translational deviations in directions transverse to the axis of rotation (D; A; B),
- determining rotational deviations about axes that are orthogonal to the axis of rotation (D; A; B).

10. Method according to Claim 9, wherein an angle measuring system of the rotating apparatus is calibrated by using the rotation errors determined.

11. Method according to either of Claims 9 and 10, wherein the rotationally symmetrical measurement body is a cylinder (10) or a test body with multiple spheres (8, 9).

**Revendications**

1. Ensemble destiné à déterminer au moins une erreur de rotation d'un dispositif rotatif (2 ; 201), en particulier d'un dispositif rotatif destiné à un appareil de mesure de coordonnées, relative à au moins un degré de liberté dans lequel un mouvement de rotation réel du dispositif rotatif (2, 201) diffère d'un mouvement de rotation idéal, l'ensemble comprenant un corps de test (1 ; 100 ; 101 ; 102), le corps de test comprenant :

- un support (3, 300) qui peut tourner conjointement avec une partie du dispositif rotatif (2, 201) sur un axe de rotation (D ; A ; B) et qui est conçu pour disposer ou fixer l'objet de test par rapport à l'axe de rotation de manière à faire tourner l'objet de test pour déterminer l'au moins une erreur de rotation,
- une pluralité d'éléments de test (5, 8, 9 ; 5, 10 ; 500, 800) reliés rigidement au support ou formés sur le support, chacun des éléments de test servant à déterminer l'erreur de rotation relative à au moins un degré de liberté de mouvement,

un premier des éléments de test étant un réflecteur (5 ; 500) qui est orienté transversalement à l'axe de rotation et qui réfléchit le rayonnement incident à celui-ci dans une direction dépendant de l'angle de rotation de l'objet de test, un deuxième des éléments de test étant un corps de mesure (8, 9 ; 10 ; 800) à symétrie de révolution dont l'axe de symétrie peut être disposé coaxialement à l'axe de rotation,

**caractérisé en ce que**

l'ensemble comprend une pluralité de capteurs (73, 74, 75, 76, 77, 88 ; 81, 88, 741, 761 ; 79) qui sont associés chacun à au moins un des éléments de test du corps de test (5, 8, 9 ; 500, 501 ; 503) et qui sont conçus pour mesurer des écarts par rapport à au moins un des degrés de liberté de mouvement,

le réflecteur étant associé à un capteur d'angle (81, 82, 88) et/ou à un capteur de distance (741, 761), le capteur d'angle permettant de détecter la rotation du corps de test (1) sur un axe de rotation (D ; B) du dispositif rotatif (2 ; 201) et/ou la rotation du corps de test (1) sur au moins un axe placé transversalement à l'axe de rotation (D, A, B) et/ou une position constante du corps de test (1) et, le capteur de distance permettant de déterminer une erreur de translation par mesure de la distance entre le réflecteur (500, 501) et le capteur de distance (741, 761) peuvent être déterminés,

le corps de mesure (8, 9 ; 10 ; 800) à symétrie de révolution étant associé à des capteurs de distance (73, 74, 75, 76, 77),

lesquels (73, 74, 75, 76, 77) permettent de déterminer des écarts de translation dans des directions transversales à l'axe de rotation (D ; A ; B).

2. Ensemble selon la revendication 1, le corps de test comprenant une embase (4 ; 400) reliée au support (3 ; 300) ou conformée sur le support (3 ; 300), l'embase étant conçue pour monter le corps de test sur un dispositif rotatif.

3. Ensemble selon l'une des revendications précédentes, le corps de test comportant des moyens de fixation ou de montage sur palier dans ou sur un appareil de mesure de coordonnées, ou de fixation ou de montage sur palier sur un dispositif rotatif destiné à un appareil de mesure de coordonnées.

4. Ensemble (100) selon l'une des revendications précédentes, le corps de test comportant, en tant qu'élément de test supplémentaire, un réflecteur (501) orienté transversalement à l'axe de rotation (D ; A ; B) et réfléchissant le rayonnement, incident à celui-ci, dans une direction dépendant de l'angle de rotation du corps de test.

5. Ensemble selon l'une des revendications précédentes, le corps de test comportant, en tant qu'élément de test supplémentaire, un réflecteur (502) orienté dans la direction de l'axe de rotation (D ; A ; B) .

6. Ensemble selon l'une des revendications 4 ou 5, les réflecteurs (500, 501, 502) étant montés sur une pluralité de surfaces extérieures d'un corps porteur.

7. Ensemble selon l'une des revendications précédentes, le corps de test à symétrie de révolution étant un cylindre (10) ou un corps de test pourvu d'une pluralité de billes (8, 9),
les capteurs de distance (73, 74, 75, 76, 77) permettant de déterminer les écarts de rotation sur des axes orthogonaux à l'axe de rotation (D ; A ; B).

8. Ensemble selon l'une des revendications précédentes, le capteur d'angle (81, 82, 88) étant un auto-collimateur, un interféromètre à laser ou un capteur d'angle magnéto-résistif.

9. Procédé de détermination d'erreurs de rotation d'un dispositif rotatif, destiné à un appareil de mesure de coordonnées (2 ; 201), relatives à une pluralité de degrés de liberté de mouvement dans lesquels un mouvement de rotation réel du dispositif rotatif (2 ; 201) diffère d'un mouvement de rotation idéal, le procédé comprenant les étapes suivantes :

   - faire tourner sur un axe de rotation (D ; A ; B) un corps de test (100 ; 102) d'un ensemble selon l'une quelconque des revendications 1 à 8, comportant au moins un réflecteur (500, 501, 502) et disposé ou fixé au dispositif rotatif (2 ; 201),
   - détecter des erreurs de rotation à l'aide d'une pluralité de capteurs (73, 74, 75, 76, 77, 88 ; 81, 88, 741, 761, 79) qui sont associés chacun à l'un des éléments de test (5, 8, 9 ; 500, 501 ; 503) du corps de test et qui sont conçus pour mesurer des écarts par rapport à l'un au moins des degrés de liberté de mouvement,

l'au moins un réflecteur (500, 501, 502) du corps de test (100 ; 102) étant associé à au moins un capteur d'angle (81, 82, 88) et/ou au moins un capteur de distance (741, 761),
et le procédé comprenant au moins une des étapes suivantes :

- détecter la rotation du corps de test (100 ; 102) sur un axe de rotation (D ; B) du dispositif rotatif (2 ; 201) à l'aide de l'au moins un capteur d'angle (81, 82, 88)
- détecter la rotation du corps de test (100 ; 102) sur au moins un axe placé transversalement à l'axe de rotation (D, B) à l'aide de l'au moins un capteur d'angle (81, 82, 88),
- déterminer au moins une erreur de translation par mesure de la distance entre l'au moins réflecteur (500, 501) et l'au moins un capteur de distance (741, 761) associé,

des capteurs de distance (73, 74, 75, 76) étant associés au corps de mesure (8, 9 ; 10) à symétrie de révolution du corps de test, et le procédé comportant au moins une des étapes suivantes :

- déterminer des écarts de translation dans des directions transversales à l'axe de rotation (D ; A ; B),
- déterminer des écarts de rotation autour d'axes orthogonaux à l'axe de rotation (D ; A ; B).

10. Procédé selon la revendication 9, un système de mesure d'angle du dispositif rotatif étant étalonné à l'aide de l'erreur de rotation déterminée.

11. Procédé selon l'une des revendications 9 ou 10, le corps de mesure à symétrie de révolution étant un cylindre (10) ou un corps de test pourvu d'une pluralité de billes (8, 9).

EP 2 943 743 B1

Fig.1

54

Fig.2

Fig.3

Fig.4

Fig.5

Fig.6

Fig.7

105

400

603    503

300    r

703

704

79

Fig.8

y

z    x

Fig.9

Fig.10

Fig.11

Fig.12

EP 2 943 743 B1

Fig.13

66

Fig.14

Fig.15

Fig.16

Fig.17

**Fig.18**

**Fig.19**

**Fig.20a**

**Fig.20b**

**Fig.20c**

Fig.21a

Fig.21b

Fig.22a

Fig.22b

Fig.23

Ⓘ

5b 106 5a

AKF

S

88

201 → 206
205

60 → 61
62

**Fig.24a**

5b 5a

206

61 88

S

**Fig.24b**

Ⅱ

5a 5b

88

201 → 206
205

60 → 61
62

**Fig.24c**

5a 5b

S

88

61 206

**Fig.24d**

71

Fig.25

Fig.26

Fig.27

EP 2 943 743 B1

Fig.28

Fig.29

Fig.30

EP 2 943 743 B1

Fig.31

EP 2 943 743 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4424871 A1
- WO 0225220 A1
- US 7277811 B1
- DE 102011012611 A1
- EP 0684447 B1
- DE 19518268 A1
- EP 2011061681 W

**In der Beschreibung aufgeführte Nicht-Patentliteratur**

- **R. PROBST et al.** Measurement Science and Technology. IOP, 1998, vol. 9, 1059-1066
- **A. W. KAHN et al.** The international Journal of advanced manufacturing technology. Springer, 02. Mai 2010, vol. 51, 1009-1022
- **GECKELER, R. ; FRICKE, A. ; ELSTER, C.** Calibrationof angle encodersusingtransferfunctions. *Measurement Science and Technology,* 2006, vol. 17
- **BUSCH, K. ; FRANKE, M. ; SCHWENKE, H. ; WIEGAND, U.** Rückführung von Koordinatenmessgeräten durch Abschätzung der zu erwartenden Messabweichungen durch Simulation. *Physikalisch-Technische Bundesanstalt,* 1996